# EUROPEAN PATENT SPECIFICATION

(11) **EP 4 008 620 B1**
(45) Date of publication and mention of the grant of the patent: **24.07.2024**
(21) Application number: 21207670.7
(22) Date of filing: 11.11.2021
(51) Int. Cl.: B62J 25/06, F01L 1/02, F01L 1/053, F01L 1/34, F01L 13/00, F02B 61/02, B62J 17/02, F01L 1/18, F02D 41/00

(54) **STRADDLED TYPE VEHICLE ENGINE ARRANGEMENT**
GRÄTSCHSITZFAHRZEUGS MOTORANORDNUNG
DISPOSITION DU MOTEUR D'UN VÉHICULE DE TYPE À SELLE

(30) Priority: 07.12.2020 JP 2020202644
(43) Date of publication of application: 08.06.2022
(73) Proprietor: Yamaha Hatsudoki Kabushiki Kaisha, Iwata-shi, Shizuoka 438-8501 (JP)
(72) Inventor: Yagi, Kyohei, Iwata-shi, Shizuoka (JP)
(74) Representative: Grünecker Patent- und Rechtsanwälte PartG mbB

(56) References cited:
- EP-A1- 1 557 551
- EP-A1- 3 524 459
- DE-A1- 102016 207 503
- DE-A1- 102016 215 676
- JP-A- 2008 274 855
- JP-A- 2015 068 318
- US-A1- 2006 048 991

## Description

The present invention relates to a straddled type vehicle according to the preamble of independent claim 1. Such a straddled type vehicle can be taken from the prior art document JP 2015 068318 A. Said document discloses a scooter-type vehicle having the engine arranged under the seat and swingably supported by the frame so that the cylinder axis moves in up-down direction of the vehicle and can overlap the front wheel in side view of the vehicle. Moreover, the prior art document US 2006/048991 A1 discloses a straddled type vehicle, especially a moped type vehicle having a head tube with a central axis that is positioned on a vehicle center plane perpendicular with respect to a transverse direction of the straddled type vehicle. A main frame is connected to the head tube and extends rearward in longitudinal direction of the straddled type vehicle from the head tube on the vehicle center plane in plan view of the straddled type vehicle. A steering device is supported by the head tube. A front wheel is supported by the steering device. An engine is supported by the main frame. A seat is located more rearward in longitudinal direction of the straddled type vehicle the main frame. A center cover is located above the main frame in up-down direction of the straddled type vehicle and extends to the seat. A foot bar is located lower than the seat and extends to a position more rightward than the seat and to a position more leftward than the seat. A right cover is located rightward of the main frame. A left cover is located leftward of the main frame. The seat and the center cover are forming a recessed space in front of the seat in longitudinal direction of the straddled type vehicle and above the center cover in up-down direction of the straddled type vehicle. The engine includes a cylinder unit that is located below the main frame in up-down direction of the straddled type vehicle. The cylinder unit forms a cylinder bore and a first passage inside the cylinder unit. The cylinder bore is centering on a cylinder axis. The first passage is in communication with the cylinder bore. The cylinder axis passes a position above the front wheel in up-down direction of the straddled type vehicle without overlapping the front wheel in side view of the straddled type vehicle.

JP 2008-45434 A discloses a motorcycle. Hereinunder, numerals in JP 2008-45434 A are expressed in parentheses. The motorcycle (1) is a moped type vehicle. The motorcycle (1) includes a vehicle body frame (2). The vehicle body frame (2) is classified as a backbone type. Specifically, the vehicle body frame (2) includes a head tube (3) and a main frame (8). The main frame (8) extends rearward from the head tube (3).

The motorcycle (1) includes a front suspension (5) and a front wheel (4). The front suspension (5) is supported by the head tube (3). The front wheel (4) is supported by the front suspension (5).

The motorcycle (1) includes an engine (20). The engine (20) is supported by the main frame (8). The engine (20) is classified as an air-cooled engine.

The engine (20) includes a cylinder unit (22). The cylinder unit (22) is located below the main frame (8). The cylinder unit (22) has a cylinder axis (C1). The cylinder axis (C1) extends substantially horizontally. The cylinder axis (C1) overlaps the front wheel (4) in a side view of the vehicle.

The cylinder unit (22) forms a combustion chamber (31) and a port (33) inside thereof. The port (33) is in communication with the combustion chamber (31).

The engine (20) includes a valve (34) and a variable valve operating mechanism (61). The valve (34) opens and closes the port (33). The variable valve operating mechanism (61) includes an actuator (62). The actuator (62) changes opening and closing conditions of the valve (34). The actuator (62) is attached to the cylinder unit (22). The actuator (62) extends upward from the cylinder unit (22).

The motorcycle (1) includes an air cleaner (29). The air cleaner (29) is located below the main frame (8). The air cleaner (29) is located in front of the cylinder unit (22).

The motorcycle (1) includes a seat (9) and a vehicle body cover (15). The seat (9) is located more rearward than the main frame (8). The vehicle body cover (15) is located above the main frame (8). The seat (9) and the vehicle body cover (15) form a recessed space in front of the seat (9) and above the vehicle body cover (15).

As described above, the cylinder axis (C1) is substantially horizontal. Accordingly, the cylinder unit (22) is located in a relatively low position. As a result, the actuator (62) is located at a relatively low position although the actuator (62) extends upward from the cylinder unit (22). Since the cylinder unit (22) and the actuator (62) are each located at the relatively low position, the main frame (8) is also located at a relatively low position. This causes the recessed space to extend to a relatively low position. Consequently, a driver can get on and off the motorcycle (1) easily. This results in high accessibility of the motorcycle (1). The accessibility of a moped type vehicle appears when the driver rides on and off the moped type vehicle.

The engine (20) is positioned close to the legs of the driver riding on the motorcycle (1). As described above, the actuator (62) is located above the cylinder unit (22). Accordingly, the actuator (62) does not increase the length of the engine (20) in the transverse direction. Consequently, the motorcycle (1) can suitably enlarge a space where the legs can each be placed. For example, even when the engine (20) includes the actuator (62), the engine (20) hardly prevents the driver from moving the legs freely. This leads to high leg comfortableness of the motorcycle (1). The leg comfortableness appears when the driver drives the moped type vehicle.

Here, the main frame (8) is also positioned close to the legs of the driver riding on the motorcycle (1). However, as described above, the vehicle body frame (2) is classified as the backbone type. Accordingly, the length of the main frame (8) in the transverse direction is sufficiently smaller than the length of the engine (20) in the transverse direction. Consequently, the influence of the main frame (8) on the leg comfortableness is sufficiently smaller than the influence of the engine (20) on the leg comfortableness.

For example, in order to increase the power of the engine or to enhance the performance of the engine, the air cleaner may be made larger, and the air cleaner may be located more rearward than the engine. For example, in order to comply with exhaust regulations, an air-cooled engine may be replaced by a water-cooled engine. In such cases, it is preferred that the cylinder axis of the engine is inclined forward and upward rather than horizontally. In such cases, it is preferred that the cylinder axis of the engine has an angle inclined forward and upward rather than horizontally. Here, the angle of the cylinder axis corresponds to an angle formed between the cylinder axis and the horizontal direction, for example.

It is the object of the present invention to provide a straddled type vehicle that can enlarge an angle of a cylinder axis suitably.

According to the present invention said object is solved by straddled type vehicle having the features of independent claim 1. Preferred embodiments are laid down in the dependent claims.

The straddled type vehicle is a moped type vehicle that includes the head tube and the main frame. The head tube has the central axis. The central axis is positioned on the vehicle center plane. The vehicle center plane is an imaginary plane perpendicular with respect to the transverse direction of the moped type vehicle. The main frame is connected to the head tube. The main frame extends rearward from the head tube in the plan view of the moped type vehicle. The main frame extends on the vehicle center plane in the plan view of the moped type vehicle. As described above, the head tube and the main frame form a vehicle body frame of a backbone type.

The moped type vehicle includes the steering device, the front wheel, and the engine. The steering device is supported by the head tube. The front wheel is supported by the steering device. The engine is supported by the main frame.

The moped type vehicle includes the seat and the center cover. The seat is located more rearward than the main frame. The center cover is located above the main frame. The center cover extends to the seat. The seat and the center cover form a recessed space. The recessed space is located in front of the seat and above the center cover. Accordingly, the driver can ride on and off the moped type vehicle with use of the recessed space.

The moped type vehicle includes the foot bar. The foot bar is located lower than the seat. The foot bar extends to a position more rightward than the seat and to a position more leftward than the seat. Accordingly, the driver of the moped type vehicle can put the driver's feet on the foot bar.

The moped type vehicle includes the right cover and the left cover. The right cover is located rightward of the main frame. The left cover is located leftward of the main frame.

The engine includes the cylinder unit. The cylinder unit is located below the main frame. The cylinder unit forms the cylinder bore and the first passage. The cylinder bore and the first passage are located inside the cylinder unit. The cylinder bore centers on the cylinder axis. The first passage is in communication with the cylinder bore.

The engine includes the first valve and the variable valve operating mechanism. The first valve is located inside the cylinder unit. The first valve opens and closes the first passage. The variable valve operating mechanism drives the first valve. The variable valve operating mechanism includes the first actuator. The first actuator changes the opening and closing conditions of the first valve. The first actuator includes the first actuator body. The first actuator body is attached to the cylinder unit. The first actuator body generates power for changing the opening and closing conditions of the first valve.

The moped type vehicle adopts first arrangement of the cylinder axis. The first arrangement of the cylinder axis is that the cylinder axis passes a position above the front wheel without overlapping the front wheel in the side view of the moped type vehicle. The first arrangement of the cylinder axis can enlarge the angle of the cylinder axis suitably.

However, with the first arrangement of the cylinder axis, the cylinder unit is located at a relatively high position. The first actuator body is also located at a relatively high position. Accordingly, the main frame is also located at a relatively high position. The center cover is also located at a relatively high position. The recessed space is also located at a relatively high position. As a result, the driver has to lift up the driver's legs higher when the driver rides on and off the moped type vehicle. This causes reduction in accessibility for the driver. As described above, the first arrangement of the cylinder axis reduces the accessibility of the moped type vehicle.

Then, the first actuator body is arranged so as not to extend upward from the cylinder unit but to extend either rightward or leftward from the cylinder unit. Here, a construction in which the first actuator body extends either rightward or leftward from the cylinder unit is referred to as a "first construction".

The first actuator body is located at a relatively high position even when the moped type vehicle has the first construction. However, the first actuator body is not located at an excessively high position when the moped type vehicle has the first construction. This can suppress a height position of the main frame. The first construction suppresses the height position of the main frame from becoming excessively high. Consequently, reduction in accessibility of the moped type vehicle can be suppressed. The first construction produces an advantage of suppressing the reduction in accessibility of the moped type vehicle.

On the other hand, the first construction produces a new drawback. The new drawback is that the leg comfortableness for the driver is reduced. As described in the Background Art, when the head tube and the main frame form the vehicle body frame of the backbone type, the leg comfortableness depends on the length of the engine in the transverse direction. The first construction increases the length of the engine in the transverse direction. As the length of the engine in the transverse direction increases, a space where the driver can place each of the legs on the moped type vehicle decreases. This causes reduction in leg comfortableness. Thus, the first construction produces a disadvantage of reduction in leg comfortableness.

For the moped type vehicle, the leg comfortableness is equal to or more important than the accessibility of the moped type vehicle. Moreover, the leg comfortableness appears when the driver drives the moped type vehicle. Accordingly, the disadvantage of reduction in leg comfortableness cancels the advantage of suppressing the reduction in accessibility of the moped type vehicle. That is, the disadvantage produced from the first construction cancels the advantage produced from the first construction. Consequently, the moped type vehicle is hard to adopt the first construction. The first construction hardly seems to be applicable to the moped type vehicle.

Nevertheless, the moped type vehicle has the first construction. This is because that the first arrangement of the cylinder axis and the first construction are useful for creating a new technical value.

Specifically, the first actuator body is located at a relatively high position. As a result, increase in the length of the engine in the transverse direction at a relatively high position can not only reduce the leg comfortableness but also produce a new technical value. The new technical value is that the moped type vehicle allows the driver to knee-grip the moped type vehicle. That is, a new configuration for allowing the driver to knee-grip the moped type vehicle, taking an advantage of the first actuator body being located at a relatively high position is provided. The new configuration includes, in addition to the first arrangement of the cylinder axis and the first construction, a second construction and a third construction.

The second construction is that at least part of the first actuator body is located at either a positon rightward of the main frame or a positon leftward of the main frame in the plan view of the moped type vehicle.

The third construction is that the first actuator body is entirely located leftward of the right cover and rightward of the left cover, and the first actuator body entirely overlaps the right cover and the left cover in the side view of the moped type vehicle.

Combination of the first arrangement of the cylinder axis and the first construction can effectively increase the length of the engine in the transverse direction at a relatively high position. Specifically, with the combination of the first arrangement of the cylinder axis and the first construction, the first actuator body extends either rightward or leftward from the cylinder unit at a relatively high position. Accordingly, the first actuator body can positively increase the length of the engine in the transverse direction at a relatively high position.

Moreover, combination of the first arrangement of the cylinder axis and the first and second constructions can further effectively increase the length of the engine in the transverse direction at a relatively high position.

Moreover, combination of the first arrangement of the cylinder axis and the first, second, and third constructions can further effectively cause the right cover to protrude rightward at a relatively high position and cause the left cover to protrude leftward at a relatively high position. Specifically, good use of the first actuator body can cause the right cover and the left cover to positively protrude outward in the transverse direction at each a relatively high position. As a result, a distance between the right cover and the left cover in the transverse direction can be made large effectively at a relatively high position.

Since the distance between the right cover and the left cover in the transverse direction is large at a relatively high position, the driver can knee-grip the moped type vehicle suitably. For example, the driver can put the right cover and the left cover suitably between the left and right knees of the driver. For example, the driver can hold the right cover and the left cover with the left and right knees of the driver.

It should be noted that the conventional moped type vehicle is not assumed to be knee-gripped by the driver. Consequently, the ability that the moped type vehicle allows the driver to knee-grip the moped type vehicle is equivalent to an unexpected technical value in the technical field of the moped type vehicle.

The driver can also ride the moped type vehicle without knee-gripping. The ability of the moped type vehicle to allow the driver to knee-grip the moped type vehicle means that the number of riding positions that the driver can take on the moped type vehicle increases by one. Specifically, the ability of the moped type vehicle to allow the driver to knee-grip the moped type vehicle means that the number of positions where the driver can place each of the legs on the moped type vehicle increases by one.

The leg comfortableness depends not only on the size of the space where the legs can each be placed but also on the number of riding positions. Increase in number of riding positions improves the leg comfortableness. In fact, the first construction decreases the size of the space where the legs can each be placed. On the other hand, all of the first arrangement of the cylinder axis, and the first, second and third constructions increase the number of riding positions. Consequently, increase in leg comfortableness in terms of the number of riding positions can compensate reduction in leg comfortableness in terms of the space where the legs can each be placed. That is, the advantage produced from the combination of the first arrangement and the first, second and third constructions compensates the disadvantage produced from the first construction. As described above, combination of the first arrangement of the cylinder axis and the first, second and third constructions can overcome the barrier that the moped type vehicle is difficult to adopt the first construction.

As described above, the moped type vehicle according to the present teaching can enlarge the angle of the cylinder axis suitably. Moreover, the driver can also ride the moped type vehicle with knee-gripping.

It is preferred in the moped type vehicle described above that
the seat includes:
a first seating part where the driver of the moped type vehicle sits, and
under assumption that a height position of a midpoint in an up-down direction of the moped type vehicle between a height position of the first seating part and a height position of the foot bar is a first height position,
that a height position of a midpoint in the up-down direction between the height position of the first seating part and the first height position is a second height position, and
that a height position of a midpoint in the up-down direction between the first height position and the height position of the foot bar is a third height position,
the first actuator body extending in the transverse direction from the cylinder unit is entirely located lower than the second height position and higher than the third height position.

The first actuator body can be located at a relatively high position. Accordingly, use of the first actuator body can cause each the right cover and the left cover to protrude outward in the transverse direction at a higher position. As a result, a distance between the right cover and the left cover in the transverse direction can be made large at a higher position. Consequently, the driver can knee-grip the right cover and the left cover more suitably.

It is preferred in the moped type vehicle described above that
at least part of the first actuator body protruding in the transverse direction from the cylinder unit is located higher than the first height position.

The first actuator body can be located at a higher position. Consequently, the driver can knee-grip the right cover and the left cover more suitably.

It is preferred in the moped type vehicle described above that
a distance between the right cover and the left cover in the transverse direction becomes smaller toward downward from a position of the first actuator body in a cross section that passes the first actuator body and is perpendicular with respect to a longitudinal direction of the moped type vehicle.

A distance between the right cover and the left cover in the transverse direction at a position of the first actuator body is larger than a distance between the right cover and the left cover in the transverse direction at a position below the first actuator body. Consequently, the driver can knee-grip the right cover and the left cover more suitably. Moreover, the space where the legs can each be placed becomes larger at a position lower than the first actuator body. This can enhance the leg comfortableness in terms of the space where the legs can each be placed.

It is preferred in the moped type vehicle described above that
a distance between the right cover and the left cover in the transverse direction becomes smaller toward rearward from a position of the first actuator body in a cross section that passes the first actuator body and is perpendicular with respect to an up-down direction of the moped type vehicle.

The distance between the right cover and the left cover in the transverse direction at a position of the first actuator body is larger than a distance between the right cover and the left cover in the transverse direction at a position behind the first actuator body. Consequently, the driver can knee-grip the right cover and the left cover more suitably. Moreover, the space where the legs can each be placed becomes larger at a position more rearward than the actuator body. This can enhance the leg comfortableness in terms of the space where the legs can each be placed.

It is preferred in the moped type vehicle described above that
the right cover includes:
   a first right cover; and
   a second right cover located in front of the first right cover in the side view of the moped type vehicle,
the left cover includes:
   a first left cover; and
   a second left cover located in front of the first left cover in the side view of the moped type vehicle,
the first actuator body overlaps the second right cover and the second left cover in the side view of the moped type vehicle,
the second right cover is located more rightward than the first right cover, and
the second left cover is located more leftward than the first left cover.

The first actuator body overlaps the second right cover and the second left cover in the side view of the moped type vehicle. Accordingly, use of the first actuator body can cause the second right cover and the second left cover to protrude outward in the transverse direction effectively. As a result, a distance between the second right cover and the second left cover in the transverse direction can be made large effectively. The second right cover is located in front of the first right cover in the side view of the moped type vehicle. The second right cover is located more rightward than the first right cover. Consequently, when the driver puts the driver's right knee on the right of the first right cover, the second right cover can suitably control further forward movement of the driver's right knee from the first right cover. As described above, the right cover can suitably assist in keeping the driver's right knee at a suitable position. The second left cover is located in front of the first left cover in the side view of the moped type vehicle. The second left cover is located more leftward than the first left cover. Consequently, when the driver puts the driver's left knee on the left of the first left cover, the second left cover can suitably control further forward movement of the driver's left knee from the first left cover. As described above, the left cover can suitably assist in keeping the driver's left knee at a suitable position.

It is preferred in the moped type vehicle described above that
the first right cover is separated from the second right cover,
the first right cover is smaller than the second right cover in the side view of the moped type vehicle,
the first left cover is separated from the second left cover, and
the first left cover is smaller than the second left cover in the side view of the moped type vehicle.

The first right cover is separated from the second right cover. The first right cover is smaller than the second right cover in the side view of the moped type vehicle. Consequently, the first right cover is more difficult to bend than the second right cover. Likewise, the first left cover is separated from the second left cover. The first left cover is smaller than the second left cover in the side view of the moped type vehicle. Consequently, the first left cover is more difficult to bend than the second left cover. As a result, the driver can knee-grip the first right cover and the first left cover more suitably.

It is preferred in the moped type vehicle described above that
the first right cover passes a position above the first actuator body in the side view of the moped type vehicle and extends from a position more forward than the first actuator body to a position more rearward than the first actuator body,
the second right cover is located below the first right cover in the side view of the moped type vehicle,
the first left cover passes a position above the first actuator body in the side view of the moped type vehicle and extends from a position more forward than the first actuator body to a position more rearward than the first actuator body, and
the second left cover is located below the first left cover in the side view of the moped type vehicle.

The first right cover passes a position above the first actuator body and extends from a position more forward than the first actuator body to a position more rearward than the first actuator body in the side view of the moped type vehicle. The second right cover is located below the first right cover in the side view of the moped type vehicle. As described above, the second right cover is located more rightward than the first right cover. Consequently, when the driver puts the driver's right knee on the right of the first right cover, the second right cover can control further downward movement of the driver's right knee from the first right cover. As described above, the right cover can suitably assist in keeping the driver's right knee at a suitable position. Likewise, the first left cover passes a position above the first actuator body and extends from a position more forward than the first actuator body to a position more rearward than the first actuator body in the side view of the moped type vehicle. The second left cover is located below the first left cover in the side view of the moped type vehicle. As described above, the second left cover is located more leftward than the first left cover. Consequently, when the driver puts the driver's left knee on the left of the first left cover, the second left cover can control further downward movement of the driver's left knee from the first left cover. As described above, the left cover can suitably assist in keeping the driver's left knee at a suitable position.

It is preferred in the moped type vehicle described above that
the cylinder unit includes:
   a cylinder member;
   a cylinder head provided above the cylinder member; and
   a head cover provided above the cylinder head,
the first actuator body overlaps at least either the cylinder head or the head cover in the side view of the moped type vehicle.

The first actuator body can be located at a relatively high position. Accordingly, use of the first actuator body can cause each the right cover and the left cover to protrude outward in the transverse direction at a higher position. As a result, the distance between the right cover and the left cover in the transverse direction can be made large at a higher position. Consequently, the driver can knee-grip the right cover and the left cover more suitably.

It is preferred in the moped type vehicle described above that
the first actuator body is entirely positioned at either rightward or leftward of the vehicle center plane, and
the cylinder axis is located at a position shifted from the vehicle center plane toward the first actuator body.

For example, when the first actuator body is entirely located at a positon rightward of the vehicle center plane, the cylinder axis is located at a position shifted rightward from the vehicle center plane. Accordingly, the first actuator body can be located more rightward by a distance at which the cylinder axis is shifted rightward from the vehicle center plane. For example, when the first actuator body is entirely located at a positon leftward of the vehicle center plane, the cylinder axis is located at a position shifted leftward from the vehicle center plane. Accordingly, the first actuator body can be located more leftward by a distance at which the cylinder axis is shifted leftward from the vehicle center plane. In any cases, the first actuator body can be located further outward in the transverse direction by a distance at which the cylinder axis is shifted from the vehicle center plane. Thus, the first actuator body is used to bulge the right cover and the left cover further outward in the transverse direction. As a result, the distance between the right cover and the left cover in the transverse direction can be made larger. Consequently, the driver can knee-grip the right cover and the left cover more suitably.

It is preferred that the moped type vehicle described above further includes:
a first hanger that is supported by the main frame and is configured to support the cylinder unit,
first hanger includes:
   an upper end that is located more forward and higher than the first actuator body and is connected to the main frame;
   a lower end that is located more rearward and lower than the first actuator body and is connected to the cylinder unit; and
   an arm that passes a position more rearward than the first actuator body and extends from the upper end of the first hanger to the lower end of the first hanger.

The upper end is connected to the main frame. The lower end is connected to the cylinder unit. Accordingly, the main frame can support the engine suitably with the first hanger. The upper end is located more forward and higher than the first actuator body. The lower end is located more rearward and lower than the first actuator body. The arm passes a position more rearward than the first actuator body and extends from the upper end of the first hanger to the lower end of the first hanger. This can suitably prevent interference between the arm and the first actuator body.

It is preferred in the moped type vehicle described above that
the first hanger overlaps the first actuator body in the plan view of the moped type vehicle.

Even when the first hanger overlaps the first actuator body in the plan view of the moped type vehicle, the arm can suitably prevent interference between the arm and the first actuator body.

It is preferred that the moped type vehicle described above further includes:
a radiator located more forward than the cylinder unit, and
a first pipe that is connected in communication with the radiator,

the first pipe has a first part that overlaps the first actuator body in the side view of the moped type vehicle,
the first part is located more outward in the transverse direction than the first actuator body,
the first part is entirely located leftward of the right cover and rightward of the left cover, and
the first part entirely overlaps the right cover and the left cover in the side view of the moped type vehicle.

Use of the first part can cause the right cover and the left cover to protrude further outward in the transverse direction. As a result, the distance between the right cover and the left cover in the transverse direction can be made larger. Consequently, the driver can knee-grip the right cover and the left cover more suitably.

It is preferred that the moped type vehicle described above further includes:
a thermostat that is connected in communication with the first pipe,
the thermostat is positioned either rightward or leftward of the cylinder unit,
the thermostat is entirely located leftward of the right cover and rightward of the left cover, and
the thermostat entirely overlaps the right cover and the left cover in the side view of the moped type vehicle.

Use of the thermostat can cause the right cover and the left cover to protrude outward in the transverse direction easily. As a result, the distance between the right cover and the left cover in the transverse direction can be made large easily. Consequently, the driver can knee-grip the right cover and the left cover more suitably.

It is preferred in the moped type vehicle described above that
the thermostat is attached to the cylinder unit and extends either rightward or leftward from the cylinder unit.

Use of the thermostat can cause the right cover and the left cover to effectively protrude outward effectively in the transverse direction.

It is preferred in the moped type vehicle described above that
both the first actuator body and the thermostat are positioned either rightward or leftward of the cylinder unit.

Both the first actuator body and the thermostat can cause the right cover and the left cover to protrude outward in the transverse direction more easily. As a result, the distance between the right cover and the left cover in the transverse direction can be made large more easily. Consequently, the driver can knee-grip the right cover and the left cover more suitably.

It is preferred that the moped type vehicle described above further includes:
a second pipe that is connected in communication with the radiator and the thermostat,
the radiator includes:
   an upper tank that extends in the transverse direction,
   a radiator core that is provided below the upper tank, and
   a lower tank that is provided below the radiator core and extends in the transverse direction,
the upper tank has an upper connection port,
the lower tank has a lower connection port,
the upper connection port is connected to one of the first pipe and the second pipe,
the lower connection port is connected to the other of the first pipe and the second pipe, and
the upper connection port, the lower connection port, and the thermostat are all positioned either more rightward or more leftward than the cylinder unit.

The upper connection port, the lower connection port, and the thermostat are all located more rightward than the cylinder unit or more leftward than the cylinder unit. Consequently, a distance between the upper connection port and the thermostat can be made small suitably. This achieves a suitably shortened length of the first pipe. Likewise, a distance between the lower connection port and the thermostat can be made small suitably. This achieves a suitably shortened length of the second pipe.

It is preferred that the moped type vehicle described above further includes:
a water pump that is positioned either rightward or leftward of the cylinder unit,
the water pump is entirely located leftward of the right cover and rightward of the left cover, and
the water pump entirely overlaps the right cover and the left cover in the side view of the moped type vehicle.

Use of the water pump can cause the right cover and the left cover to protrude outward in the transverse direction easily. As a result, the distance between the right cover and the left cover in the transverse direction can be made large easily. Consequently, the driver can knee-grip the right cover and the left cover more suitably.

It is preferred in the moped type vehicle described above that
the water pump is attached to the cylinder unit and extends either rightward or leftward from the cylinder unit.

Use of the water pump can cause the right cover and the left cover to protrude outward effectively in the transverse direction.

It is preferred in the moped type vehicle described above that
both the first actuator body and the thermostat are located at one of a rightward position or a leftward position of the cylinder unit, and
the water pump is located at the other of the rightward position or the leftward position of the cylinder unit.

In other words, it is preferred in the moped type vehicle described above that
both the first actuator body and the thermostat are located in one of a first area rightward of the cylinder unit and a second area leftward of the cylinder unit, and
the water pump is located in the other of the first area and the second area.

For example, when the first actuator body and the thermostat are both located at the rightward position of the cylinder unit, the water pump is located at the leftward position of the cylinder unit. For example, when the first actuator body and the thermostat are both located in the first area rightward of the cylinder unit, the water pump is located in the second area leftward of the cylinder unit. Accordingly, both the first actuator body and the thermostat can cause the right cover to protrude rightward more easily. Moreover, use of the water pump can cause the left cover to protrude leftward easily. For example, when the first actuator body and the thermostat are both located at the leftward position of the cylinder unit, the water pump is located at the rightward position of the cylinder unit. For example, when the first actuator body and the thermostat are both located in the second area, the water pump is located in the first area. Accordingly, both the first actuator body and the thermostat can effectively cause the left cover to protrude leftward more easily. Moreover, use of the water pump can cause the right cover to protrude rightward easily. In any cases, the distance between the right cover and the left cover in the transverse direction can be made larger more easily. Consequently, the driver can knee-grip the right cover and the left cover more suitably.

It is preferred that the moped type vehicle described above further includes:
an air cleaner that is located below the seat and behind the cylinder unit; and
a fuel tank that is located below the seat and behind the air cleaner.

The air cleaner is located below the seat and behind the cylinder unit. Accordingly, the air cleaner is not located more forward than the cylinder unit. As a result, a space more forward than the cylinder unit can be effectively used. For example, a radiator can be installed more forward than the cylinder unit. The fuel tank that is located below the seat and behind the air cleaner. Accordingly, the fuel tank is not located above the main frame. Consequently, the seat and the center cover form the recessed space suitably.

For the purpose of illustrating the present teaching, there are shown in the drawings several forms which are presently preferred, it being understood, however, that the present teaching is not limited to the precise arrangement and instrumentalities shown.
Fig. 1 is a right side view of a moped type vehicle according to an embodiment.
Fig. 2 is a plan view of the moped type vehicle according to the embodiment.
Fig. 3 is a right side view of the moped type vehicle and a driver riding on the moped type vehicle.
Fig. 4 is a plan view of a vehicle body frame.
Fig. 5 is a partial right side view of the moped type vehicle.
Fig. 6 is a partial left side view of the moped type vehicle.
Fig. 7 is a front view of an engine.
Fig. 8 is a plan view of the engine.
Fig. 9 is a left side view of the engine.
Fig. 10 is a sectional view of a cylinder unit.
Fig. 11 is a perspective view of a first inlet rocker arm, a second inlet rocker arm, and an inlet pressing member.
Fig. 12 is another perspective view of a first inlet rocker arm, a second inlet rocker arm, and an inlet pressing member.
Fig. 13 is a rear view of a radiator.
Fig. 14 is a right side view of a right cover.
Fig. 15 is a left side view of a left cover.
Fig. 16 is a perspective view of the right cover seen from behind.
Fig. 17 is a sectional view taken on line XVII-XVII of Fig. 14.
Fig. 18 is a sectional view taken on line XVIII-XVIII of Fig. 14.
Fig. 19 is a plan view of the moped type vehicle and the driver's legs.

A moped type vehicle 1 according to the present teaching will be described hereinafter with reference to the drawings.

### 1. Outline construction of moped type vehicle 1

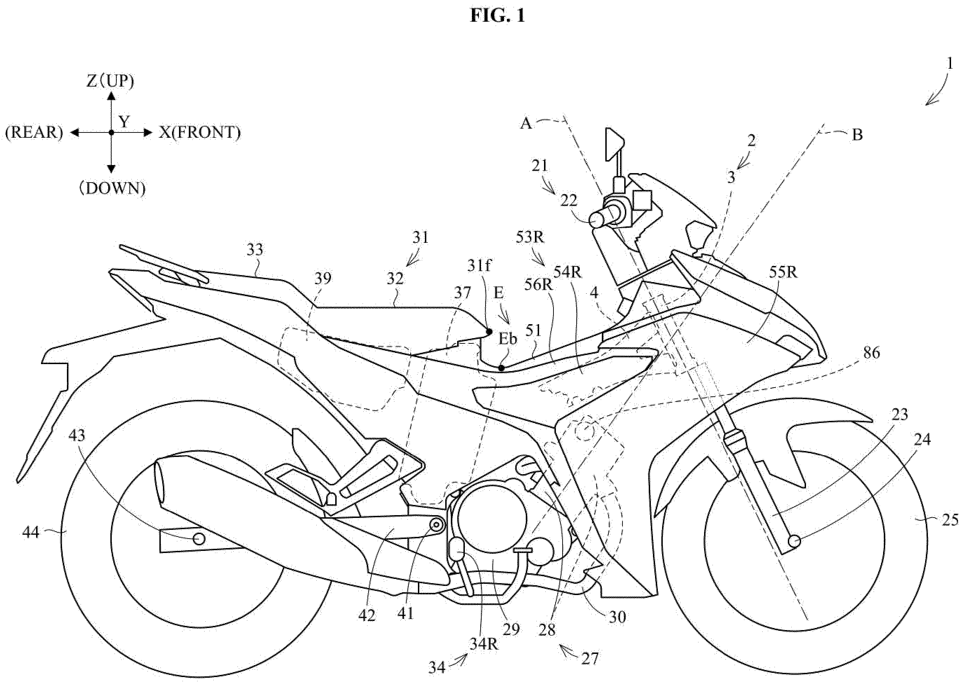

Fig. 1 is a right side view of the moped type vehicle 1 according to an embodiment. The moped type vehicle 1 is a motorcycle of a moped type that is a small size straddled vehicle.

Fig. 1 shows a longitudinal direction X, a transverse direction Y, and an up-down direction Z of the moped type vehicle 1, respectively. The longitudinal direction X, transverse direction Y, and up-down direction Z are defined with reference to a driver (also called a rider) riding on the moped type vehicle 1. The longitudinal direction X, transverse direction Y, and up-down direction Z are perpendicular to one another. The longitudinal direction X and transverse direction Y are horizontal. The up-down direction Z is vertical.

The terms "forward", "rearward", "upward", "downward", rightward", and "leftward", respectively, mean "forward", "rearward", "upward", "downward", rightward", and "leftward" as seen from the driver riding on the moped type vehicle 1. In this specification, unless otherwise specified, "forward" and "rearward" include not only directions parallel to the longitudinal direction X but also directions close to the longitudinal direction X. The directions close to the longitudinal direction X are, for example, directions at angles not exceeding 45 degrees to the longitudinal direction X. Similarly, unless otherwise specified, "rightward" and "leftward" include not only directions parallel to the transverse direction Y but also directions close to the transverse direction Y. Unless otherwise specified, "upward" and "downward" include not only directions parallel to the up-down direction Z but also directions close to the up-down direction Z. For reference, the drawings show the terms FRONT, REAR, UP, DOWN, RIGHT, and LEFT, as appropriate.

This specification uses various expressions describing arrangements, which have the following meanings, respectively. The following description will be made taking the transverse direction Y for example, and the same may be applied to the longitudinal direction X and up-down direction Z.

The expression "Member Ma is located more rightward/leftward than Member Mb" defines a position in the transverse direction Y of Member Ma relative to Member Mb, and does not define a position in the longitudinal direction X or the up-down direction Z of Member Ma relative to Member Mb. In the case of this expression, Member Ma may, or may not, overlap Member Mb in a side view of the moped type vehicle 1.

The expression "Member Ma is located rightward/leftward of Member Mb" without reference to a looking direction defines a position in the transverse direction Y of Member Ma relative to Member Mb, a position in the longitudinal direction X of Member Ma relative to Member Mb, and a position in the up-down direction Z of Member Ma relative to Member Mb. This expression means that Member Ma is located more rightward/leftward than Member Mb, and that at least part of Member Ma overlaps at least part of Member Mb in a side view of the moped type vehicle 1.

The expression "Member Ma is located rightward/leftward of Member Mb in a plan view of the moped type vehicle 1" defines a position in the transverse direction Y of Member Ma relative to Member Mb, and a position in the longitudinal direction X of Member Ma relative to Member Mb, and does not define a position in the up-down direction Z of Member Ma relative to Member Mb. This expression means that Member Ma is located more rightward/leftward than Member Mb, that the front end of Member Ma is located more forward than the rear end of Member Mb, and that the rear end of Member Ma is located more rearward than the front end of Member Mb.

The expression "Member Ma is located rightward/leftward of Member Mb in a front view of the moped type vehicle 1" defines a position in the transverse direction Y of Member Ma relative to Member Mb, and a position in the up-down direction Z of Member Ma relative to Member Mb, and does not define a position in the longitudinal direction X of Member Ma relative to Member Mb. This expression means that Member Ma is located more rightward/leftward than Member Mb, the upper end of Member Ma is located higher than the lower end of Member Mb, and the lower end of Member Ma is located lower than the upper end of Member Mb.

In the present specification, the language "in side view of the moped type vehicle 1" is referred to as "in side view of the vehicle", as appropriate. Likewise, the language "in plan view of the moped type vehicle 1" is referred to as "in plan view of the vehicle", as appropriate. The language "in a front view of the moped type vehicle 1" is referred to as "in a front view of the vehicle", as appropriate.

The moped type vehicle 1 includes a vehicle body frame 2. Fig. 1 shows a part of the vehicle body frame 2 with dotted lines.

The vehicle body frame 2 includes a head tube 3. The head tube 3 has a central axis A. The central axis A passes the center of the head tube 3. The central axis A is an imaginary line.

The central axis A extends forward and downward in the side view of the vehicle. The central axis A is perpendicular with respect to a transverse direction Y.

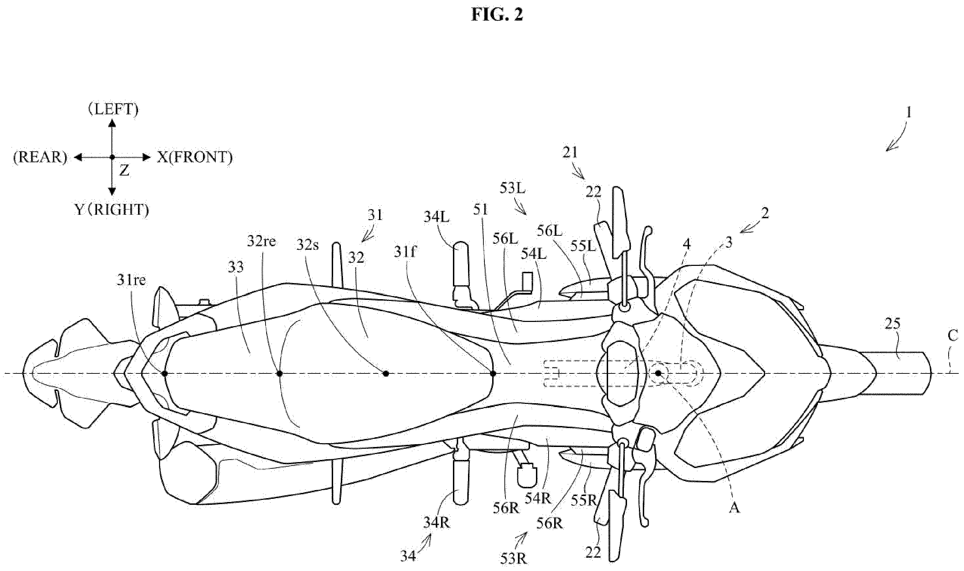

Fig. 2 is a plan view of the moped type vehicle 1 according to the embodiment. Fig. 2 partially shows the vehicle body frame 2 with dotted lines. The central axis A is positioned on a vehicle center plane C. The vehicle center plane C is an imaginary plane perpendicular with respect to the transverse direction Y.

The vehicle body frame 2 includes a main frame 4. The main frame 4 is connected to the head tube 3. The main frame 4 extends rearward from the head tube 3 in the plan view of the vehicle. The main frame 4 extends over the vehicle center plane C in the plan view of the vehicle.

Reference is made to Fig. 1. The moped type vehicle 1 includes a steering device 21. The steering device 21 is supported by the head tube 3.

The steering device 21 is rotatable about the central axis A relative to the head tube 3.

The steering device 21 includes a handlebar 22, a front suspension 23, and a front axle 24. The handlebar 22 is located higher than the head tube 3. The front suspension 23 extends forward and downward from the head tube 3 in the side view of the vehicle. The front axle 24 is supported at a lower part of the front suspension 23.

The moped type vehicle 1 includes a front wheel 25. The front wheel 25 is supported by the steering device 21.

The front wheel 25 is supported by the front axle 24. The front wheel 25 is rotatable about the front axle 24.

The moped type vehicle 1 includes an engine 27. The engine 27 is supported by the main frame 4.

The engine 27 is located behind the front wheel 25 in the side view of the vehicle.

The engine 27 includes a cylinder unit 28. Fig. 1 shows a part of the cylinder unit 28 with dotted lines. At least part of the cylinder unit 28 is located below the main frame 4. For example, the entire of the cylinder unit 28 is located below the main frame 4.

The cylinder unit 28 has a cylinder axis B. The cylinder axis B is an imaginary line.

The cylinder axis B does not overlap the front wheel 25 in the side view of the vehicle. The cylinder axis B passes a position above the front wheel 25 in the side view of the vehicle. More specifically, the cylinder axis B passes a position above the front wheel 25, and extends from a position more rearward than the front wheel 25 to a position more forward than the front wheel 25 in the side view of the vehicle.

The cylinder axis B extends forward and upward in the side view of the vehicle. The cylinder axis B is inclined forward and upward in the side view of the vehicle. The cylinder axis B is perpendicular with respect to a transverse direction Y.

The cylinder unit 28 extends upward and forward in the side view of the vehicle.

The engine 27 includes a crankcase 29. The crankcase 29 is provided below the cylinder unit 28. The crankcase 29 is connected to the cylinder unit 28. The crankcase 29 houses a crankshaft not shown.

The moped type vehicle 1 includes an exhaust pipe 30. The exhaust pipe 30 is connected to the cylinder unit 28.

The moped type vehicle 1 includes a seat 31. At least part of the seat 31 is located more rearward than the main frame 4. For example, the entire of the seat 31 is located more rearward than the main frame 4.

The entire of the seat 31 is located higher and more rearward than the cylinder unit 28.

The seat 31 includes a first seating part 32. The driver of the moped type vehicle 1 sits on the first seating part 32. The first seating part 32 is positioned on a top face of the seat 31.

The seat 31 includes a second seating part 33. A fellow passenger of the moped type vehicle 1 sits on the second seating part 33. The second seating part 33 is positioned on the top face of the seat 31. The second seating part 33 is located behind the first seating part 32.

The moped type vehicle 1 includes a foot bar 34. The foot bar 34 is entirely located lower than the seat 31.

At least part of the foot bar 34 overlaps the engine 27 in the side view of the vehicle.

At least part of the foot bar 34 is located more rearward and lower than the cylinder unit 28. For example, the entire of the foot bar 34 is located more rearward and lower than the cylinder unit 28.

Reference is made to Fig. 2. The foot bar 34 protrudes to a position more rightward than the seat 31. The foot bar 34 protrudes to a position more leftward than the seat 31.

The foot bar 34 has a shape elongated in the transverse direction Y.

The seat 31 has a front end 31f. The foot bar 34 is entirely located more rearward than the front end 31f.

The foot bar 34 includes a right foot bar 34R and a left foot bar 34L. The right foot bar 34R and the left foot bar 34L are separated from each other. The right foot bar 34R is entirely located more rightward than the seat 31. The left foot bar 34L is entirely located more leftward than the seat 31.

Reference is made to Fig. 1. The moped type vehicle 1 includes an air cleaner 37. At least part of the air cleaner 37 is located below the seat 31. For example, the entire of the air cleaner 37 is located below the seat 31.

The air cleaner 37 is entirely located lower than the first seating part 32.

At least part of the air cleaner 37 is located behind the cylinder unit 28. For example, the entire of the air cleaner 37 is located behind the cylinder unit 28.

The moped type vehicle 1 includes a fuel tank 39. At least part of the fuel tank 39 is located below the seat 31. For example, the entire of the fuel tank 39 is located below the seat 31.

The fuel tank 39 is entirely located lower than the first seating part 32.

At least part of the fuel tank 39 is located behind the air cleaner 37. For example, the entire of the fuel tank 39 is located behind the air cleaner 37.

The fuel tank 39 is entirely located more rearward than the front end 31f of the seat 31.

The moped type vehicle 1 includes a pivot shaft 41, a swing arm 42, a rear axle 43, and a rear wheel 44. The pivot shaft 41 is located behind the engine 27 in the side view of the vehicle. The pivot shaft 41 extends in the transverse direction Y. The swing arm 42 is supported by the pivot shaft 41. The swing arm 42 is swingable about the pivot shaft 41. The swing arm 42 extends rearward from the pivot shaft 41. The rear axle 43 is supported by a rear part of the swing arm 42. The rear wheel 44 is supported by the rear axle 43. The rear wheel 44 is rotatable about the rear axle 43. The swing arm 42 and the rear wheel 44 are located below the seat 31 in the side view of the vehicle.

The moped type vehicle 1 includes a chain not shown. The chain is connected to the rear wheel 44. The chain transmits power, outputted from the engine 27, to the rear wheel 44. The rear wheel 44 rotates about the rear axle 43 by the power transmitted from the chain.

The moped type vehicle 1 includes a center cover 51. At least part of the center cover 51 is located above the main frame 4. For example, the entire of the center cover 51 is located above the main frame 4. The center cover 51 extends to the seat 31.

At least part of the center cover 51 is located lower than the first seating part 32. For example, the entire of the center cover 51 is located lower than the first seating part 32.

The seat 31 and the center cover 51 form a recessed space E. The recessed space E is located in front of the seat 31 and above the center cover 51.

The recessed space E is located more rearward than the head tube 3. The recessed space E is located more rearward than the handlebar 22.

The recessed space E is shaped convexly downward in the side view of the vehicle. The recessed space E has a shape that is open upward.

The recessed space E extends lower than the first seating part 32.

The recessed space E has a lower end Eb. The lower end Eb is located lower than the first seating part 32.

Reference is made to Fig. 2. The center cover 51 overlaps the main frame 4 in the plan view of the vehicle.

The moped type vehicle 1 includes a right cover 53R and a left cover 53L. The right cover 53R includes a first right cover 54R, a second right cover 55R, and a third right cover 56R. The left cover 53L includes a first left cover 54L, a second left cover 55L, and a third left cover 56L.

The right cover 53R is located rightward of the center cover 51 in plan view of the vehicle. The left cover 53L is located leftward of the center cover 51 in plan view of the vehicle.

At least part of the right cover 53R is located rightward of the main frame 4. For example, the entire of the right cover 53R is located rightward of the main frame 4. At least part of the left cover 53L is located leftward of the main frame 4. For example, the entire of the left cover 53L is located leftward of the main frame 4.

The left cover 53L and the right cover 53R are substantially symmetrical in shape with respect to the vehicle center plane C.

Reference is made to Fig. 1. The right cover 53R overlaps the main frame 4 in the side view of the vehicle. The left cover 53L is located at substantially the same position as that of the right cover 53R in the side view of the vehicle, which illustration is omitted. Accordingly, the left cover 53L also overlaps the main frame 4 in the side view of the vehicle.

At least part of the right cover 53R is located below the center cover 51 in the side view of the vehicle. At least part of the left cover 53L is located below the center cover 51 in the side view of the vehicle.

At least part of the cylinder unit 28 located leftward of the right cover 53R and rightward of the left cover 53L. At least part of the cylinder unit 28 overlaps the right cover 53R and the left cover 53L in the side view of the vehicle.

At least part of the right cover 53R is located more forward and lower than the seat 31. At least part of the left cover 53L is located more forward and lower than the seat 31.

At least part of the right cover 53R is located more forward and higher than the foot bar 34. At least part of the left cover 53L is located more forward and higher than the foot bar 34.

Details of the configurations of the right cover 53R and the left cover 53L is to be described later.

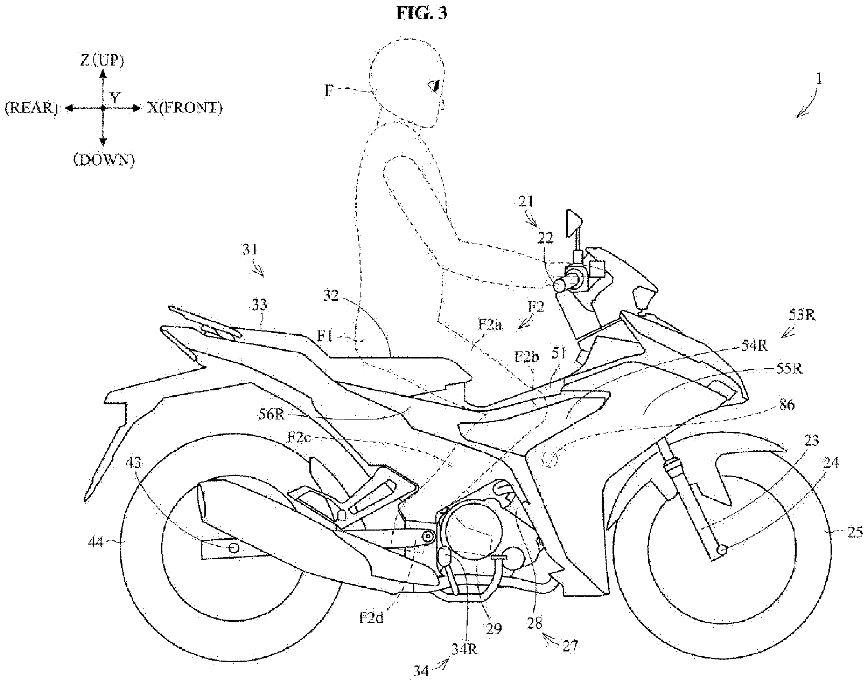

Fig. 3 is a right side view of the moped type vehicle 1 and a driver F riding on the moped type vehicle 1. The driver F mounts the seat 31. The driver F grips the handlebar 22.

The driver F has buttocks F1 and right and left legs F2. The first seating part 32 contacts the buttocks F1. The engine 27 is positioned adjacent to the legs F2.

Each of the legs F2 has a thigh F2a, a knee F2b, a calf F2c, and a foot F2d. The foot bar 34 contacts the foot F2d. The length of the foot bar 34 in the longitudinal direction X is smaller than the length of the foot F2d in the longitudinal direction X.

### 2. Vehicle body frame 2

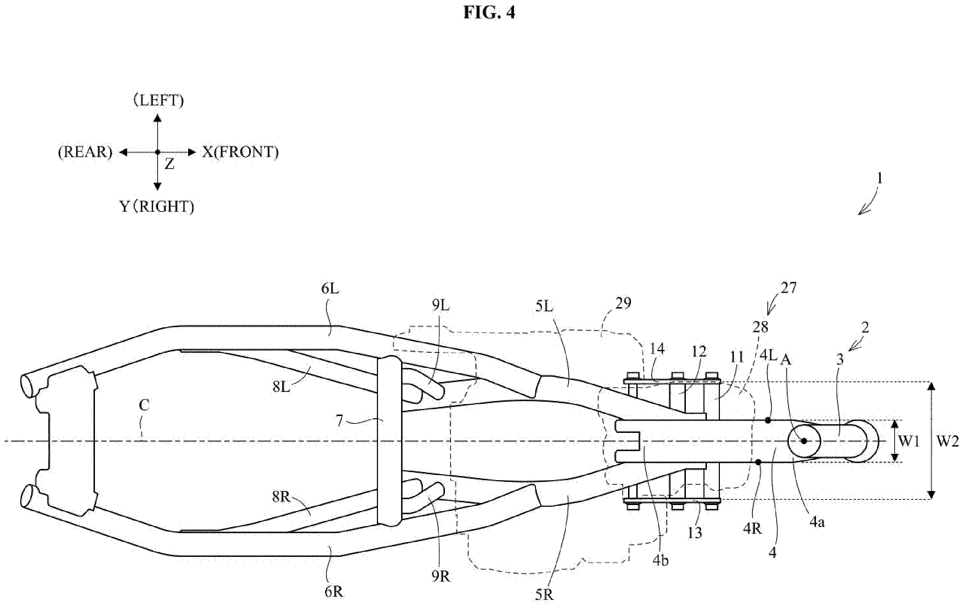

Fig. 4 is a plan view of the vehicle body frame 2. The vehicle body frame 2 is classified as a backbone type.

The number of the main frame 4 is one.

Fig. 4 illustrates the cylinder unit 28 and the crankcase 29 with dotted lines for convenience. The main frame 4 overlaps the cylinder unit 28 in the plan view of the vehicle.

Fig. 4 shows a length W1. The length W1 is a length of the main frame 4 in the transverse direction Y. More specifically, the main frame 4 has a right end 4R and a left end 4L. The length W1 corresponds to a distance in the transverse direction Y between the right end 4R and the left end 4L. The length W1 is relatively small.

Fig. 4 shows a length W2. The length W2 is a length of the cylinder unit 28 in the transverse direction Y. More specifically, the length W2 corresponds to a distance in the transverse direction Y between the right end and left end of the cylinder unit 28. The length W1 is smaller than the length W2.

The main frame 4 has a front part 4a and a rear part 4b. The front part 4a is connected to the head tube 3. The front part 4a and the rear part 4b each overlap the vehicle center plane C in the plan view of the vehicle.

The vehicle body frame 2 includes a right down frame 5R and a left down frame 5L. The right down frame 5R and the left down frame 5L are each connected to the main frame 4. The right down frame 5R and the left down frame 5L are each connected to the rear part 4b. The right down frame 5R extends rightward and rearward from the main frame 4. The right down frame 5R is entirely located rightward of the vehicle center plane C. The left down frame 5L extends leftward and rearward from the main frame 4. The left down frame 5L is entirely located leftward of the vehicle center plane C in the plan view of the vehicle.

The vehicle body frame 2 includes a right seat frame 6R and a left seat frame 6L. The right seat frame 6R is connected to the right down frame 5R. The right seat frame 6R extends rearward from the right down frame 5R. The left seat frame 6L is connected to the left down frame 5L. The left seat frame 6L extends rearward from the left down frame 5L.

The vehicle body frame 2 includes a cross member 7. The cross member 7 is connected to the right seat frame 6R and the left seat frame 6L. The cross member 7 extends in the transverse direction Y.

The vehicle body frame 2 includes a first right back stay 8R and a first left back stay 8L. The first right back stay 8R is connected to the right down frame 5R and the right seat frame 6R. The first left back stay 8L is connected to the left down frame 5L and the left seat frame 6L.

The vehicle body frame 2 includes a second right back stay 9R and a second left back stay 9L. The second right back stay 9R is connected to the right down frame 5R and the cross member 7. The second left back stay 9L is connected to left down frame 5L and the cross member 7.

The vehicle body frame 2 includes a first rod 11 and a second rod 12. The first rod 11 and the second rod 12 are each connected to the main frame 4. The second rod 12 is located behind the first rod 11 in the plan view of the vehicle. The first rod 11 and the second rod 12 each extend in the transverse direction Y. The first rod 11 and the second rod 12 each extend rightward from the main frame 4. The first rod 11 and the second rod 12 each extend leftward from the main frame 4.

The vehicle body frame 2 includes a right hanger 13 and a left hanger 14. The right hanger 13 and the left hanger 14 are each supported by the main frame 4.

Specifically, the right hanger 13 and the left hanger 14 are each connected to the first rod 11 and the second rod 12.

At least part of the right hanger 13 is located rightward of the main frame 4 in the plan view of the vehicle. At least part of the right hanger 13 is located more rightward than the right end 4R of the main frame 4. For example, the entire of the right hanger 13 is located rightward of the main frame 4 in the plan view of the vehicle. For example, the entire of the right hanger 13 is located more rightward than the right end 4R of the main frame 4. At least part of the left hanger 14 is located leftward of the main frame 4 in the plan view of the vehicle. At least part of the left hanger 14 is located more leftward than the left end 4L of the main frame 4 in the plan view of the vehicle. For example, the entire of the left hanger 14 is located leftward of the main frame 4 in the plan view of the vehicle. For example, the entire of the left hanger 14 is located more leftward than the left end 4L of the main frame 4 in the plan view of the vehicle.

At least part of the right hanger 13 is located rightward of the cylinder unit 28 in the plan view of the vehicle. At least part of the left hanger 14 is located leftward of the cylinder unit 28 in the plan view of the vehicle.

The right hanger 13 and the left hanger 14 each extend in the longitudinal direction X in the plan view of the vehicle.

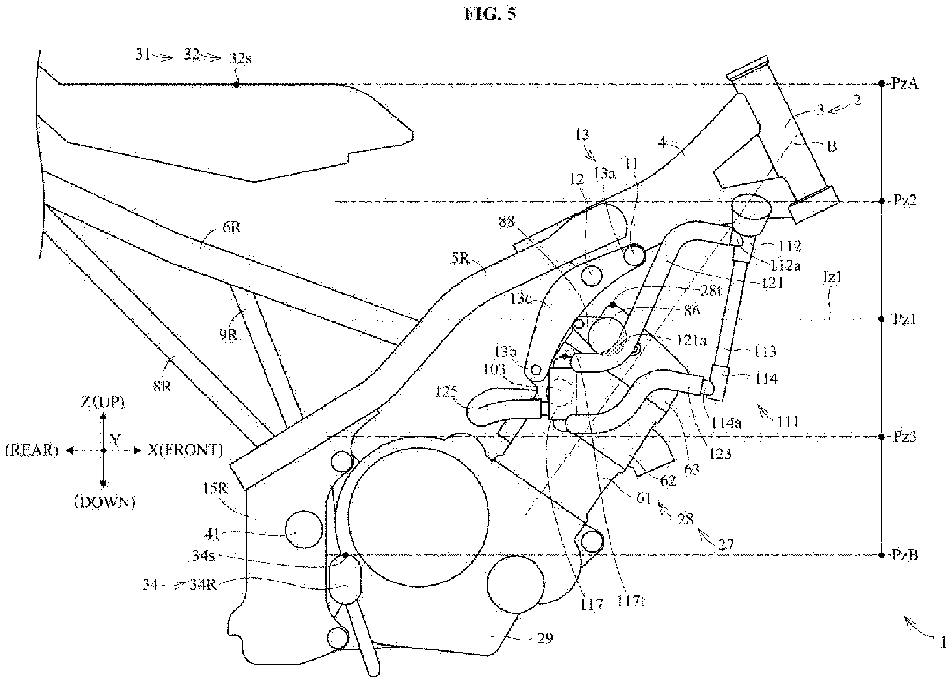

Fig. 5 is a partial right side view of the moped type vehicle 1. Fig. 5 omits illustration of the steering device 21 and the like. The right hanger 13 is located below the main frame 4 in the side view of the vehicle. The right hanger 13 extends downward and rearward from the main frame 4 in the side view of the vehicle. The right hanger 13 has a bent shape.

The right hanger 13 supports the cylinder unit 28.

Specifically, the right hanger 13 includes an upper end 13a, a lower end 13b, and an arm 13c. The upper end 13a is connected to the main frame 4. The lower end 13b is connected to the cylinder unit 28. The arm 13c extends from the upper end 13a to the lower end 13b.

The upper end 13a is connected to the first rod 11.

The lower end 13b is connected to a rear part of the cylinder unit 28.

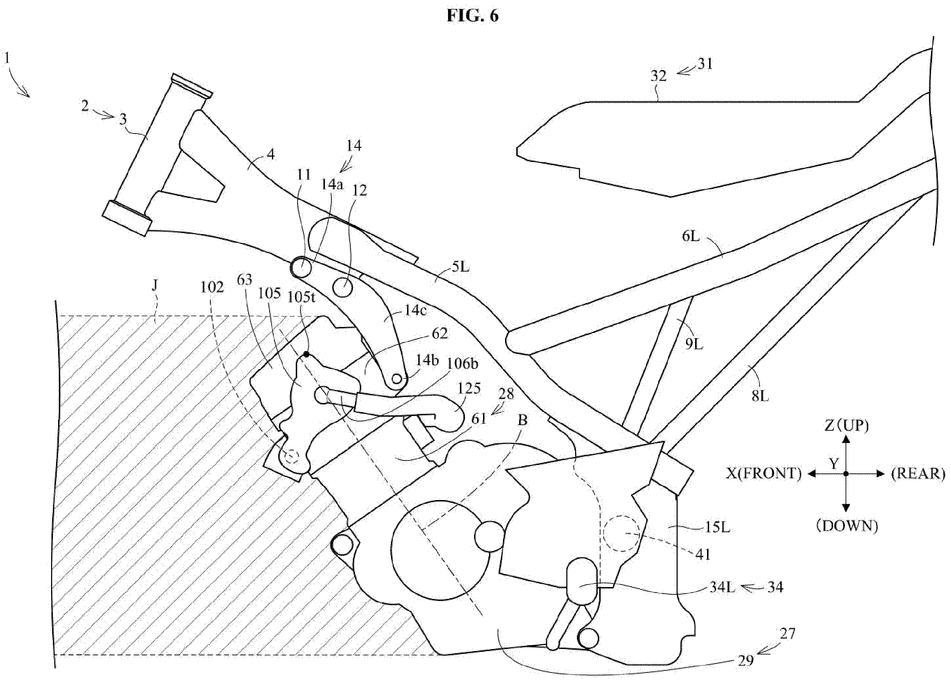

Fig. 6 is a partial left side view of the moped type vehicle 1. The left hanger 14 is located below the main frame 4 in the side view of the vehicle. The left hanger 14 extends downward and rearward from the main frame 4 in the side view of the vehicle. The left hanger 14 has a bent shape.

The left hanger 14 supports the cylinder unit 28.

Specifically, the left hanger 14 includes an upper end 14a, a lower end 14b, and an arm 14c. The upper end 14a is connected to the main frame 4. The lower end 14b is connected to the cylinder unit 28. The arm 14c extends from the upper end 14a to the lower end 14b.

As described above, the main frame 4 supports the engine 27 with the right hanger 13 and the left hanger 14.

Reference is made to Figs. 5 and 6. The vehicle body frame 2 includes a right bracket 15R and a left bracket 15L. The right bracket 15R is connected to the right down frame 5R. The right bracket 15R extends downward from the right down frame 5R. The left bracket 15L is connected to the left down frame 5L. The left bracket 15L extends downward from the left down frame 5L. The right bracket 15R and the left bracket 15L are each located behind the engine 27 in the side view of the vehicle. The right bracket 15R and the left bracket 15L support the engine 27. The right bracket 15R and the left bracket 15L are connected to the crankcase 29.

The engine 27 is fixed to the vehicle body frame 2. The engine 27 does not swing relative to the vehicle body frame 2.

The right bracket 15R and the left bracket 15L support the pivot shaft 41 described above.

The vehicle body frame 2 is not located in front of the engine 27 in the side view of the vehicle.

Fig. 6 schematically shows a region J. The region J is a space in front of the engine 27. The region J overlaps the engine 27 in the front view of the vehicle. The vehicle body frame 2 is not located in the region J. The vehicle body frame 2 is entirely located in a space other than the region J.

### 3. Construction of engine 27

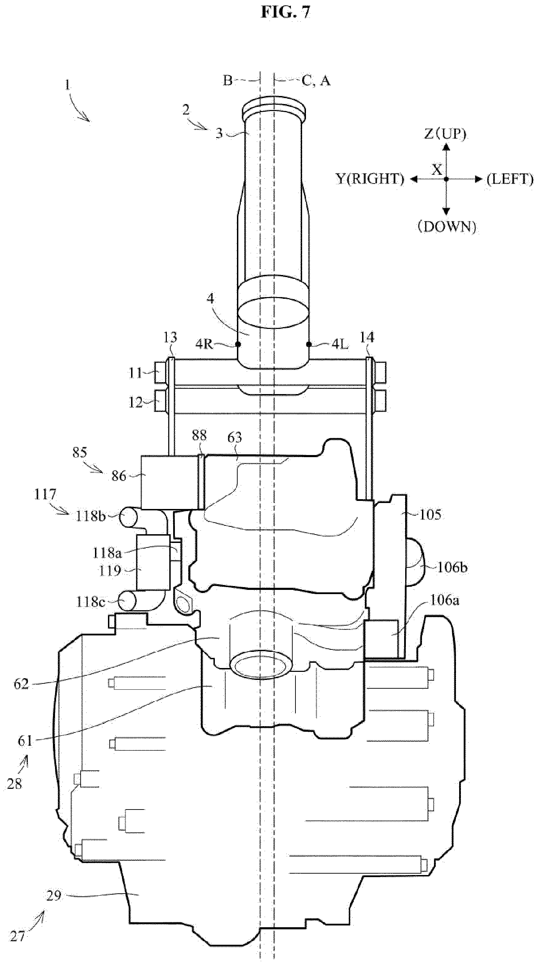

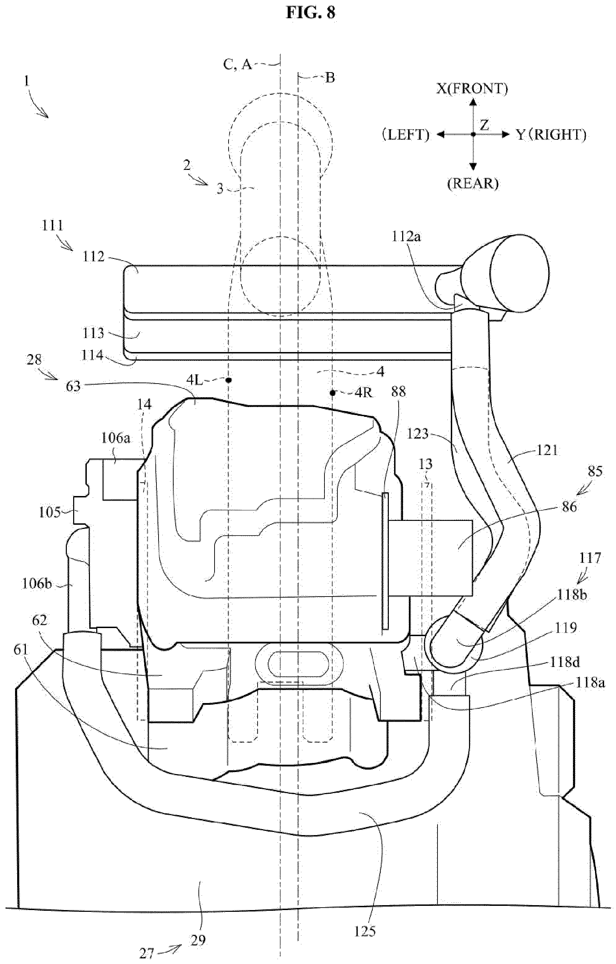

Fig. 7 is a front view of the engine 27. Fig. 8 is a plan view of the engine 27. The cylinder axis B is not positioned on the vehicle center plane C. The cylinder axis B is located at a position shifted rightward of the vehicle center plane C.

The cylinder axis B is located more rightward than the central axis A.

The cylinder unit 28 includes a cylinder member 61, a cylinder head 62, and a head cover 63. The cylinder head 62 is provided above the cylinder member 61. The head cover 63 is provided above the cylinder head 62.

The cylinder member 61 is connected to the crankcase 29.

The cylinder head 62 is connected to the cylinder member 61. The head cover 63 is connected to the cylinder head 62.

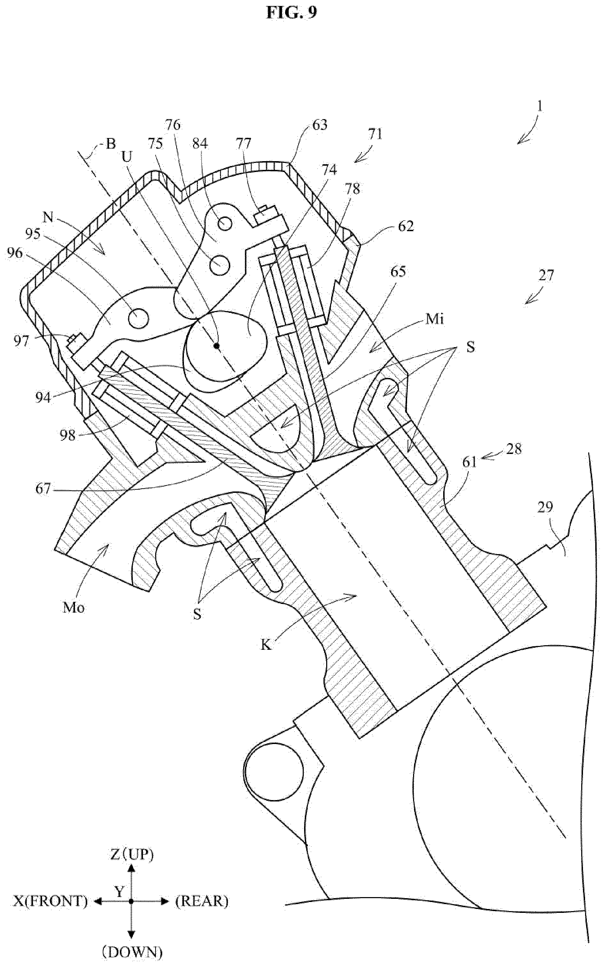

Fig. 9 is a left side view of the engine 27. Fig. 9 shows the cylinder unit 28 with a section perpendicular with respect to the transverse direction Y. The engine 27 is classified as a single-cylinder engine.

The cylinder unit 28 defines one cylinder bore K. The cylinder bore K is a space. The cylinder bore K is formed inside the cylinder unit 28. The cylinder bore K centers on the cylinder axis B. The cylinder bore K extends in a direction along the cylinder axis B.

The cylinder bore K is formed inside the cylinder member 61.

The cylinder bore K houses a piston not shown. The piston is connected to the crankshaft described above.

The cylinder unit 28 defines an intake passage Mi and an exhaust passage Mo. The intake passage Mi and the exhaust passage Mo are each a space. The intake passage Mi and the exhaust passage Mo are each formed inside the cylinder unit 28. The intake passage Mi and the exhaust passage Mo are each in communication with the cylinder bore K.

The intake passage Mi and the exhaust passage Mo are each formed inside the cylinder head 62.

The intake passage Mi and the exhaust passage Mo are each located above the cylinder bore K.

The intake passage Mi is located more rearward than the cylinder axis B.

The intake passage Mi is opened at a rear face of the cylinder unit 28. The intake passage Mi is connected in fluid communication with the air cleaner 37, described above, via an intake pipe not shown.

The exhaust passage Mo is located more forward than the cylinder axis B.

The exhaust passage Mo is opened at a front face of the cylinder unit 28. The exhaust passage Mo is connected in fluid communication with the exhaust pipe 30 described above.

The cylinder unit 28 defines a valve operating chamber N. The valve operating chamber N is a space. The valve operating chamber N is formed inside the cylinder unit 28.

The valve operating chamber N is located above the intake passage Mi and the exhaust passage Mo.

The valve operating chamber N is formed between the cylinder head 62 and the head cover 63.

The engine 27 includes two inlet valves 65. The inlet valves 65 are located inside the cylinder unit 28. The inlet valves 65 open and close the intake passage Mi.

The inlet valves 65 are located behind the cylinder axis B in the side view of the vehicle. The two inlet valves 65 are arranged in a line in the transverse direction Y.

Fig. 9 shows the inlet valves 65 in a closed position. When the inlet valves 65 are in the closed position, the inlet valves 65 close the intake passage Mi. When the inlet valves 65 close the intake passage Mi, the intake passage Mi is shut off from the cylinder bore K. When the inlet valves 65 move downward from the closed position, the inlet valves 65 open the intake passage Mi. When the inlet valves 65 open the intake passage Mi, the intake passage Mi is brought into communication with the cylinder bore K.

The engine 27 includes two exhaust valves 67. The exhaust valves 67 are located inside the cylinder unit 28. The exhaust valves 67 open and close the exhaust passage Mo.

The exhaust valves 67 are located more forward than the cylinder axis B. The two exhaust valves 67 are arranged in a line in the transverse direction Y.

Fig. 9 shows the exhaust valves 67 in a closed position. When the exhaust valves 67 are in the closed position, the exhaust valves 67 close the exhaust passage Mo. When the exhaust valves 67 move downward from the closed position, the exhaust valves 67 open the exhaust passage Mo.

The engine 27 includes a variable valve operating mechanism 71. In the present specification, a mechanism configured to actuate the valves (i.e., inlet valves 65 and exhaust valves 67) and a mechanism configured to change opening and closing conditions of the valves (i.e., at least either inlet valves 65 or exhaust valves 67) are totally referred to as a variable valve operating mechanism 71. The mechanism configured to actuate the valves is classified as a single overhead camshaft (SOHC) type, for example. Accordingly, the mechanism configured to change the opening and closing conditions of the valves is applied to the SOHC. The mechanism configured to change the opening and closing conditions of the valves is classified as a cam-switching type. The opening and closing conditions of the valves include at least either opening and closing time of the valves or lift amount of the valves.

The variable valve operating mechanism 71 actuates the inlet valves 65 and the exhaust valves 67. The variable valve operating mechanism 71 opens and closes the inlet valves 65 and the exhaust valves 67. The variable valve operating mechanism 71 is configured to be able to change the opening and closing conditions of the inlet valves 65.

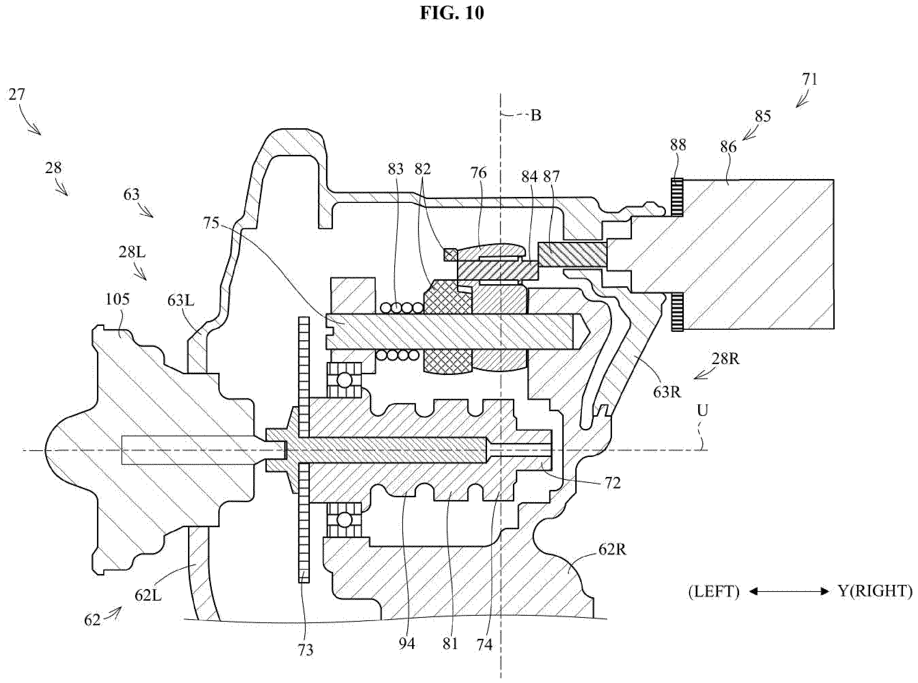

Fig. 10 is a sectional view of the cylinder unit 28. Fig. 10 shows the cylinder unit 28 with a section parallel to the transverse direction Y. The variable valve operating mechanism 71 includes a cam shaft 72 and a sprocket 73. The cam shaft 72 is supported by the cylinder unit 28 (e.g., cylinder head 62). The cam shaft 72 has a central axis U passing through the center thereof. The central axis U is parallel to the transverse direction Y. The cam shaft 72 is rotatable about the central axis U relative to the cylinder unit 28. The sprocket 73 is attached to the cam shaft 72. The sprocket 73 is connected to a cam chain not shown. The cam chain is connected to the crankshaft described above. The cam chain transmits rotational power of the crankshaft to the cam shaft 72. The cam shaft 72 rotates about the central axis U by the power transmitted from the cam chain.

The variable valve operating mechanism 71 includes a first inlet cam 74, an inlet rocker shaft 75, and a first inlet rocker arm 76. The first inlet cam 74 is fixed to the cam shaft 72. The first inlet cam 74 rotates integrally with the cam shaft 72. The first inlet cam 74 rotates about the central axis U. The first inlet cam 74 has one hill and one valley. The hill is also referred to as a lobe. The valley is also referred to as a base circle. A distance between the hill and the central axis U is larger than a distance between the valley and the central axis U. The hill and valley of the first inlet cam 74 defines a cam profile of the first inlet cam 74. The inlet rocker shaft 75 is supported by the cylinder unit 28 (e.g., cylinder head 62). The inlet rocker shaft 75 extends in a direction parallel to the central axis U. The first inlet rocker arm 76 is supported by the inlet rocker shaft 75. The first inlet rocker arm 76 is swingable about the inlet rocker shaft 75. The first inlet rocker arm 76 is contactable with the first inlet cam 74.

Reference is made to Fig. 9. The variable valve operating mechanism 71 includes two inlet pressing members 77. The two inlet pressing members 77 are arranged in a line in the transverse direction Y. The inlet pressing members 77 are, for example, adjuster screws. The inlet pressing members 77 are supported by the first inlet rocker arm 76. The inlet pressing members 77 are swingable about the inlet rocker shaft 75. The inlet pressing members 77 each contact the inlet valves 65, respectively. The inlet pressing members 77 contact upper ends (also referred to as stem ends) of the inlet valves 65.

The variable valve operating mechanism 71 includes valve springs 78. The valve springs 78 are attached to the inlet valves 65. The valve springs 78 apply force to the inlet valves 65 to move the inlet valves 65 into the closed position. The power for moving the inlet valves 65 into the closed position is, for example, upward power.

When the first inlet rocker arm 76 swings along with the first inlet cam 74, the inlet pressing member 77 also swings along with the first inlet cam 74. When the inlet pressing member 77 swings, the inlet valves 65 open and close the intake passage Mi.

Specifically, when the first inlet rocker arm 76 moves up from the valley of the first inlet cam 74 to the hill of the first inlet cam 74, the inlet pressing member 77 moves downward. The inlet pressing member 77 presses the inlet valves 65 downward. The inlet valves 65 move downward against the power of the valve springs 78. The inlet valves 65 open the intake passage Mi. When the first inlet rocker arm 76 moves down from the hill of the first inlet cam 74 to the valley of the first inlet cam 74, the inlet pressing member 77 moves upward. The inlet valves 65 move upward in response to the power of the valve springs 78. When the inlet valves 65 are in the closed position, the inlet valves 65 shut off the intake passage Mi.

When inlet pressing member 77 swings along with the first inlet cam 74, the inlet valves 65 open and close the intake passage Mi with a first opening and closing condition. The first opening and closing condition is determined by the cam profile of the first inlet cam 74.

Reference is made to Fig. 10. The variable valve operating mechanism 71 includes a second inlet cam 81, a second inlet rocker arm 82, and an arm biasing member 83. The second inlet cam 81 is fixed to the cam shaft 72. The second inlet cam 81 rotates integrally with the cam shaft 72. The second inlet cam 81 rotates about the central axis U. The second inlet cam 81 has a hill not shown and a valley not shown. The hill and valley of the second inlet cam 81 define a cam profile of the second inlet cam 81. The cam profile of the second inlet cam 81 differs from the cam profile of the first inlet cam 74. The second inlet rocker arm 82 is supported by the inlet rocker shaft 75. The first inlet rocker arm 76 and the second inlet rocker arm 82 are arranged in a line in the transverse direction Y. The second inlet rocker arm 82 is swingable about the inlet rocker shaft 75. The second inlet rocker arm 82 is contactable with the second inlet cam 81. The arm biasing member 83 applies force to the second inlet rocker arm 82 to press the second inlet rocker arm 82 against the second inlet cam 81. Here, the force to press the second inlet rocker arm 82 against the second inlet cam 81 corresponds to a force of rotating the second inlet rocker arm 82 in one direction about the inlet rocker shaft 75. The arm biasing member 83 is a coil spring, for example. The arm biasing member 83 keeps the second inlet rocker arm 82 in contact with the second inlet cam 81. The second inlet rocker arm 82 swings in response to the second inlet cam 81.

The variable valve operating mechanism 71 includes a connecting pin 84. The connecting pin 84 couples and decouples the first inlet rocker arm 76 to and from the second inlet rocker arm 82.

When the connecting pin 84 decouples the first inlet rocker arm 76 from the second inlet rocker arm 82, the first inlet rocker arm 76 is separated from the second inlet rocker arm 82. When the first inlet rocker arm 76 is separated from the second inlet rocker arm 82, the first inlet rocker arm 76 swings in response to the first inlet cam 74. Accordingly, when the connecting pin 84 decouples the first inlet rocker arm 76 from the second inlet rocker arm 82, the inlet pressing member 77 swings in response to the first inlet cam 74 and the inlet valves 65 open and close with the first opening and closing condition.

When the connecting pin 84 couples the first inlet rocker arm 76 to the second inlet rocker arm 82, the first inlet rocker arm 76 swings integrally with the second inlet rocker arm 82. When the first inlet rocker arm 76 swings integrally with the second inlet rocker arm 82, the first inlet rocker arm 76 swings in response to the second inlet cam 81. Accordingly, when the connecting pin 84 couples the first inlet rocker arm 76 to the second inlet rocker arm 82, the inlet pressing member 77 swings in response to the second inlet cam 81. When the inlet pressing member 77 swings along with the second inlet cam 81, the inlet valves 65 open and close the intake passage Mi with a second opening and closing condition. The second opening and closing condition is defined by the cam profile of the second inlet cam 81. The second opening and closing condition differs from the first opening and closing condition.

The cam profiles of the first inlet cam 74 and second inlet cam 81 are set, respectively, such that, when the first inlet rocker arm 76 and the second inlet rocker arm 82 are connected, the first inlet rocker arm 76 swings in response to the second inlet cam 81.

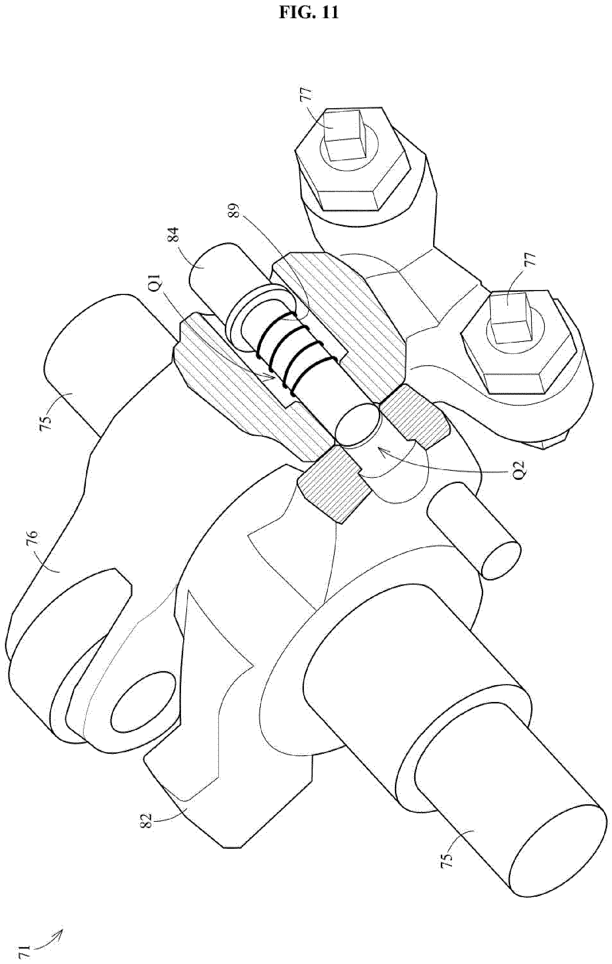

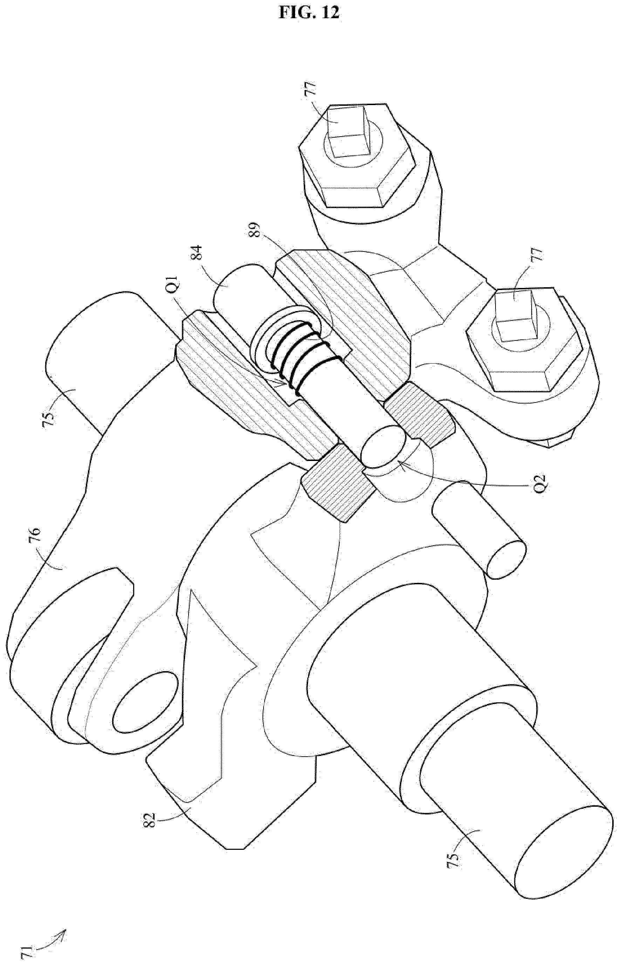

Figs. 11 and 12 are each a perspective view of the first inlet rocker arm 76, second inlet rocker arm 82, and inlet pressing member 77. The first inlet rocker arm 76 has a through hole Q1. The second inlet rocker arm 82 has a through hole Q2. The through holes Q1 and Q2 each extend in the transverse direction Y. The through holes Q1 and Q2 are arranged in a line in the transverse direction Y.

The connecting pin 84 is located in the through holes Q1 and Q2. With movement of the connecting pin 84 in the through holes Q1 and Q2 in the transverse direction Y, the connecting pin 84 moves between a release position and a connecting position.

Fig. 11 shows the connecting pin 84 in the release position. When the connecting pin 84 is in the release position, the connecting pin 84 has a part positioned in the through hole Q1 and has no part positioned in the through hole Q2. Accordingly, when the connecting pin 84 is in the release position, the connecting pin 84 does not connect the first inlet rocker arm 76 to the second inlet rocker arm 82. That is, when the connecting pin 84 is in the release position, the connecting pin 84 separates the first inlet rocker arm 76 from the second inlet rocker arm 82. Consequently, when the connecting pin 84 is in the release position, the inlet valves 65 open and close with the first opening and closing condition.

Fig. 12 shows the connecting pin 84 in the connecting position. When the connecting pin 84 is in the connecting position, the connecting pin 84 has a part positioned in the through hole Q1 and a part positioned in the through hole Q2. Accordingly, when the connecting pin 84 is in the connecting position, the connecting pin 84 connects the first inlet rocker arm 76 to the second inlet rocker arm 82. Consequently, when the connecting pin 84 is in the connecting position, the inlet valves 65 open and close with the second opening and closing condition.

Reference is made to Fig. 10. The variable valve operating mechanism 71 includes one actuator 85. The actuator 85 changes the opening and closing conditions of the inlet valves 65.

Specifically, the actuator 85 switches the position of the connecting pin 84 between the connecting position and the release position. Accordingly, the actuator 85 switches a cam for opening and closing the inlet valves 65 between the first inlet cam 74 and the second inlet cam 81. The actuator 85 switches the opening and closing condition of the inlet valves 65 between the first and second opening and closing conditions.

The actuator 85 includes one actuator body 86. The actuator body 86 is so-called a power source. The actuator body 86 generates power for changing the opening and closing conditions of the inlet valves 65. The actuator body 86 is an electromagnetic solenoid, for example. The actuator body 86 may or may not include a case, not shown, for housing the electromagnetic solenoid.

The actuator body 86 has a shape extending in the transverse direction Y, for example. The actuator body 86 has a cylindrical shape extending in the transverse direction Y, for example.

The actuator 85 includes a plunger 87. The plunger 87 is connected to the actuator body 86. The plunger 87 contacts the connecting pin 84 directly or indirectly.

The actuator body 86 drives the plunger 87. For example, the actuator body 86 pushes out the plunger 87 in the transverse direction Y relative to the actuator body 86. When the actuator body 86 drives the plunger 87, the plunger 87 moves the connecting pin 84 from the release position to the connecting position.

Reference is made to Figs. 11 and 12. The variable valve operating mechanism 71 includes a pin biasing member 89. The pin biasing member 89 is attached to the connecting pin 84. The pin biasing member 89 applies force in a direction from the connecting position toward the release position to the connecting pin 84. The pin biasing member 89 is a coil spring, for example.

When the actuator body 86 does not drive the plunger 87, the connecting pin 84 moves to the release position in response to the force of the pin biasing member 89. When the actuator body 86 drives the plunger 87, the connecting pin 84 moves to the connecting position against the force of the pin biasing member 89.

Reference is made to Figs. 9 and 10. The variable valve operating mechanism 71 includes an exhaust cam 94. The exhaust cam 94 is fixed to the cam shaft 72. The exhaust cam 94 rotates integrally with the cam shaft 72. The exhaust cam 94 rotates about the central axis U.

Reference is made to Fig. 9. The variable valve operating mechanism 71 includes an exhaust rocker shaft 95 and an exhaust rocker arm 96. The exhaust rocker shaft 95 is supported by the cylinder unit 28 (e.g., cylinder head 62). The exhaust rocker shaft 95 extends in a direction parallel to the central axis U. The exhaust rocker arm 96 is supported by the exhaust rocker shaft 95. The exhaust rocker arm 96 is swingable about the exhaust rocker shaft 95. The exhaust rocker arm 96 is contactable with the exhaust cam 94.

The variable valve operating mechanism 71 includes two exhaust pressing members 97. The two exhaust pressing members 97 are arranged in a line in the transverse direction Y. The exhaust pressing members 97 are, for example, adjuster screws. The exhaust pressing members 97 are supported by the exhaust rocker arm 96. The exhaust pressing members 97 are swingable about the exhaust rocker shaft 95. The exhaust pressing members 97 contact the exhaust valves 67, respectively.

The variable valve operating mechanism 71 includes valve springs 98. The valve springs 98 are attached to the exhaust valves 67. The valve springs 98 apply force to the exhaust valves 67 to move the exhaust valves 67 into the closed position.

The exhaust rocker arm 96 swings in response to the exhaust cam 94. When the exhaust rocker arm 96 swings, the exhaust pressing members 97 also swing along with exhaust cam 94. When the exhaust pressing members 97 swing, the exhaust pressing members 97 press the exhaust valves 67 downward cyclically. This causes the exhaust valves 67 to open and close the exhaust passage Mo.

Elements of the variable valve operating mechanism 71 other than the actuator 85 are located inside the cylinder unit 28. For example, the elements of the variable valve operating mechanism 71 other than the actuator 85 are located in the valve operating chamber N.

Reference is made to Fig. 10. The actuator 85 is relatively large. For example, the actuator 85 is larger than the elements of the variable valve operating mechanism 71 other than the actuator 85.

At least part of the actuator body 86 is located outside the cylinder unit 28. For example, the entire of the actuator body 86 is located outside the cylinder unit 28.

The plunger 87 is located so as to penetrate the cylinder unit 28. At least part of the plunger 87 is located inside the cylinder unit 28.

The actuator body 86 is attached to the cylinder unit 28. The actuator body 86 is attached to an external part of the cylinder unit 28.

The actuator body 86 is attached to an upper part of the cylinder unit 28. The actuator body 86 is attached to the head cover 63.

The cylinder unit 28 has a right wall 28R. The right wall 28R is entirely located rightward of the cylinder axis B. The right wall 28R is substantially perpendicular with respect to the transverse direction Y. The right wall 28R is shown on the right side view in Fig. 5, for example.

The cylinder member 61 includes a right wall not shown. The cylinder head 62 includes a right wall 62R. The head cover 63 includes a right wall 63R. The right wall 28R is formed by the right wall of the cylinder member 61, the right wall 62R and the right wall 63R.

Likewise, the cylinder unit 28 has a left wall 28L. The left wall 28L is entirely located leftward of the cylinder axis B. The left wall 28L is substantially perpendicular with respect to the transverse direction Y. The left wall 28L is shown on the left side view in Fig. 6, for example.

The cylinder member 61 includes a left wall not shown. The cylinder head 62 includes a left wall 62L. The head cover 63 includes a left wall 63L. The left wall 28L is formed by the left wall of the cylinder member 61, the left wall 62L and the left wall 63L.

The actuator body 86 is attached to the right wall 28R of the cylinder unit 28. The actuator body 86 extends rightward from the right wall 28R. The actuator body 86 protrudes rightward from the right wall 28R.

The actuator body 86 is attached to the right wall 63R of the head cover 63. The actuator body 86 extends rightward from the right wall 63R.

The actuator 85 includes a mounting element 88. The mounting element 88 is fixed to the actuator body 86. The mounting element 88 is located outside the cylinder unit 28. The mounting element 88 has a plate shape substantially perpendicular with respect to the transverse direction Y. The mounting element 88 is fastened to the cylinder unit 28. The mounting element 88 is fastened to the right wall 28R. The actuator body 86 is attached to the cylinder unit 28 with the mounting element 88.

The intake passage Mi is one example of the first passage in the present teaching. The inlet valve 65 is one example of the first valve in the present teaching. The actuator 85 is one example of the first actuator in the present teaching. The actuator body 86 is one example of the first actuator body in the present teaching.

### 4. Construction for cooling engine 27

Reference is made to Fig. 9. The engine 27 is classified as a water-cooled engine. The cylinder unit 28 defines a cooling water passage S. The cooling water passage S is a space. The cooling water passage S is formed inside the cylinder unit 28. The cooling water passage S is also called a water jacket.

The cooling water passage S is formed inside the cylinder member 61. The cooling water passage S is formed inside the cylinder head 23.

Reference is made to Fig. 6. The cylinder unit 28 has an inflow port 102. Fig. 6 shows the inflow port 102 with dotted lines. The inflow port 102 is in communication with the cooling water passage S.

The inflow port 102 is located in the left wall 28L of the cylinder unit 28. The inflow port 102 is opened leftward of the cylinder unit 28.

The inflow port 102 is located in the cylinder head 62.

The moped type vehicle 1 includes a water pump 105. The water pump 105 circulates cooling water forcibly.

The water pump 105 is connected in fluid communication with the inflow port 102.

Reference is made to Figs. 7 and 8. The water pump 105 has a discharge port 106a. The water pump 105 ejects cooling water from the discharge port 106a. The discharge port 106a is connected to the inflow port 102.

Reference is made to Figs. 6 to 8. The water pump 105 includes a suction port 106b. The water pump 105 sucks cooling water from the suction port 106b.

Reference is made to Fig. 10. The water pump 105 is attached to the cylinder unit 28.

The water pump 105 is attached to an upper part of the cylinder unit 28. The water pump 105 is attached to the cylinder head 62 and the head cover 63.

The water pump 105 is attached to the left wall 28L of the cylinder unit 28. The water pump 105 extends leftward from the left wall 28L. The water pump 105 protrudes leftward from the left wall 28L.

The water pump 105 is attached to the left wall 62L of the cylinder head 62 and the left wall 63L of the head cover 63. The water pump 105 extends leftward from the left wall 62L and the left wall 63L.

The water pump 105 is connected to the cam shaft 72 described above directly or indirectly. Rotation of the cam shaft 72 actuates the water pump 105.

Reference is made to Fig. 5. The moped type vehicle 1 includes a radiator 111. The radiator 111 cools the cooling water.

At least part of the radiator 111 is located more forward than the cylinder unit 28. For example, the entire of the radiator 111 is located more forward than the cylinder unit 28.

At least part of the radiator 111 is located higher than the cylinder unit 28.

The radiator 111 is entirely located more forward than the seat 31.

The radiator 111 is classified as a vertical-flow type (also called a down-flow type).

The radiator 111 includes an upper tank 112, a radiator core 113, and a lower tank 113. The radiator core 113 is provided below the upper tank 112. The lower tank 114 is provided below the radiator core 113.

The upper tank 112 includes an upper connection port 112a.

The lower tank 114 includes a lower connection port 114a.

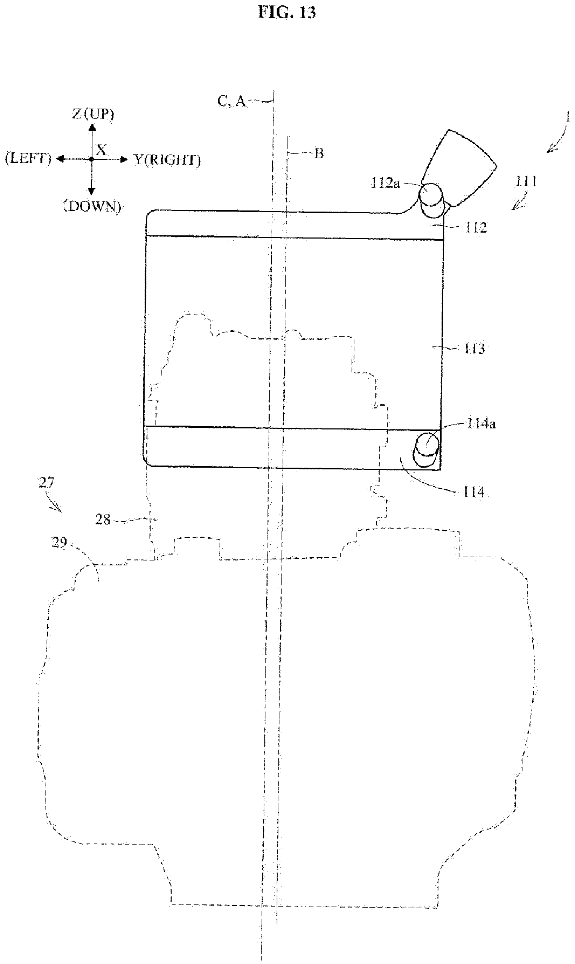

Fig. 13 is a rear view of a radiator 111. The radiator 111 extends in the transverse direction Y and up-down direction Z.

The radiator 111 extends from a position rightward of the vehicle center plane C to a position leftward of the vehicle center plane C.

Fig. 13 illustrates the cylinder unit 28 and the crankcase 29 with dotted lines. The radiator 111 extends to a position more rightward than the cylinder unit 28 in the rear view of the vehicle.

The upper tank 112 extends in the transverse direction Y. The lower tank 114 extends in the transverse direction Y.

The upper connection port 112a is opened rearward. The lower connection port 114a is opened rearward.

The radiator core 113 includes tubes, not shown, through which cooling water flows. The tubes are connected in fluid communication with the upper tank 112 and the lower tank 114. The tubes extend in up-down direction Z. When cooling water flows through the tubes, the cooling water radiates heat to outside air of the moped type vehicle 1.

Reference is made to Fig. 5. The cylinder unit 28 includes an outflow port 103. Fig. 5 shows the outflow port 103 with dotted lines. The outflow port 103 is in communication with the cooling water passage S.

The outflow port 103 is located in the right wall 28R of the cylinder unit 28. The outflow port 103 is opened rightward of the cylinder unit 28.

The outflow port 103 is located in the cylinder head 62.

The moped type vehicle 1 includes a thermostat 117. The thermostat 117 changes a circulation path of the cooling water.

The thermostat 117 is entirely located more rearward than the radiator 111.

The thermostat 117 is attached to the cylinder unit 28. The thermostat 117 is attached to the external of the cylinder unit 28.

The thermostat 117 is attached to an upper part of the cylinder unit 28. The thermostat 117 is attached to the cylinder head 62.

The thermostat 117 is attached to the right wall 28R of the cylinder unit 28. The thermostat 117 extends rightward from the right wall 28R.

The thermostat 117 is attached to the right wall 62R of the cylinder head 62. The thermostat 117 extends rightward from the right wall 62R.

The thermostat 117 is connected in fluid communication with the cylinder unit 28. For example, the thermostat 117 is connected in fluid communication with the outflow port 103.

The thermostat 117 is connected in fluid communication with the radiator 111. For example, the thermostat 117 is connected in fluid communication with the upper connection port 112a and the lower connection port 114a.

Reference is made to Fig. 8. The thermostat 117 is connected in fluid communication with the water pump 105. For example, the thermostat 117 is in fluid communication with the suction port 106b.

The thermostat 117 changes a circulation path of the cooling water between a first path and a second path. The first path passes the water pump 105, the cylinder unit 28 (cooling water passage S), and the thermostat 117 in this order, and thereafter returns from the thermostat 117 to the water pump 105. The first path does not contain the radiator 111. When the cooling water circulates through the first path, the thermostat 117 returns the cooling water from the cylinder unit 28 to the water pump 105 without through the radiator 111. The second path passes the water pump 105, the cylinder unit 28, the thermostat 117, and the radiator 111 in this order, and thereafter returns from the radiator 111 to the water pump 105 through the thermostat 117. When the cooling water circulates through the second path, the cooling water passes through the thermostat 117 twice. When the cooling water circulates through the second path, the thermostat 117 feeds the cooling water from the cylinder unit 28 to the radiator 111, and returns the cooling water from the radiator 111 to the water pump 105.

The thermostat 117 changes the circulation path of the cooling water in accordance with temperatures of the cooling water. For example, if the temperature of the cooling water is lower than the given value, the thermostat 117 changes the circulation path of the cooling water to the first path. If the temperature of the cooling water is equal to or higher than the given value, the thermostat 117 changes the circulation path of the cooling water to the second path.

The thermostat 117 include a first port 118a, a second port 118b, a third port 118c, and a fourth port 118d. The third port 118c is shown in Fig. 7. The first port 118a is connected in fluid communication with the outflow port 103 of the cylinder unit 28. The second port 118b is connected in fluid communication with the upper connection port 112a of the radiator 111. The third port 118c is connected in fluid communication with the lower connection port 114a of the radiator 111. The fourth port 118d is connected in fluid communication with the suction port 106b of the water pump 105.

The thermostat 117 includes a thermostat body 119. The first to fourth ports 118a to 118d are attached to the thermostat body 119.

The thermostat body 119 includes an inner passage through which the cooling water flows and an inner valve configured to open and close the inner passage, which illustration is omitted. The inner passage and the inner valve are located inside the thermostat body 119. The inner valve opens and closes an inner passage between the first port 118a and the second port 118b. The inner valve opens and closes an inner passage between the third port 118c and the fourth port 118d. The inner valve opens and closes an inner passage between the first port 118a and the fourth port 118d. When the cooling water circulates through the first path, the inner valve shuts off the first port 118a from the second port 118b, shuts off the fourth port 118d from the third port 118c, and brings the first port 118a into communication with the fourth port 118d. When the cooling water circulates through the second path, the inner valve shuts off the first port 118a from the fourth port 118d, brings the first port 118a into communication with the second port 118b, and brings the third port 118c into communication with the fourth port 118d.

Moreover, the thermostat body 119 includes a valve actuating element not shown. The valve actuating element is provided inside the thermostat body 119. The valve actuating element changes a volume of the valve actuating element in accordance with the temperature of the cooling water, for example. Changing the volume of the valve actuating element causes the valve actuating element to actuate the inner valve. The valve actuating element is, for example, wax.

The moped type vehicle 1 includes an upper pipe 121. The upper pipe 121 is connected to the thermostat 117 and the radiator 111. The upper pipe 121 is connected to the second port 118b and the upper connection port 112a.

The moped type vehicle 1 includes a lower pipe 123. The lower pipe 123 is connected to the thermostat 117 and the radiator 111. The lower pipe 123 is connected to the third port 118c and the lower connection port 114a.

The moped type vehicle 1 includes a return pipe 125. The return pipe 125 is connected to the thermostat 117 and the water pump 105. The return pipe 125 is connected to the fourth port 118d and the suction port 106b.

The return pipe 125 passes rearward of the cylinder unit 28, and extends from the thermostat 117 to the water pump 105.

### 5. Right cover 53R and left cover 53L

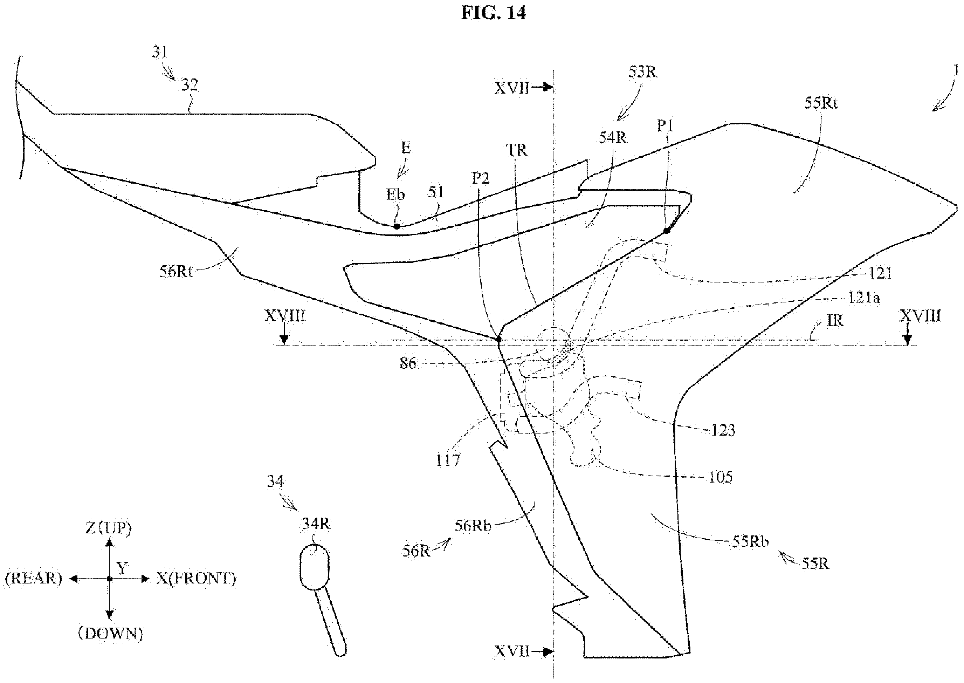

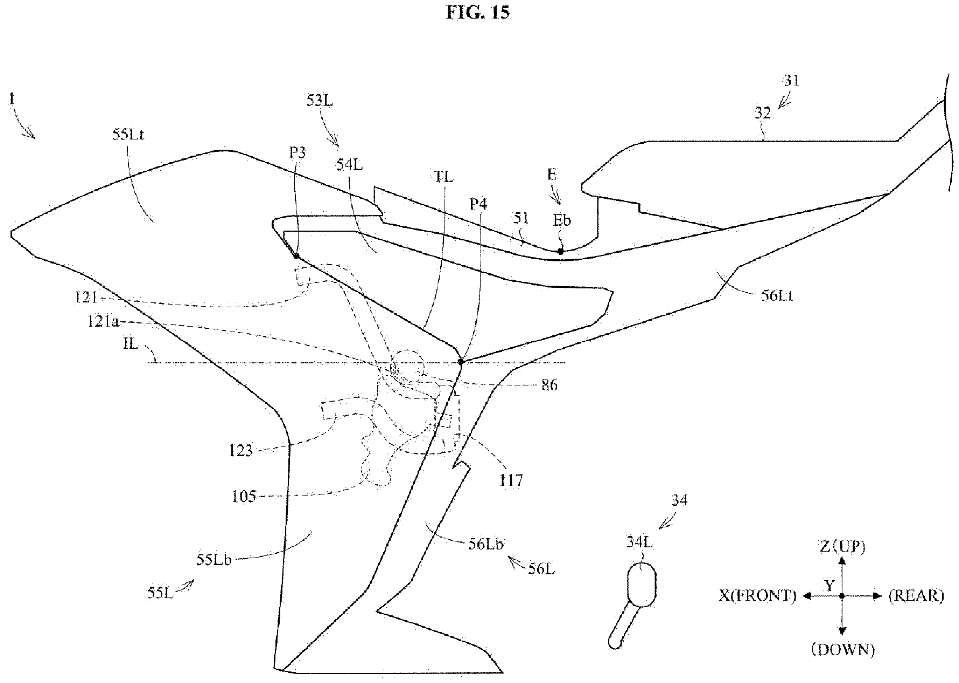

Fig. 14 is a right side view of the right cover 53R. Fig. 15 is a left side view of the left cover 53L. As described above, the right cover 53R includes the first right cover 54R and the second right cover 55R. The left cover 53L includes the first left cover 54L and the second left cover 55L.

The second right cover 55R is located in front of the first right cover 54R in the side view of the vehicle. The second left cover 55L is located in front of the first left cover 54L in the side view of the vehicle.

Moreover, the second right cover 55R is located below the first right cover 54R in the side view of the vehicle. The second left cover 55L is located below the first left cover 54L in the side view of the vehicle.

The first right cover 54R is separated from the second right cover 55R. The first left cover 54L is separated from the second left cover 55L.

The first right cover 54R is smaller than the second right cover 55R in the side view of the vehicle. The first left cover 54L is smaller than the second left cover 55L in the side view of the vehicle.

A length of the first right cover 54R in the up-down direction Z is smaller than a length of the second right cover 55R in the up-down direction Z. A length of the first right cover 54R in the longitudinal direction X is smaller than a length of the second right cover 55R in the longitudinal direction X. Likewise, a length of the first left cover 54L in the up-down direction Z is smaller than a length of the second left cover 55L in the up-down direction Z. A length of the first left cover 54L in the longitudinal direction X is smaller than a length of the second left cover 55L in the longitudinal direction X.

The first right cover 54R and the second right cover 55R form a right boundary TR between the first right cover 54R and the second right cover 55R in the side view of the vehicle. The right boundary TR corresponds to a section connecting a point P1 and a point P2 in Fig. 14, for example. Likewise, the first left cover 54L and the second left cover 55L form a left boundary TL between first left cover 54L and the second left cover 55L in the side view of the vehicle. The left boundary TL corresponds to a section connecting a point P3 and a point P4 in Fig. 15, for example.

The right boundary TR extends downward and rearward in the side view of the vehicle. The left boundary TL extends downward and rearward in the side view of the vehicle.

The first right cover 54R extends upward and rearward from the right boundary TR in the side view of the vehicle. The second right cover 55R extends downward and forward from the right boundary TR in the side view of the vehicle. The first left cover 54L extends upward and rearward from the left boundary TL in the side view of the vehicle. The second left cover 55L extends downward and forward from the left boundary TL in the side view of the vehicle.

As described above, the right cover 53R includes the third right cover 56R. The left cover 53L includes the third left cover 56L.

The third right cover 56R is located behind, above, and below the first right cover 54R in the side view of the vehicle. The third right cover 56R is located behind the second right cover 55R in the side view of the vehicle. The third left cover 56L is located behind, above, and below the first left cover 54L in the side view of the vehicle. The third left cover 56L is located behind the second left cover 55L in the side view of the vehicle.

The third right cover 56R is separated from the first right cover 54R. The third left cover 56L is separated from the first left cover 54L.

The first right cover 54R is smaller than the third right cover 56R in the side view of the vehicle. The first left cover 54L is smaller than the third left cover 56L in the side view of the vehicle.

The length of the first right cover 54R in the up-down direction Z is smaller than a length of the third right cover 56R in the up-down direction Z. The length of the first right cover 54R in the longitudinal direction X is smaller than a length of the third right cover 56R in the longitudinal direction X. Likewise, the length of the first left cover 54L in the up-down direction Z is smaller than a length of the third left cover 56L in the up-down direction Z. The length of the first left cover 54L in the longitudinal direction X is smaller than a length of the third left cover 56L in the longitudinal direction X.

Reference is made to Fig. 2. At least part of the second right cover 55R is located more rightward than the first right cover 54R. At least part of the second left cover 55L is located more leftward than the first left cover 54L.

At least part of the second right cover 55R is located more rightward than the third right cover 56R, which illustration is omitted. At least part of the second left cover 55L is located more leftward than the third left cover 56L.

Reference is made to Fig. 14. The second right cover 55R has an upper part 55Rt and a lower part 55Rb. The third right cover 56R has an upper part 56Rt and a lower part 56Rb.

Fig. 14 illustrates a horizontal imaginary line IR passing the point P2. The upper part 55Rt is a part of the second right cover 55R, for example, that is located higher than the imaginary line IR. The lower part 55Rb is a part of the second right cover 55R, for example, that is located lower than the imaginary line IR. The upper part 56Rt is a part of the third right cover 56R, for example, that is located higher than the imaginary line IR. The lower part 56Rb is a part of the third right cover 56R, for example, that is located lower than the imaginary line IR.

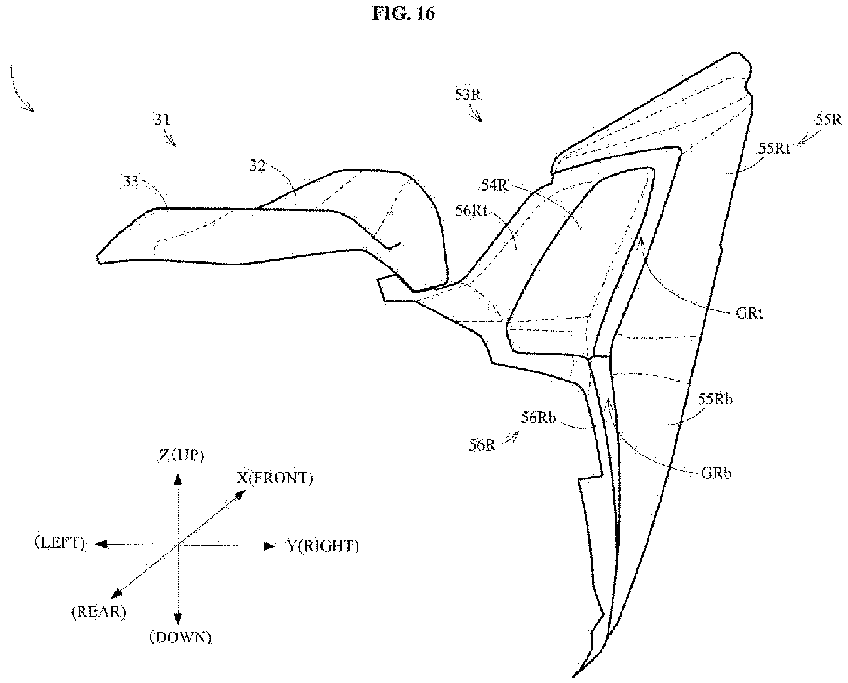

Fig. 16 is a perspective view of the right cover 53R seen from behind. The upper part 55Rt of the second right cover 55R is located apart rightward from the first right cover 54R. The upper part 55Rt and the first right cover 54R form an upper gap GRt between the upper part 55Rt and the first right cover 54R. The upper gap GRt has a length in the transverse direction Y. That is, the upper gap GRt separates the upper part 55Rt and the first right cover 54R in the transverse direction Y.

The lower part 55Rb of the second right cover 55R is located apart rightward from the lower part 56Rb of the third right cover 56R. The lower part 55Rb and the lower part 56Rb form a lower gap GRb between the lower part 55Rb and the lower part 56Rb. The lower gap GRb has a length in the transverse direction Y. That is, the lower gap GRb separates the lower part 55Rb and the lower part 56Rb in the transverse direction Y.

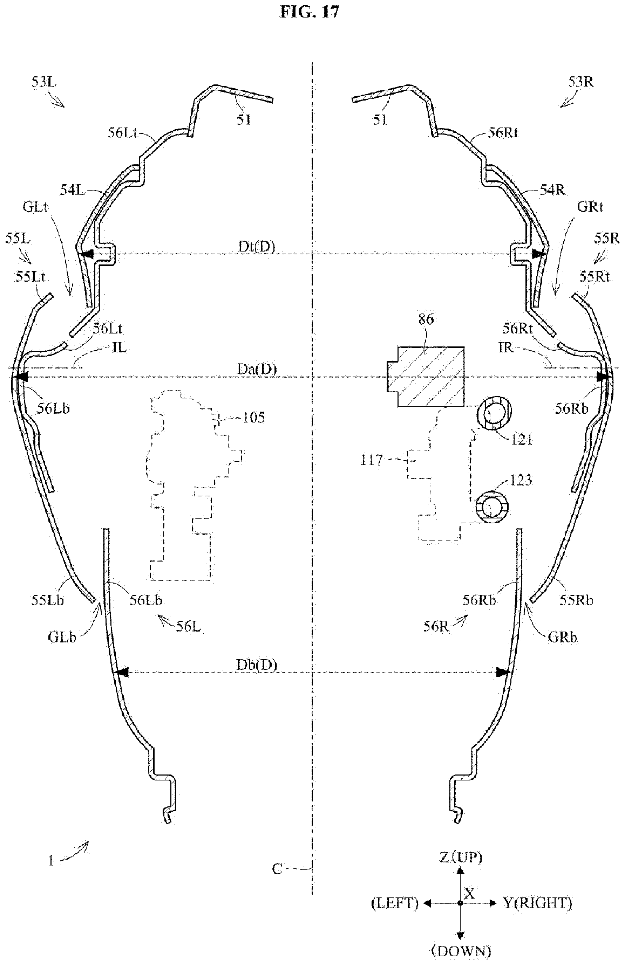

Fig. 17 is a sectional view taken on line XVII-XVII of Fig. 14. The section in Fig. 17 is referred to as a "first section". The first section corresponds to a section that passes the actuator body 86 and is perpendicular with respect to the longitudinal direction X.

The second right cover 55R protrudes more rightward than the first right cover 54R.

Specifically, the upper part 55Rt protrudes more rightward than the first right cover 54R.

The upper gap GRt corresponds to a step in the transverse direction Y that is positioned between the upper part 55Rt and the first right cover 54R.

Likewise, the second left cover 55L protrudes more leftward than the first left cover 54L.

The second left cover 55L has an upper part 55Lt and a lower part 55Lb. The third left cover 56L has an upper part 56Lt and a lower part 56Lb.

Fig. 17 illustrates a horizontal imaginary line IL. The imaginary line IL passes the point P4 in Fig. 15. The second left cover 55L is, for example, divided into the upper part 55Lt and the lower part 55Lb by the imaginary line IL. The third left cover 56L is, for example, divided into the upper part 56Lt and the lower part 56Lb by the imaginary line IL.

The upper part 55Lt of the second left cover 55L is located apart leftward from the first left cover 54L. The upper part 55Lt and the first left cover 54L form an upper gap GLt between the upper part 55Lt and the first left cover 54L. The upper gap GLt has a length in the transverse direction Y. That is, the upper gap GLt separates the upper part 55Lt and the first left cover 54L in the transverse direction Y.

The upper part 55Lt protrudes more leftward than the first left cover 54L.

The upper gap GLt corresponds to a step in the transverse direction Y that is positioned between the upper part 55Lt and the first left cover 54L.

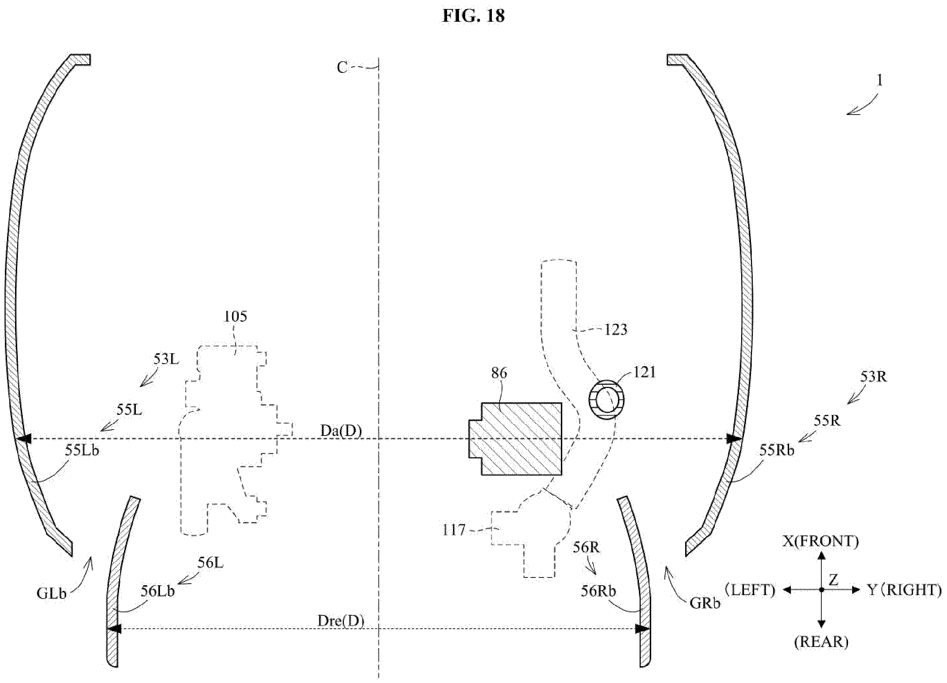

Reference is made to Figs. 17 and 18. Fig. 18 is a sectional view taken on line XVIII-XVIII of Fig. 14. The section in Fig. 18 is referred to as a "second section". The second section corresponds to a section that passes the actuator body 86 and is perpendicular with respect to the up-down direction Z.

In the first section and the second section, the second right cover 55R protrudes more rightward than the third right cover 56R.

Specifically, the lower part 55Rb protrudes more rightward than the lower part 56Rb.

The lower gap GRb corresponds to a step in the transverse direction Y between the lower part 55Rb and the lower part 56Rb.

Likewise, in the first section and the second section, the second left cover 55L protrudes more leftward than the third left cover 56L.

The lower part 55Lb of the second left cover 55L is located apart leftward from the lower part 56Lb of the third left cover 56L. The lower part 55Lb and the lower part 56Lb form a lower gap GLb between the lower part 55Lb and the lower part 56Lb. The lower gap GLb has a length in the transverse direction Y. That is, the lower gap GLb separates the lower part 55Lb and the lower part 56Lb in the transverse direction Y.

The lower part 55Lb protrudes more leftward than the lower part 56Lb.

The lower gap GLb corresponds to a step in the transverse direction Y between the lower part 55Lb and the lower part 56Lb.

### 6. Arrangement

Reference is made to Fig. 5. Description is made to arrangement of the actuator body 86, the thermostat 117, the upper pipe 121 and the lower pipe 123.

At least part of the actuator body 86 is located below the main frame 4 in the side view of the vehicle. For example, the entire of the actuator body 86 is located below the main frame 4 in the side view of the vehicle.

The actuator body 86 does not overlap the right hanger 13 in the side view of the vehicle.

The upper end 13a of the right hanger 13 is located more forward and higher than the actuator body 86. The lower end 13b of the right hanger 13 is located more rearward and lower than the actuator body 86. The arm 13c of the right hanger 13 passes a position more rearward than the actuator body 86 and extends from the upper end 13a to the lower end 13b.

At least part of the actuator body 86 is located more rearward than the cylinder axis B in the side view of the vehicle. For example, the entire of the actuator body 86 is located more rearward than the cylinder axis B in the side view of the vehicle.

At least part of the actuator body 86 overlaps the cylinder unit 28 in the side view of the vehicle. For example, the entire of the actuator body 86 overlaps the cylinder unit 28 in the side view of the vehicle.

At least part of the actuator body 86 overlaps the head cover 63 in the side view of the vehicle. For example, the entire of the actuator body 86 overlaps the head cover 63 in the side view of the vehicle.

The cylinder unit 28 has an upper end 28t. At least part of the actuator body 86 is located lower than the upper end 28t of the cylinder unit 28. For example, the entire of the actuator body 86 is located lower than the upper end 28t of the cylinder unit 28.

The actuator body 86 is entirely located more forward and lower than the seat 31. The actuator body 86 is entirely located more forward and higher than the foot bar 34.

Fig. 5 shows a height position PzA. The height position PzA is a height position of the first seating part 32.

More specifically, the first seating part 32 has a reference point 32s. The height position PzA is a coordinate of the reference point 32s in the up-down direction Z. The reference point 32s is positioned on the top face of the seat 31.

Reference is made to Fig. 2. The reference point 32s is the center of the first seating part 32 in the transverse direction Y, for example. The reference point 32s is positioned on the vehicle center plane C, for example.

The reference point 32s is the center of the first seating part 32 in the longitudinal direction X, for example. The front end 31f of the seat 31 corresponds to the front end of the first seating part 32. The first seating part 32 has a rear end 32re. The reference point 32s is positioned more rearward than the front end 31f and more forward than the rear end 32re. Here, a distance between the front end 31f and the reference point 32s in the longitudinal direction X is equal to a distance between the reference point 32s and the rear end 32re in the longitudinal direction X.

The rear end 32re of the first seating part 32 is the center of the seat 31 in the longitudinal direction X, for example. The seat 31 has a rear end 31 re. The rear end 32re of the first seating part 32 is positioned more rearward than the front end 31f of the seat 31 and more forward than the rear end 31 re of the seat 31. Here, a distance between the front end 31f and the rear end 32re in the longitudinal direction X is equal to a distance between the rear end 32re and the rear end 31 re in the longitudinal direction X.

Fig. 5 shows a height position PzB. The height position PzB is a height position of the foot bar 34.

More specifically, the foot bar 34 has a reference point 34s. The height position PzB is a coordinate of the reference point 34s in the up-down direction Z.

The reference point 34s is the upper end of the foot bar 34, for example.

Fig. 5 shows a first height position Pz1, a second height position Pz2, and a third height position Pz3. The first height position Pz1 is a height position of a midpoint in the up-down direction Z between the height position PzA and the height position PzB. The second height position Pz2 is a height position of a midpoint in the up-down direction Z between the height position PzA and the first height position Pz1. The third height position Pz3 is a height position of a midpoint in the up-down direction Z between the first height position Pz1 and the height position PzB.

More specifically, the first to third height positions Pz1 to Pz3 are each a coordinate in the up-down direction Z. The first to third height positions Pz1 to Pz3 are each positioned lower than the height position PzA and higher than the height position PzB. The second height position Pz2 is positioned higher than the first height position Pz1. The third height position Pz3 is positioned lower than the first height position Pz1. A difference between the height position PzA and the first height position Pz1 is equal to a difference between the first height position Pz1 and the height position PzB. A difference between the height position PzA and the second height position Pz2 is equal to a difference between the second height position Pz2 and the first height position Pz1. A difference between the first height position Pz1 and the third height position Pz3 is equal to a difference between the third height position Pz3 and the height position PzB.

The actuator body 86 extending in the transverse direction Y from the cylinder unit 28 is entirely located lower than the second height position Pz2 and higher than the third height position Pz3.

It is preferred that at least part of the actuator body 86 protruding in the transverse direction Y from the cylinder unit 28 is located higher than the first height position Pz1. In other words, it is preferred that the actuator body 86 overlaps a horizontal imaginary line Iz1 that passes the first height position Pz1 in the side view of the vehicle, or is entirely located higher than the imaginary line Iz1.

It is preferred that at least part of the actuator body 86 is located at a height position equal in level to the first height position Pz1. In other words, it is preferred that the actuator body 86 overlaps the imaginary line Iz1 in the side view of the vehicle.

At least part of the thermostat 117 is located below the main frame 4 in the side view of the vehicle. For example, the entire of the thermostat 117 is located below the main frame 4 in the side view of the vehicle.

The thermostat 117 does not overlap the right hanger 13 in the side view of the vehicle.

The thermostat 117 has an upper end 117t. The upper end 13a of the right hanger 13 is located more forward and higher than the upper end 117t. The lower end 13b of the right hanger 13 is located more rearward and lower than the upper end 117t. The arm 13c of the right hanger 13 passes a position more rearward than the upper end 117t and extends from the upper end 13a to the lower end 13b.

At least part of the thermostat 117 is located more rearward than the cylinder axis B in the side view of the vehicle. For example, the entire of the thermostat 117 is located more rearward than the cylinder axis B in the side view of the vehicle.

At least part of the thermostat 117 overlaps the cylinder unit 28 in the side view of the vehicle. For example, the entire of the thermostat 117 overlaps the cylinder unit 28 in the side view of the vehicle.

For example, the thermostat 117 overlaps the cylinder member 61 and the cylinder head 62 in the side view of the vehicle.

The thermostat 117 is entirely located more forward and lower than the seat 31. The thermostat 117 is entirely located more forward and higher than the foot bar 34.

At least part of the thermostat 117 is located more rearward and lower than the actuator body 86.

The thermostat 117 does not overlap the actuator body 86 in the side view of the vehicle.

At least part of the upper pipe 121 is located below the main frame 4 in the side view of the vehicle. For example, the entire of the upper pipe 121 is located below the main frame 4 in the side view of the vehicle.

The upper pipe 121 does not overlap the right hanger 13 in the side view of the vehicle.

The upper pipe 121 overlaps the cylinder head 62 and the head cover 63 in the side view of the vehicle.

The upper pipe 121 is entirely located more forward and lower than the seat 31. The upper pipe 121 is entirely located more forward and higher than the foot bar 34.

The upper pipe 121 extends from a position more rearward than the actuator body 86 to a position more forward than the actuator body 86.

The upper pipe 121 includes a first part 121a. The first part 121a overlaps the actuator body 86 in the side view of the vehicle.

In the present specification, a direction of the transverse direction Y approaching the vehicle center plane C is referred to as "inward in the transverse direction Y". A direction of the transverse direction Y away from the vehicle center plane C is referred to as "outward in the transverse direction Y".

The first part 121a is located more outward in the transverse direction Y than the actuator body 86. Specifically, the first part 121a is located rightward of the actuator body 86.

The upper pipe 121 is entirely located more forward than the thermostat 117.

The upper pipe 121 is entirely located more rearward than the radiator 111.

At least part of the lower pipe 123 is located below the main frame 4 in the side view of the vehicle. For example, the entire of the lower pipe 123 is located below the main frame 4 in the side view of the vehicle.

The lower pipe 123 does not overlap the right hanger 13 in the side view of the vehicle.

Part of the lower pipe 123 overlaps the cylinder unit 28 in the side view of the vehicle.

For example, the lower pipe 123 overlaps the cylinder head 62 and the head cover 63 in the side view of the vehicle.

The lower pipe 123 is entirely located more forward and lower than the seat 31. The lower pipe 123 is entirely located more forward and higher than the foot bar 34.

The lower pipe 123 extends from a position more rearward than the actuator body 86 to a position more forward than the actuator body 86.

The lower pipe 123 is entirely located lower than the actuator body 86. The lower pipe 123 does not overlap the actuator body 86 in the side view of the vehicle.

The lower pipe 123 is entirely located more forward than the thermostat 117.

The lower pipe 123 is entirely located more rearward than the radiator 111.

At least part of the lower pipe 123 is located below the upper pipe 121 in the side view of the vehicle. For example, the entire of the lower pipe 123 is located below the upper pipe 121 in the side view of the vehicle.

The lower pipe 123 does not overlap the upper pipe 121 in the side view of the vehicle.

Reference is made to Fig. 6. The following describes arrangement of the water pump 105.

At least part of the water pump 105 is located below the main frame 4 in the side view of the vehicle. For example, the entire of the water pump 105 is located below the main frame 4 in the side view of the vehicle.

The water pump 105 does not overlap the left hanger 14 in the side view of the vehicle.

The water pump 105 includes an upper end 105t. The upper end 14a of the left hanger 14 is located more forward and higher than the upper end 105t. The lower end 14b of the left hanger 14 is located more rearward and lower than the upper end 105t. The arm 14c of the left hanger 14 passes a position more rearward than the upper end 105t and extends from the upper end 14a to the lower end 14b.

The water pump 105 intersects with the cylinder axis B in the side view of the vehicle.

At least part of the water pump 105 overlaps the cylinder unit 28 in the side view of the vehicle. For example, the entire of the water pump 105 overlaps the cylinder unit 28 in the side view of the vehicle.

For example, the water pump 105 overlaps the cylinder head 62 and the head cover 63 in the side view of the vehicle.

The water pump 105 is entirely located more forward and lower than the seat 31. The water pump 105 is entirely located more forward and higher than the foot bar 34.

Reference is made to Figs. 7 and 8. Description is made to arrangement of the actuator body 86, the water pump 105, the thermostat 117, the upper pipe 121, and the lower pipe 123.

At least part of the actuator body 86 is located rightward of the vehicle center plane C. For example, the entire of the actuator body 86 is located rightward of the vehicle center plane C.

At least part of the actuator body 86 is located rightward of the cylinder axis B. For example, the entire of the actuator body 86 is located rightward of the cylinder axis B.

At least part of the thermostat 117 is located rightward of the vehicle center plane C. For example, the entire of the thermostat 117 is located rightward of the vehicle center plane C.

At least part of the thermostat 117 is located rightward of the cylinder axis B. For example, the entire of the thermostat 117 is located rightward of the cylinder axis B.

The upper pipe 121 is entirely located rightward of the vehicle center plane C.

The upper pipe 121 is entirely located rightward of the cylinder axis B.

The lower pipe 123 is entirely located rightward of the vehicle center plane C.

The lower pipe 123 is entirely located rightward of the cylinder axis B.

At least part of the water pump 105 is located leftward of the vehicle center plane C. For example, the entire of the water pump 105 is located leftward of the vehicle center plane C.

At least part of the water pump 105 is located leftward of the cylinder axis B. For example, the entire of the water pump 105 is located leftward of the cylinder axis B.

Reference is made to Fig. 8. At least part of the actuator body 86 is located at a position rightward of the main frame 4 in the plan view of the vehicle. For example, the entire of the actuator body 86 is located at a position rightward of the main frame 4 in the plan view of the vehicle.

At least part of the actuator body 86 is located more rightward than the right end 4R of the main frame 4. For example, the entire of the actuator body 86 is located more rightward than the right end 4R of the main frame 4.

The actuator body 86 overlaps the right hanger 13 in the plan view of the vehicle.

At least part of the actuator body 86 is located outward in the transverse direction Y of the right hanger 13 in the plan view of the vehicle. Specifically, at least part of the actuator body 86 is located rightward of the right hanger 13 in the plan view of the vehicle.

At least part of the thermostat 117 is located at a position rightward of the main frame 4 in the plan view of the vehicle. For example, the entire of the thermostat 117 is located at a position rightward of the main frame 4 in the plan view of the vehicle.

At least part of the thermostat 117 is located more rightward than the right end 4R of the main frame 4. For example, the entire of the thermostat 117 is located more rightward than the right end 4R of the main frame 4.

The thermostat 117 overlaps the right hanger 13 in the plan view of the vehicle.

At least part of the thermostat 117 is located outward in the transverse direction Y of the right hanger 13 in the plan view of the vehicle. Specifically, at least part of the thermostat 117 is located rightward of the right hanger 13 in the plan view of the vehicle.

The entire of the upper pipe 121 is located rightward of the main frame 4 in the plan view of the vehicle.

The entire of the upper pipe 121 is located more rightward than the right end 4R of the main frame 4.

The upper pipe 121 does not overlap the right hanger 13 in the plan view of the vehicle.

The upper pipe 121 is entirely located more outward in the transverse direction Y than the right hanger 13. Specifically, the upper pipe 121 is entirely located more rightward than the right hanger 13.

The lower pipe 123 is entirely located leftward of the main frame 4 in the plan view of the vehicle.

The lower pipe 123 is entirely located more rightward than the right end 4R of the main frame 4.

The lower pipe 123 does not overlap the right hanger 13 in the plan view of the vehicle.

The lower pipe 123 is entirely located more outward in the transverse direction Y than the right hanger 13. Specifically, the lower pipe 123 is entirely located more rightward than the right hanger 13.

At least part of the water pump 105 is located at a position leftward of the main frame 4 in the plan view of the vehicle. For example, the entire of the water pump 105 is located at a position leftward of the main frame 4 in the plan view of the vehicle.

At least part of the water pump 105 is located more leftward than the left end 4L of the main frame 4. For example, the entire of the water pump 105 is located more leftward than the left end 4L of the main frame 4.

The water pump 105 overlaps the left hanger 14 in the plan view of the vehicle.

At least part of the water pump 105 is located outward in the transverse direction Y of the left hanger 14 in the plan view of the vehicle. Specifically, at least part of the water pump 105 is located leftward of the left hanger 14 in the plan view of the vehicle.

Reference is made to Figs. 7 and 8. At least part of the actuator body 86 is located at a position rightward of the cylinder unit 28. For example, the entire of the actuator body 86 is located at a position rightward of the cylinder unit 28.

The actuator body 86 extends rightward from the cylinder unit 28. The actuator body 86 protrudes rightward from the cylinder unit 28.

At least part of the thermostat 117 is located at a position rightward of the cylinder unit 28. For example, the entire of the thermostat 117 is located at a position rightward of the cylinder unit 28.

The thermostat 117 extends rightward from the cylinder unit 28. The thermostat 117 protrudes rightward from the cylinder unit 28.

At least part of the upper pipe 121 is located at a position rightward of the cylinder unit 28.

At least part of the upper pipe 121 is located more outward in the transverse direction Y than the actuator body 86. Specifically, at least part of the upper pipe 121 is located more rightward than the actuator body 86.

At least part of the lower pipe 123 is located at a position rightward of the cylinder unit 28.

At least part of the lower pipe 123 is located more outward in the transverse direction Y than the actuator body 86. Specifically, at least part of the lower pipe 123 is located more rightward than the actuator body 86.

At least part of the water pump 105 is located at a position leftward of the cylinder unit 28. For example, the entire of the water pump 105 is located at a position leftward of the cylinder unit 28.

The water pump 105 extends leftward from the cylinder unit 28. The water pump 105 protrudes leftward from the cylinder unit 28.

Reference is made to Fig. 13. The following describes arrangement of the radiator 111.

The upper tank 112 extends from a position rightward of the vehicle center plane C to a position leftward of the vehicle center plane C.

The upper tank 112 extends to a position more rightward than the cylinder unit 28.

The upper connection port 112a is entirely located rightward of the vehicle center plane C.

At least part of the upper connection port 112a is located more rightward than the cylinder unit 28. For example, the entire of the upper connection port 112a is located more rightward than the cylinder unit 28.

The lower tank 114 extends from a position rightward of the vehicle center plane C to a position leftward of the vehicle center plane C.

The lower tank 114 extends to a position more rightward than the cylinder unit 28.

The lower connection port 114a is entirely located rightward of the vehicle center plane C.

At least part of the lower connection port 114a is located at a position more rightward than the cylinder unit 28. For example, the entire of the lower connection port 114a is located at a position more rightward than the cylinder unit 28.

The upper connection port 112a and the lower connection port 114a are arranged in a line in the up-down direction Z in the rear view of the vehicle.

Reference is made to Figs. 1, 14, and 15. Description is made to arrangement of the actuator body 86 relative to the right cover 53R and the left cover 53L, and the like.

Figs. 1, 14, and 15 each illustrate the actuator body 86 with dotted lines. The actuator body 86 is entirely located leftward of the right cover 53R and rightward of the left cover 53L. The actuator body 86 entirely overlaps the right cover 53R and the left cover 53L in the side view of the vehicle.

The actuator body 86 is entirely located more forward than the lower end Eb of the recessed space E.

The actuator body 86 is entirely located lower than the lower end Eb of the recessed space E.

The first right cover 54R and the first left cover 54L each pass a position above the actuator body 86 in the side view of the vehicle, and extend from a position more forward than the actuator body 86 to a position more rearward than the actuator body 86.

The right boundary TR and the left boundary TL each pass a position above the actuator body 86 in the side view of the vehicle, and extend from a position more forward than the actuator body 86 to a position more rearward than the actuator body 86.

The actuator body 86 does not overlap the first right cover 54R and the first left cover 54L in the side view of the vehicle.

At least part of the actuator body 86 overlaps the second right cover 55R and the second left cover 55L in the side view of the vehicle. For example, the entire of the actuator body 86 overlaps the second right cover 55R and the second left cover 55L in the side view of the vehicle.

Figs. 14 and 15 each illustrate the thermostat 117, the upper pipe 121, the lower pipe 123, and the water pump 105 with dotted lines. The thermostat 117 is entirely located leftward of the right cover 53R and rightward of the left cover 53L. The thermostat 117 entirely overlaps the right cover 53R and the left cover 53L in the side view of the vehicle.

The thermostat 117 is entirely located more forward than the lower end Eb of the recessed space E.

The thermostat 117 is entirely located lower than the lower end Eb of the recessed space E.

The first right cover 54R and the first left cover 54L each pass a position above the thermostat 117 in the side view of the vehicle, and extend from a position more forward than the thermostat 117 to a position more rearward than the thermostat 117.

The thermostat 117 does not overlap the first right cover 54R and the first left cover 54L in the side view of the vehicle.

At least part of the thermostat 117 overlaps the second right cover 55R and the second left cover 55L in the side view of the vehicle.

Moreover, the thermostat 117 overlaps the third right cover 56R and the third left cover 56L in the side view of the vehicle.

The upper pipe 121 is entirely located leftward of the right cover 53R and rightward of the left cover 53L. The upper pipe 121 entirely overlaps the right cover 53R and the left cover 53L in the side view of the vehicle.

The first part 121a is entirely located leftward of the right cover 53R and rightward of the left cover 53L. The first part 121a entirely overlaps the right cover 53R and the left cover 53L in the side view of the vehicle.

The upper pipe 121 is entirely located more forward than the lower end Eb of the recessed space E. The upper pipe 121 is entirely located lower than the lower end Eb of the recessed space E.

At least part of the upper pipe 121 overlaps the second right cover 55R and the second left cover 55L in the side view of the vehicle.

Moreover, the upper pipe 121 overlaps the first right cover 54R and the first left cover 54L in the side view of the vehicle.

At least part of the first part 121a overlaps the second right cover 55R and the second left cover 55L in the side view of the vehicle. For example, the entire of the first part 121a overlaps the second right cover 55R and the second left cover 55L in the side view of the vehicle.

The lower pipe 123 is entirely located leftward of the right cover 53R and rightward of the left cover 53L. The lower pipe 123 entirely overlaps the right cover 53R and the left cover 53L in the side view of the vehicle.

The lower pipe 123 is entirely located more forward than the lower end Eb of the recessed space E. The lower pipe 123 is entirely located lower than the lower end Eb of the recessed space E.

At least part of the lower pipe 123 overlaps the second right cover 55R and the second left cover 55L in the side view of the vehicle.

Moreover, the lower pipe 123 overlaps the third right cover 56R and the third left cover 56L in the side view of the vehicle.

The water pump 105 is entirely located leftward of the right cover 53R and rightward of the left cover 53L. The water pump 105 entirely overlaps the right cover 53R and the left cover 53L in the side view of the vehicle.

The water pump 105 is entirely located more forward than the lower end Eb of the recessed space E.

The water pump 105 is entirely located lower than the lower end Eb of the recessed space E.

The first right cover 54R and the first left cover 54L each pass a position above the water pump 105 in the side view of the vehicle, and extend from a position more forward than the water pump 105 to a position more rearward than the water pump 105.

The water pump 105 does not overlap the first right cover 54R and the first left cover 54L in the side view of the vehicle.

At least part of the water pump 105 overlaps the second right cover 55R and the second left cover 55L in the side view of the vehicle.

Moreover, the water pump 105 overlaps the third right cover 56R and the third left cover 56L in the side view of the vehicle.

Reference is made to Figs. 17 and 18. Fig. 17 illustrates the water pump 105 and the thermostat 117 with dotted lines. Fig. 18 illustrates the water pump 105, the thermostat 117, and the lower pipe 123 with dotted lines.

The actuator body 86, the thermostat 117, the upper pipe 121, the lower pipe 123, and the water pump 105 are each located leftward of the right cover 53R and rightward of the left cover 53L.

Description is made to a distance in the transverse direction Y between the right cover 53R and the left cover 53L.

Reference is made to Fig. 17. Fig. 17 shows a distance D. The distance D corresponds to a distance in the transverse direction Y between the right cover 53R and the left cover 53L. More specifically, the distance D corresponds to a distance between an intersection of an imaginary line parallel to the transverse direction Y and the right cover 53R and an intersection of the imaginary line and the left cover 53L.

In the first section, the distance D becomes smaller from the actuator body 86 toward downward.

Fig. 17 shows distances Da and Db as the distance D. The distance Da corresponds to the distance D at a position of the actuator body 86. The distance Db corresponds to the distance D at a position below the actuator body 86. The distance Db is smaller than the distance Da.

In the first section, the distance D becomes smaller from the actuator body 86 toward upward.

Fig. 17 shows a distance Dt as the distance D. The distance Dt corresponds to the distance D at a position above the actuator body 86. The distance Dt is smaller than the distance Da.

The distance Da corresponds to a distance in the transverse direction Y between the second right cover 55R and the second left cover 55L. The distance Db corresponds to a distance in the transverse direction Y between the third right cover 56R and the third left cover 56L. The distance Dt corresponds to a distance in the transverse direction Y between the first right cover 54R and the first left cover 54L.

Reference is made to Fig. 18. In the second section, the distance D becomes smaller from a position of the actuator body 86 toward rearward.

Fig. 18 shows distances Da and Dre as the distance D. As described above, the distance Da corresponds to the distance D at a position of the actuator body 86. The distance Dre corresponds to the distance D at a position behind the actuator body 86. The distance Dre is smaller than the distance Da.

The distance Dre corresponds to a distance in the transverse direction Y between the third right cover 56R and the third left cover 56L.

The right hanger 13 is one example of the first hanger in the present teaching. The upper pipe 121 is one example of the first pipe in the present teaching. The lower pipe 123 is one example of the second pipe in the present teaching.

### 7. Advantageous effects

The moped type vehicle 1 includes the vehicle body frame 2. The vehicle body frame 2 includes the head tube 3 and the main frame 4. The head tube 3 has the central axis A. The central axis A is positioned on the vehicle center plane C. The vehicle center plane C is perpendicular with respect to the transverse direction Y. The main frame 4 is connected to the head tube 3. The main frame 4 extends rearward from the head tube 3 in the plan view of the vehicle. The main frame 4 extends on the vehicle center plane C in the plan view of the vehicle. As described above, the head tube 3 and the main frame 4 form the vehicle body frame 2 of a backbone type.

The moped type vehicle 1 includes the steering device 21, the front wheel 25, and the engine 27. The steering device 21 is supported by the head tube 3. The front wheel 25 is supported by the steering device 21. The engine 27 is supported by the main frame 4.

The moped type vehicle 1 includes the seat 31 and the center cover 51. The seat 31 is located more rearward than the main frame 4. The center cover 51 is located above the main frame 4. The center cover 51 extends to the seat 31. The seat 31 and the center cover 51 form the recessed space E. The recessed space E is located in front of the seat 31 and above the center cover 51. Accordingly, the driver F can get on and off the moped type vehicle 1 with use of the recessed space E.

The moped type vehicle 1 includes the foot bar 34. The foot bar 34 is located lower than the seat 31. The foot bar 34 extends to a position more rightward than the seat 31 and to a position more leftward than the seat 31. Accordingly, the driver F can put the driver's feet F2d on the foot bar 34.

The moped type vehicle 1 includes the right cover 53R and the left cover 53L. The right cover 53R is located rightward of the main frame 4. The left cover 53L is located leftward of the main frame 4.

The engine 27 includes the cylinder unit 28. The cylinder unit 28 is located below the main frame 4. The cylinder unit 28 forms the cylinder bore K and the intake passage Mi. The cylinder bore K and the intake passage Mi are located inside the cylinder unit 28. The cylinder bore K centers on the cylinder axis B. The intake passage Mi is in communication with the cylinder bore K.

The engine 27 includes the inlet valves 65 and the variable valve operating mechanism 71. The inlet valves 65 are located inside the cylinder unit 28. The inlet valves 65 open and close the intake passage Mi. The variable valve operating mechanism 71 actuates the inlet valves 65. The variable valve operating mechanism 71 includes the actuator 85. The actuator 85 changes the opening and closing conditions of the inlet valves 65. The actuator 85 has the actuator body 86. The actuator body 86 is attached to the cylinder unit 28. The actuator body 86 generates power for changing the opening and closing conditions of the inlet valves 65.

The moped type vehicle 1 adopts first arrangement of the cylinder axis B. The first arrangement of the cylinder axis B is that the cylinder axis B passes a position above the front wheel 25 without overlapping the front wheel 25 in the side view of the vehicle. The first arrangement of the cylinder axis B can enlarge the angle of the cylinder axis B suitably. Here, the angle of the cylinder axis B corresponds to an angle formed between the cylinder axis B and the horizontal direction, for example.

However, with the first arrangement of the cylinder axis B, the cylinder unit 28 is located at a relatively high position. The actuator body 86 is also located at a relatively high position. Accordingly, the main frame 4 is also located at a relatively high position. The center cover 51 is also located at a relatively high position. The recessed space E is also located at a relatively high position. As a result, the driver F has to lift up the driver's legs F2 higher when the driver F gets on and off the moped type vehicle 1. This causes reduction in accessibility for the driver F. As described above, the first arrangement of the cylinder axis B reduces the accessibility of the moped type vehicle 1.

Here, the moped type vehicle 1 includes the first construction. The first construction is that the actuator body 86 extends rightward from the cylinder unit 28.

The actuator body 86 is located at a relatively high position even when the moped type vehicle 1 has the first construction. However, the actuator body 86 is not located at an excessively high position when the moped type vehicle 1 has the first construction. This can suppress a height position of the main frame 4. The first construction suppresses the height position of the main frame 4 from becoming excessively high. Consequently, reduction in accessibility of the moped type vehicle 1 can be suppressed. The first construction produces an advantage of suppressing the reduction in accessibility of the moped type vehicle 1.

On the other hand, the first construction produces a new drawback. The new drawback is that the comfortableness of the legs F2 of the driver F is lowered. As described in the Background Art, when the head tube 3 and the main frame 4 form the vehicle body frame of the backbone type, the comfortableness of the legs F2 depends on the length of the engine 27 in the transverse direction Y. The first construction increases the length of the engine 27 in the transverse direction Y. As length of the engine 27 in the transverse direction Y increases, a space where the driver F can place each of the legs F2 on the moped type vehicle 1 decreases. This causes reduction in comfortableness of the legs F2. Thus, the first construction produces a disadvantage of reduction in comfortableness of the legs F2.

For the moped type vehicle 1, the comfortableness of the legs F2 is equal to or more important than the accessibility of the moped type vehicle 1. Moreover, the comfortableness of the legs F2 appears when the driver F drives the moped type vehicle 1. Accordingly, the disadvantage of reduction in comfortableness of the legs F2 cancels the advantage of suppressing the reduction in accessibility of the moped type vehicle 1. That is, the disadvantage produced from the first construction cancels the advantage produced from the first construction. Consequently, the moped type vehicle 1 is hard to adopt the first construction. The first construction hardly seems to be applicable to the moped type vehicle 1.

Nevertheless, the moped type vehicle 1 has the first construction. This is because the first arrangement of the cylinder axis B and the first construction are useful for creating a new configuration. The new configuration includes, in addition to the first arrangement of the cylinder axis and the first construction, a second construction and a third construction.

The second construction is that at least part of the actuator body 86 is located at a position rightward of the main frame 4 in the plan view of the vehicle.

The third construction is that the actuator body 86 is entirely located leftward of the right cover 53R and rightward of the left cover 53L, and the actuator body 86 entirely overlaps the right cover 53R and the left cover 53L in the side view of the vehicle.

Combination of the first arrangement of the cylinder axis B and the first construction can effectively increase the length of the engine 27 in the transverse direction Y at a relatively high position. Specifically, with the combination of the first arrangement of the cylinder axis B and the first construction, the actuator body 86 extends rightward from the cylinder unit 28 at a relatively high position. Accordingly, the actuator body 86 can proactively increase the length of the engine 27 in the transverse direction Y at a relatively high position.

Moreover, combination of the first arrangement of the cylinder axis B and the first and second constructions can further effectively increase the length of the engine 27 in the transverse direction Y at a relatively high position.

Moreover, combination of the first arrangement of the cylinder axis B and the first, second, and third constructions can further effectively cause the right cover 53R to protrude rightward at a relatively high position and effectively cause the left cover 53L to protrude leftward at a relatively high position. Specifically, the actuator body 86 is effectively used to proactively bulge the right cover 53R and the left cover 53L outward in the transverse direction Y at a relatively high position. As a result, the distance D between the right cover 53R and the left cover 53L in the transverse direction Y can be made large effectively at a relatively high position.

Since the distance D is large at a relatively high position, the driver F can knee-grip the moped type vehicle 1 suitably. The moped type vehicle 1 can provide riding with knee-gripping to the driver F.

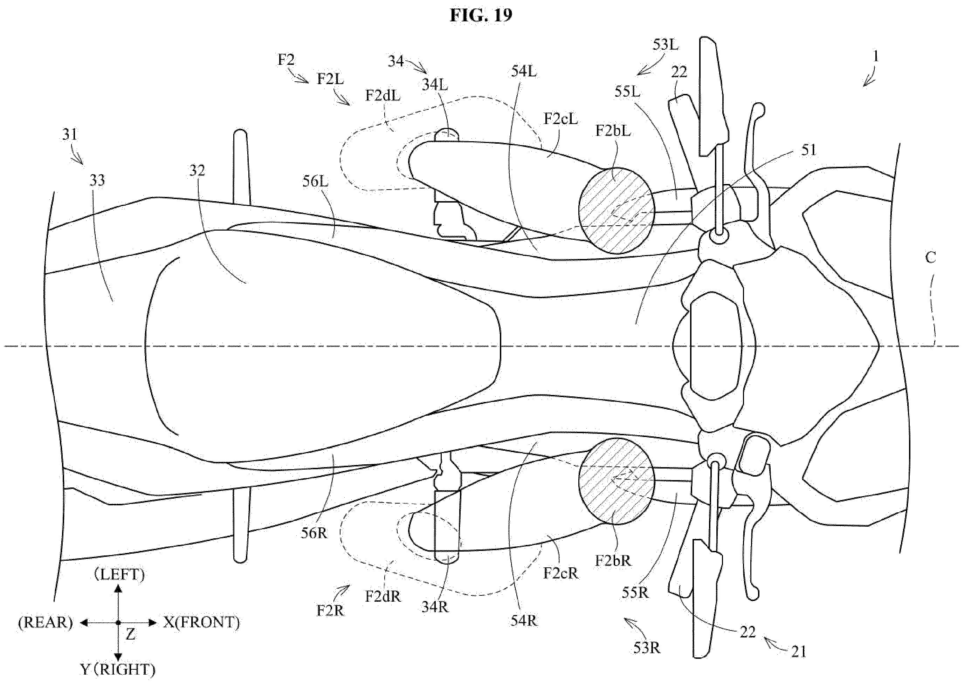

Fig. 19 is a plan view of the moped type vehicle 1 and the legs F2 of the driver F. Fig. 19 omits illustration of thighs F2a. Fig. 19 shows knees F2b, calves F2C, and feet F2d.

A right knee F2bR is located rightward of the right cover 53R. A left knee F2bL is located leftward of the left cover 53L. As described above, the distance D is large at a relatively high position. Accordingly, the driver F can contact the right knee F2bR to the right cover 53R easily. The driver F can contact the left knee F2bL to the left cover 53L easily. Moreover, the driver F can put the right cover 53R and the left cover 53L suitably between the right knee F2bR and the left knee F2bL. The driver F can hold the right cover 53R and the left cover 53L with the right knee F2bR and the left knee F2bL. That is, the driver F can knee-grip the moped type vehicle 1 suitably.

As described above, the new configuration skillfully uses the actuator body 86 located at a relatively high position by combining the first arrangement of the cylinder axis B with the first to third constructions. Thus, the new configuration produces a new technical value such that the moped type vehicle 1 allows the driver F to knee-grip the moped type vehicle 1.

It should be noted that the conventional moped type vehicle is not assumed to be knee-gripped by the driver. Consequently, the ability of the moped type vehicle 1 to allow the driver F to knee-grip the moped type vehicle 1 is equivalent to an unexpected technical value in the technical field of the moped type vehicle.

The driver F can also ride the moped type vehicle 1 without knee-gripping. The ability of the moped type vehicle 1 to allow the driver F to knee-grip the moped type vehicle 1 means that the number of riding positions that the driver F can take on the moped type vehicle 1 increases by one. Specifically, the ability of the moped type vehicle 1 to allow the driver F to knee-grip the moped type vehicle 1 means that the number of positions where the driver F can place each of the legs F2 on the moped type vehicle 1 increases by one.

The comfortableness of the legs F2 depends not only on the size of the space where the legs F2 can each be placed but also on the number of riding positions. Increase in number of riding positions improves the comfortableness of the legs F2. In fact, the first construction decreases the size of the space where the legs F2 can each be placed. On the other hand, all of the first arrangement of the cylinder axis B, and the first, second and third constructions increase the number of riding positions. Improvement in comfortableness of the legs F2 in terms of the number of riding positions can compensate reduction in comfortableness of the legs F2 in terms of the space where the legs F2 can each be placed. That is, the advantage produced from the combination of the first arrangement and the first, second and third constructions compensates the disadvantage produced from the first construction. As described above, combination of the first arrangement of the cylinder axis B and the first, second and third constructions can cancel the barrier that the moped type vehicle 1 is difficult to adopt the first construction.

As described above, the moped type vehicle 1 can enlarge the angle of the cylinder axis B suitably. Moreover, the driver F can also ride the moped type vehicle 1 with knee-gripping.

The seat 31 includes the first seating part 32. The driver F sits on the first seating part 32. The actuator body 86 extending in the transverse direction Y from the cylinder unit 28 is entirely located lower than the second height position Pz2 and higher than the third height position Pz3. Here, the second height position Pz2 is a height position of a midpoint in the up-down direction Z between the height position PzA of the first seating part 32 and the first height position Pz1. The third height position Pz3 is a height position of a midpoint in the up-down direction Z between the first height position Pz1 and the height position PzB of the foot bar 34. The first height position Pz1 is a height position of a midpoint in the up-down direction Z between the height position PzA of the first seating part 32 and the height position PzB of the foot bar 34. Accordingly, the actuator body 86 can be located at a relatively high position. Thus, use of the actuator body 86 can cause the right cover 53R and the left cover 53L to protrude further outward in the transverse direction Y at a higher position. As a result, the distance D can be made large at a higher position. Consequently, the driver F can knee-grip the right cover 53R and the left cover 53L more suitably.

At least part of the actuator body 86 protruding in the transverse direction Y from the cylinder unit 28 is located higher than the first height position Pz1. Accordingly, the actuator body 86 can be located at a higher position. Consequently, the driver F can knee-grip the right cover 53R and the left cover 53L more suitably.

In the first section shown in Fig. 17, the distance D becomes smaller from a position of the actuator body 86 toward downward. Accordingly, the distance Da is larger than the distance Db. Consequently, the driver F can knee-grip the right cover 53R and the left cover 53L more suitably. Moreover, the space where the legs F2 can each be placed becomes larger at a position lower than the actuator body 86. This can enhance the comfortableness of the legs F2 in terms of the space where the legs F2 can each be placed. For example, comfortableness of a lower portion of the leg F2 (e.g., calves F2c or feet F2d) can be enhanced.

In the first section shown in Fig. 17, the distance D becomes smaller from a position of the actuator body 86 toward upward. Accordingly, the distance Da is larger than the distance Db. Consequently, when the driver F puts the leg F2 (e.g., knees F2b or calves F2c) higher than the actuator body 86, the right cover 53R and the left cover 53L can restrict further downward movement of the leg F2. As described above, the right cover 53R and the left cover 53L can suitably assist in keeping the driver's legs F2 at a suitable position.

In the second section shown in Fig. 18, the distance D becomes smaller from a position of the actuator body 86 toward rearward. Accordingly, the distance Da is larger than the distance Dre. Consequently, the driver F can knee-grip the right cover 53R and the left cover 53L more suitably. Moreover, the space where the legs F2 can each be placed becomes larger at a position more rearward than the actuator body 86. This can enhance the comfortableness of the legs F2 in terms of the space where the legs F2 can each be placed. For example, comfortableness of an upper portion of the leg F2 (e.g., thighs F2a) can be enhanced suitably. Moreover, when the driver F puts the leg F2 (e.g., knees F2b or calves F2c) more rearward than the actuator body 86, the right cover 53R and the left cover 53L can restrict further forward movement of the leg F2. As described above, the right cover 53R and the left cover 53L can suitably assist in keeping the driver's legs F2 at a suitable position.

The right cover 53R includes the first right cover 54R and the second right cover 55R. The left cover 53L includes the first left cover 54L and the second left cover 55L. The actuator body 86 overlaps the second right cover 55R and the second left cover 55L in the side view of the vehicle. Accordingly, use of the actuator body 86 can cause the second right cover 55R and the second left cover 55L to protrude outward in the transverse direction Y effectively. As a result, a distance D between the second right cover 55R and the second left cover 55L in the transverse direction Y can be made large effectively. For example, the distance Da can be made larger effectively.

The second right cover 55R is located in front of the first right cover 54R in the side view of the vehicle. The second right cover 55R is located more rightward than the first right cover 54R. Consequently, when the driver F puts the right knee F2bR rightward of the first right cover 54R, the second right cover 55R can suitably restrict further forward movement of the right knee F2bR from the first right cover 54R. As described above, the right cover 53R can suitably assist in keeping the right knee F2bR at a suitable position. Likewise, the second left cover 55L is located in front of the first left cover 54L in the side view of the vehicle. The second left cover 55L is located more leftward than the first left cover 54L. Consequently, when the driver F puts the driver's left knee F2bL leftward of the first left cover 54L, the second left cover 55L can suitably restrict further forward movement of the left knee F2bL from the first left cover 54L. As described above, the left cover 53L can suitably assist in keeping the left knee F2bL at a suitable position.

The first right cover 54R is separated from the second right cover 55R. The first right cover 54R is smaller than the second right cover 55R in the side view of the vehicle. Consequently, the first right cover 54R is more difficult to bend than the second right cover 55R. Likewise, the first left cover 54L is separated from the second left cover 55L. The first left cover 54L is smaller than the second left cover 55L in the side view of the vehicle. Accordingly, the first left cover 54L is more difficult to bend than the second left cover 55L. Consequently, the driver F can knee-grip first right cover 54R and the first left cover 54L more suitably.

The first right cover 54R passes a position above the actuator body 86 in the side view of the vehicle, and extends from a position more forward than the actuator body 86 to a position more rearward than the actuator body 86. The second right cover 55R is located below the first right cover 54R in the side view of the vehicle. The second right cover 55R is located more rightward than the first right cover 54R. Consequently, when the driver F puts the right knee F2bR rightward of the first right cover 54R, the second right cover 55R can restrict further downward movement of the right knee F2bR from the first right cover 54R. As described above, the right cover 53R can suitably assist in keeping the right knee F2bR at a suitable position. Likewise, the first left cover 54L passes a position above the actuator body 86 in the side view of the vehicle, and extends from a position more forward than the actuator body 86 to a position more rearward than the actuator body 86. The second left cover 55L is located below the first left cover 54L in the side view of the vehicle. The second left cover 55L is located more leftward than the first left cover 54L. Consequently, when the driver F puts the driver's left knee F2bL leftward of the first left cover 54L, the second left cover 55L can restrict further downward movement of the left knee F2bL from the first left cover 54L. As described above, the left cover 53L can suitably assist in keeping the left knee F2bL at a suitable position.

The cylinder unit 28 includes the cylinder member 61, the cylinder head 62, and the head cover 63. The cylinder head 62 is provided above the cylinder member 61. The head cover 63 is provided above the cylinder head 62. The actuator body 86 overlaps the head cover 63 in the side view of the vehicle. Accordingly, the actuator body 86 can be located at a relatively high position. Thus, use of the actuator body 86 can cause the right cover 53R and the left cover 53L to protrude further outward in the transverse direction Y at a higher position. As a result, the distance D can be made large at a higher position. Consequently, the driver F can knee-grip the right cover 53R and the left cover 53L more suitably.

The actuator body 86 is entirely located at a position rightward of the vehicle center plane C. The cylinder axis B is located at a position shifted from the vehicle center plane C toward the actuator body 86. Specifically, the cylinder axis B is located at a position shifted rightward from the vehicle center plane C. Accordingly, the actuator body 86 can be located more rightward by a distance at which the cylinder axis B is shifted rightward from the vehicle center plane C. That is, the actuator body 86 can be located further outward in the transverse direction Y by a distance at which the cylinder axis B is shifted from the vehicle center plane C. Thus, use of the actuator body 86 can cause the right cover 53R and the left cover 53L to protrude further outward in the transverse direction Y. As a result, the distance D can be made larger. Consequently, the driver F can knee-grip the right cover 53R and the left cover 53L more suitably.

The moped type vehicle 1 includes the right hanger 13. The right hanger 13 is supported by the main frame 4. The right hanger 13 supports the cylinder unit 28. The right hanger 13 includes the upper end 13a, the lower end 13b, and the arm 13c. The upper end 13a is connected to the main frame 4. The lower end 13b is connected to the cylinder unit 28. Accordingly, the main frame 4 can support the engine 27 suitably with the right hanger 13.

The upper end 13a is located more forward and higher than the actuator body 86. The lower end 13b is located more rearward and lower than the actuator body 86. The arm 13c passes a position more rearward than the actuator body 86 and extends from the upper end 13a to the lower end 13b. This can suitably prevent interference between the arm 13c and the actuator body 86.

The right hanger 13 overlaps the actuator body 86 in the plan view of the vehicle. Also in this case, interference between the arm 13c and the actuator body 86 can be prevented suitably.

The moped type vehicle 1 includes the radiator 111 and the upper pipe 121. The radiator 111 is located more forward than the cylinder unit 28. The upper pipe 121 is connected in communication with the radiator 111. The upper pipe 121 includes the first part 121a. The first part 121a overlaps the actuator body 86 in the side view of the vehicle. The first part 121a is located more outward in the transverse direction Y than the actuator body 86. The first part 121a is entirely located leftward of the right cover 53R and rightward of the left cover 53L. The first part 121a entirely overlaps the right cover 53R and the left cover 53L in the side view of the vehicle. Accordingly, use of the first part 121a can cause the right cover 53R and the left cover 53L to protrude further outward in the transverse direction Y. As a result, the distance D can be made larger. Consequently, the driver F can knee-grip the right cover 53R and the left cover 53L more suitably.

The upper pipe 121 is located rightward of the cylinder unit 28. The upper pipe 121 is entirely located leftward of the right cover 53R and rightward of the left cover 53L. The upper pipe 121 entirely overlaps the right cover 53R and the left cover 53L in the side view of the vehicle. Accordingly, use of the upper pipe 121 can cause the right cover 53R and the left cover 53L to protrude outward in the transverse direction Y easily. As a result, the distance D can be made larger easily. Consequently, the driver F can knee-grip the right cover 53R and the left cover 53L more suitably.

The moped type vehicle 1 includes the thermostat 117. The thermostat 117 is in communication with the upper pipe 121. The thermostat 117 is located at a position rightward of the cylinder unit 28. The thermostat 117 is entirely located leftward of the right cover 53R and rightward of the left cover 53L. The thermostat 117 entirely overlaps the right cover 53R and the left cover 53L in the side view of the vehicle. Accordingly, use of the thermostat 117 allows the right cover 53R and the left cover 53L to protrude outward in the transverse direction Y easily. As a result, the distance D can be made larger easily. Consequently, the driver F can knee-grip the right cover 53R and the left cover 53L more suitably.

The thermostat 117 is attached to the cylinder unit 28. The thermostat 117 extends rightward from the cylinder unit 28. Accordingly, use of the thermostat 117 can cause the right cover 53R and the left cover 53L to protrude outward in the transverse direction Y effectively.

Both the actuator body 86 and the thermostat 117 are positioned rightward of the cylinder unit 28. In other words, both the actuator body 86 and the thermostat 117 are located in an area rightward of the cylinder unit 28. Both the actuator body 86 and the thermostat 117 can cause the right cover 53R and the left cover 53L to protrude outward in the transverse direction Y more easily. As a result, the distance D can be made larger more easily. Consequently, the driver F can knee-grip the right cover 53R and the left cover 53L more suitably.

The moped type vehicle 1 includes the lower pipe 123. The lower pipe 123 is connected in communication with the radiator 111 and the thermostat 117. The radiator 111 includes the upper tank 112, the radiator core 113, and the lower tank 114. The upper tank 112 extends in the transverse direction Y. The radiator core 113 is provided below the upper tank 112. The lower tank 114 is provided below the radiator core 113. The lower tank 114 extends in the transverse direction Y. The upper tank 112 includes an upper connection port 112a. The lower tank 114 includes a lower connection port 114a. The upper connection port 112a is connected to the upper pipe 121. The lower connection port 114a is connected to the lower pipe 123. The upper connection port 112a, the lower connection port 114a, and the thermostat 117 are positioned more rightward than the cylinder unit 28. In other words, the upper connection port 112a, the lower connection port 114a, and the thermostat 117 are all located in an area more rightward than the cylinder unit 28. Consequently, a distance between the upper connection port 112a and the thermostat 117 can be shortened suitably. Thus, a length of the upper pipe 121 can be shortened suitably. Likewise, a distance between the lower connection port 114a and the thermostat 117 can be shortened suitably. Thus, a length of the lower pipe 123 can be shortened suitably.

The lower pipe 123 is located rightward of the cylinder unit 28. The lower pipe 123 is entirely located leftward of the right cover 53R and rightward of the left cover 53L. The lower pipe 123 entirely overlaps the right cover 53R and the left cover 53L in the side view of the vehicle. Accordingly, use of the lower pipe 123 can cause the right cover 53R and the left cover 53L to protrude outward in the transverse direction Y easily. As a result, the distance D can be made larger easily. Consequently, the driver F can knee-grip the right cover 53R and the left cover 53L more suitably.

The moped type vehicle 1 includes the water pump 105. The water pump 105 is located at a position leftward of the cylinder unit 28. The water pump 105 is entirely located leftward of the right cover 53R and rightward of the left cover 53L. The water pump 105 entirely overlaps the right cover 53R and the left cover 53L in the side view of the vehicle. Accordingly, use of the water pump 105 allows the right cover 53R and the left cover 53L to protrude outward in the transverse direction Y easily. As a result, the distance D can be made larger easily. Consequently, the driver F can knee-grip the right cover 53R and the left cover 53L more suitably.

The water pump 105 is attached to the cylinder unit 28. The water pump 105 extends leftward from the cylinder unit 28. Accordingly, use of the water pump 105 can cause the right cover 53R and the left cover 53L to protrude outward in the transverse direction Y effectively.

Both the actuator body 86 and the thermostat 117 are positioned rightward of the cylinder unit 28. The water pump 105 is positioned leftward of the cylinder unit 28. In other word, both the actuator body 86 and the thermostat 117 are located in a first area rightward of the cylinder unit 28. The water pump 105 is located in a second area leftward of the cylinder unit 28. Accordingly, both the actuator body 86 and the thermostat 117 can cause the right cover 53R to protrude rightward more easily. Moreover, use of the water pump 105 can cause the left cover 53L to protrude leftward easily. As a result, the distance D can be made larger more easily. Consequently, the driver F can knee-grip the right cover 53R and the left cover 53L more suitably.

The moped type vehicle 1 includes the air cleaner 37. The air cleaner 37 is located below the seat 31 and behind the cylinder unit 28. Accordingly, the air cleaner 37 is not located more forward than the cylinder unit 28. As a result, a space (e.g., region J) more forward than the cylinder unit 28 can be effectively used. For example, the radiator 111 can be installed more forward than the cylinder unit 28 easily. For example, the radiator 111 can be installed in the region J.

The moped type vehicle 1 includes the fuel tank 39. The fuel tank 39 is located below the seat 31 and behind the air cleaner 37. Accordingly, the fuel tank 39 is not located above the main frame 4. Consequently, the seat 31 and the center cover 51 form the recessed space E suitably.

The present teaching is not limited to the foregoing embodiment, but may be modified as follows:
(1) In the embodiment described above, the actuator body 86 extends rightward from the cylinder unit 28. However, the present teaching is not limited to this. For example, the actuator body 86 may extend leftward from the cylinder unit 28. For example, the actuator body 86 may protrude leftward from the cylinder unit 28.

In the embodiment described above, the actuator body 86 is located at a position rightward of the cylinder unit 28. However, the present teaching is not limited to this. The actuator body 86 may be located at a position leftward of the cylinder unit 28. In the embodiment described above, at least part of the actuator body 86 is located at a position rightward of the main frame 4 in the plan view of the vehicle. However, the present teaching is not limited to this. At least part of the actuator body 86 may be located at a position leftward of the main frame 4 in the plan view of the vehicle.

In the present modification, it is preferred that the arm 14b of the left hanger 14 passes a position more rearward than the actuator body 86 and extends from the upper end 14a to the lower end 14b. In the present modification, the left hanger 14 is one example of the first hanger in the present teaching.

(2) In the embodiment described above, the actuator body 86 is entirely located at a position rightward of the vehicle center plane C. However, the present teaching is not limited to this. The actuator body 86 may entirely be located at a position leftward of the vehicle center plane C.

In this modification, it is preferred that the cylinder axis B is located at a position shifted leftward from the vehicle center plane C.

(3) In the embodiment described above, the thermostat 117 extends rightward from the cylinder unit 28. However, the present teaching is not limited to this. For example, the thermostat 117 may extend leftward from the cylinder unit 28. For example, the thermostat 117 may protrude leftward from the cylinder unit 28.

In the embodiment described above, the thermostat 117 is located at a position rightward of the cylinder unit 28. However, the present teaching is not limited to this. The thermostat 117 may be located at a position leftward of the cylinder unit 28.

(4) In the embodiment described above, the actuator body 86 and the thermostat 117 are each positioned rightward of the cylinder unit 28. However, the present teaching is not limited to this. The actuator body 86 and the thermostat 117 may each be positioned leftward of the cylinder unit 28.

(5) In the embodiment described above, the water pump 105 extends leftward from the cylinder unit 28. However, the present teaching is not limited to this. For example, the water pump 105 may extend rightward from the cylinder unit 28. For example, the water pump 105 may protrude rightward from the cylinder unit 28.

In the embodiment described above, the water pump 105 is located at a position rightward of the cylinder unit 28. However, the present teaching is not limited to this. For example, the water pump 105 may be located at a position leftward of the cylinder unit 28.

(6) In the embodiment described above, the actuator body 86 and the thermostat 117 are both positioned rightward of the cylinder unit 28, and the water pump 105 is positioned leftward of the cylinder unit 28. In the embodiment described above, the actuator body 86 and the thermostat 117 are both located in the first area rightward of the cylinder unit 28, and the water pump 105 is located in the second area leftward of the cylinder unit 28. However, the present teaching is not limited to this. The actuator body 86 and the thermostat 117 may be both positioned leftward of the cylinder unit 28, and the water pump 105 may be positioned rightward of the cylinder unit 28. In other words, the actuator body 86 and the thermostat 117 may be both located in the second area, and the water pump 105 may be located in the first area.

(7) In the embodiment described above, the actuator body 86 overlaps the right hanger 13 in the plan view of the vehicle. However, the present teaching is not limited to this. For example, the actuator body 86 may not overlap the right hanger 13 and the left hanger 14 in the plan view of the vehicle. For example, the entire of the actuator body 86 may be located either a position more rightward than the right hanger 13 or a position more leftward than the left hanger 14.

(8) In the embodiment described above, the actuator body 86 entirely overlaps the cylinder unit 28 in the side view of the vehicle. However, the present teaching is not limited to this. At least part of the actuator body 86 may not overlap the cylinder unit 28 in the side view of the vehicle.

(9) In the embodiment described above, the actuator body 86 is entirely located lower than the upper end 28t of the cylinder unit 28. However, the present teaching is not limited to this. At least part of the actuator body 86 may be located higher than the upper end 28t of the cylinder unit 28.

(10) In the embodiment described above, the actuator body 86 overlaps the head cover 63 in the side view of the vehicle. However, the present teaching is not limited to this. The actuator body 86 may overlap at least either the cylinder head 62 or the head cover 63 in the side view of the vehicle. Also with the present modification, the actuator body 86 can be located at a relatively high position.

(11) In the embodiment described above, the cylinder axis B is located at a position shifted from the vehicle center plane C toward the actuator body 86. However, the present teaching is not limited to this. For example, the cylinder axis B may be located on the vehicle center plane C.

(12) In the embodiment described above, the upper pipe 121 includes the first part 121a. However, the present teaching is not limited to this. The upper pipe 121 may not include the first part 121a.

(13) In the embodiment described above, the upper pipe 121 is one example of the first pipe in the present teaching. However, the present teaching is not limited to this. For example, the lower pipe 123 may be one example of the first pipe in the present teaching. In the present modification, the lower pipe 123 includes a first part. The first part of the lower pipe 123 overlaps the actuator body 86 in the side view of the vehicle. Here, the first part of the lower pipe 123 is referred to as a "first part 123a". The first part 123a is located more outward in the transverse direction Y than the actuator body 86. The first part 123a is entirely located leftward of the right cover 53R and rightward of the left cover 53L. The first part 123a overlaps the right cover 53R and the left cover 53L in the side view of the vehicle. According to the present modification, use of the first part 123a can cause the right cover 53R and the left cover 53L to protrude further outward in the transverse direction Y.

(14) In the embodiment described above, the upper connection port 112a, the lower connection port 114a, and the thermostat 117 are each positioned more rightward than the cylinder unit 28. In the embodiment described above, the upper connection port 112a, the lower connection port 114a, and the thermostat 117 are all located in an area more rightward than the cylinder unit 28. However, the present teaching is not limited to this. The upper connection port 112a, the lower connection port 114a, and the thermostat 117 may each be positioned more leftward than the cylinder unit 28. The upper connection port 112a, the lower connection port 114a, and the thermostat 117 may be all located in an area more leftward than the cylinder unit 28.

(15) In the embodiment described above, the right cover 53R includes the third right cover 56R. The left cover 53L includes the third left cover 56L. However, the present teaching is not limited to this. For example, the third right cover 56R is omittable. For example, the third left cover 56L is omittable.

(16) In the embodiment described above, the variable valve operating mechanism 71 includes one actuator (specifically, actuator 85). However, the present teaching is not limited to this. The number of the actuators provided in the variable valve operating mechanism 71 may be more than one. For example, the variable valve operating mechanism 71 may include a second actuator in addition to the actuator 85.

(17) In the embodiment described above, the variable valve operating mechanism 71 includes one actuator body (specifically, actuator body 86). However, the present teaching is not limited to this. The number of the actuator body provided in the variable valve operating mechanism 71 may be more than one. For example, the variable valve operating mechanism 71 may include a second actuator body in addition to the actuator body 86.

The following describes three modifications. The three modifications are common in the following features. That is, the moped type vehicle 1 includes a first actuator and a second actuator. The first actuator includes a first actuator body. The second actuator includes a second actuator body. The first actuator body and the second actuator body are each attached to the cylinder unit 28.

(17-1) The first actuator body extends rightward from the cylinder unit 28. The second actuator body extends leftward from the cylinder unit 28. The first actuator body is attached to the right wall 28R of the cylinder unit 28. The second actuator body is attached to the left wall 28L of the cylinder unit 28.

(17-2) The first actuator body and the second actuator body each extend rightward from the cylinder unit 28. The first actuator body and the second actuator body are each attached to the right wall 28R of the cylinder unit 28.

(17-3) The first actuator body and the second actuator body each extend leftward from the cylinder unit 28. The first actuator body and the second actuator body are each attached to the left wall 28L of the cylinder unit 28.

(18) In the embodiment described above, the actuator 85 changes the opening and closing conditions of the inlet valves 65. However, the present teaching is not limited to this. The actuator 85 may change the opening and closing conditions of at least either the inlet valves 65 or the exhaust valves 67. For example, the actuator 85 may change the opening and closing conditions of the exhaust valves 67. For example, the actuator 85 may change the opening and closing conditions of the inlet valves 65 and the opening and closing conditions of the exhaust valves 67. In the present modifications, the exhaust valve 67 is one example of the first valve in the present teaching. In the present modifications, the exhaust passage Mo is one example of the first passage in the present teaching.

For example, in the modifications of the above (17-1) to (17-3), the first actuator may change the opening and closing conditions of one type of the inlet valves 65 and the exhaust valves 67, and the second actuator may change the opening and closing conditions of the other type of the inlet valves 65 and the exhaust valves 67.

For example, in the modifications of the above (17-1) to (17-3), the first actuator and the second actuator may each change the opening and closing conditions of the inlet valves 65. For example, the first actuator may change the opening and closing conditions of one inlet valve 65, and the second actuator may change the opening and closing conditions of the other inlet valve 65.

For example, in the modifications of the above (17-1) to (17-3), the first actuator and the second actuator may each change the opening and closing conditions of the exhaust valves 67. For example, the first actuator may change the opening and closing conditions of one exhaust valve 67, and the second actuator may change the opening and closing conditions of the other exhaust valve 67.

When the opening and closing conditions of the exhaust valves 67 are changed, a construction to open and close the exhaust valves 67 may be changed as appropriate. For example, constructions of the first inlet cam 74, the second inlet cam 81, and the inlet pressing member 77 may be applied to the construction to open and close the exhaust valves 67.

(19) In the embodiment described above, the mechanism configured to actuate the valves in the variable valve operating mechanism 71 is of a single overhead camshaft (SOHC) type. However, the present teaching is not limited to this. For example, the mechanism configured to actuate the valves may be a double overhead camshaft (DOHC) type.

For example, in the modifications in the above (17-1) to (17-3), the mechanism configured to actuate the valves may be an SOHC. That is, the first actuator body and the second actuator body may be applied to the SOHC.

For example, in the modifications in the above (17-1) to (17-3), the mechanism configured to actuate the valves may be a DOHC. That is, the first actuator body and the second actuator body may be applied to the DOHC.

(20) In the embodiment described above, the actuator body 86 is an electromagnetic solenoid, for example. However, the present teaching is not limited to this. The actuator body 86 may include an electric or hydraulic drive mechanism. For example, the actuator body 86 may include an electric motor. Alternatively, the actuator body 86 may include an oil pump (hydraulic pump).

(21) In the embodiment described above, the two inlet pressing members 77 are supported by the first inlet rocker arm 76. However, the present teaching is not limited to this. The following exemplarily describes two modifications.

(21-1) One of the inlet pressing members 77 is supported by the first inlet rocker arm 76, and the other of the inlet pressing members 77 is supported by the second inlet rocker arm 82. Here, one of the inlet pressing members 77 supported by the first inlet rocker arm 76 is referred to as an inlet pressing member 77a, and the other of the inlet pressing members 77 supported by the second inlet rocker arm 82 is referred to as an inlet pressing member 77b. One of the inlet valves 65 contacting the inlet pressing member 77a is referred to as an inlet valve 65a, and the other of the inlet valves 65 contacting the inlet pressing member 77b is referred to as an inlet valve 65b. When the connecting pin 84 decouples the first inlet rocker arm 76 from the second inlet rocker arm 82, the inlet pressing member 77a swings in response to the first inlet cam 74, and the inlet pressing member 77b swings in response to the second inlet cam 81. Consequently, the inlet valve 65a opens and closes with the first opening and closing conditions, and inlet valve 65b opens and closes with the second opening and closing conditions. When the connecting pin 84 couples the first inlet rocker arm 76 to the second inlet rocker arm 82, the inlet pressing members 77a and 77b each swing in response to the second inlet cam 81. Consequently, the inlet valves 65a and 65b each open and close with the second opening and closing conditions.

In the present modification, the actuator 85 switches a cam for opening and closing the inlet valves 65a between the first inlet cam 74 and the second inlet cam 81. The actuator 85 switches the opening and closing condition of the inlet valves 65a between the first and second opening and closing conditions.

(21-2) The inlet pressing members 77 are attachable to and detachable from the first inlet rocker arm 76, and attachable to and detachable from the second inlet rocker arm 82. In the present modification, the variable valve operating mechanism 71 includes a connecting member instead of the connecting pin 84. The connecting member switches a state between a first connecting state and a second connecting state. In the first connecting state, the connecting member connects the inlet pressing members 77 to the first inlet rocker arm 76, and disconnects the inlet pressing members 77 from the second inlet rocker arm 82. In the first connecting state, the inlet pressing members 77 swing in response to the first inlet cam 74. Consequently, the inlet valves 65 open and close with the first opening and closing conditions in the first connecting state. In the second connecting state, the connecting member disconnects the inlet pressing members 77 from the first inlet rocker arm 76, and connects the inlet pressing members 77 to the second inlet rocker arm 82. In the second connecting state, the inlet pressing members 77 swing in response to the second inlet cam 81. Consequently, the inlet valves 65 open and close with the second opening and closing conditions in the second connecting state.

In the present modification, the actuator 85 switches the cam for opening and closing each of the inlet valves 65 between the first inlet cam 74 and the second inlet cam 81. The actuator 85 switches the opening and closing condition of each of the inlet valves 65 between the first and second opening and closing conditions.

(22) In the embodiment described above, the mechanism configured to change the opening and closing conditions of the valves in the variable valve operating mechanism 71 is classified as a cam-switching type. However, the present teaching is not limited to this. The mechanism configured to change the opening and closing conditions of the valves may be of a cam-phase type, for example. The mechanism configured to change the opening and closing conditions of the valves may be of a valve-switching type, for example. The following exemplarily describes two modifications.

(22-1) The mechanism configured to change the opening and closing conditions of the valves is classified as the cam-phase type. The actuator 85 advances/retards the cam shaft 72 with respect to the crankshaft, for example. The actuator 85 advances/retards the cam shaft 72 with respect to the sprocket 73, for example. The actuator 85 shifts a phase angle of the cam shaft 72, for example. Accordingly, the actuator 85 changes the opening and closing conditions of at least either the inlet valves 65 or the exhaust valves 67.

(22-2) The mechanism configured to change the opening and closing conditions of the valves is classified as the valve-switching type. The actuator 85 switches a state between a first state and a second state. In the first state, the two inlet valves 65 open and close, for example. That is, in the first state, the actuator 85 causes the two inlet valves 65 to open and close, for example. In the second state, one of the inlet valves 65 opens and closes whereas the other of the inlet valves 65 doesn't open and close, for example. That is, in the second state, the actuator 85 causes one of the inlet valves 65 to open and close, and causes the other of the inlet valves 65 not to open or close, for example. Here, the other of the inlet valves 65 is referred to as an inlet valve 65c. An inlet pressing member 77 pressing against the inlet valve 65c is referred to as an inlet pressing member 77c. The actuator 85 performs connection and disconnection between the inlet valve 65c and the inlet pressing member 77c, for example. In the first state, the actuator 85 connects the inlet valve 65c to the inlet pressing member 77c, for example. In the second state, the actuator 85 disconnects the inlet valve 65c from the inlet pressing member 77c, for example. Accordingly, the actuator 85 changes the opening and closing conditions of the inlet valve 65c.

(23) In the embodiment described above, one cylinder bore K is provided. However, the present teaching is not limited to this. The number of the cylinder bores K may be more than one. In the embodiment described above, the engine 27 is classified as a single-cylinder engine. However, the present teaching is not limited to this. The engine 27 may be classified as a multicylinder engine.

(24) In the embodiment described above, two inlet valves 65 are provided. However, the present teaching is not limited to this. The number of the inlet valves 65 may be one. The number of the inlet valves 65 may be more than two. Likewise, the number of the exhaust valves 67 may also be changed.

(25) In the embodiment described above, the main frame 4 does not extend to a position more rearward than the engine 27. However, the present teaching is not limited to this. For example, the main frame 4 may extend to a position more rearward than the engine 27.

(26) In the embodiment described above, the seat 31 includes the second seating part 33. However, the present teaching is not limited to this. The second seating part 33 may be omitted. The seat 31 may include only the first seating part 32.

In the present modification, the rear end 32re of the first seating part 32 may correspond to the rear end 31 re of the seat 31.

(27) In the embodiment described above, one front wheel 25 is provided. However, the present teaching is not limited to this. The number of the front wheels 25 may be two. In the embodiment described above, one rear wheel 44 is provided. The present teaching is not limited to this. The number of the rear wheels 44 may be two.

(28) The foregoing embodiment and each of the modified embodiments described in paragraphs (1) to (27) above may be further varied as appropriate by replacing or combining their constructions with the constructions of the other modified embodiments, without departing from the scope of the invention defined by the appended claims.

## Claims

1. A straddled type vehicle (1), comprising:
a head tube (3) having a central axis (A) that is positioned on a vehicle center plane (C) perpendicular with respect to a transverse direction (Y) of the straddled type vehicle (1);
a main frame (4) that is connected to the head tube (3) and extends rearward in longitudinal direction (X) of the straddled type vehicle (1) from the head tube (3) on the vehicle center plane (C) in plan view of the straddled type vehicle (1);
a steering device (21) that is supported by the head tube (3);
a front wheel (25) that is supported by the steering device (21);
an engine (27) that is supported by the main frame (4);
a seat (31) that is located more rearward in longitudinal direction (X) of the straddled type vehicle (1) than the main frame (4);
a center cover (51) that is located above the main frame (4) in up-down direction (Z) of the straddled type vehicle (1) and extends to the seat (31);
a foot bar (34) that is located lower than the seat (31) and extends to a position more rightward than the seat (31) and to a position more leftward than the seat (31);
a right cover (53R) that is located rightward of the main frame (4); and
a left cover (53L) that is located leftward of the main frame (4),
the seat (31) and the center cover (51) forming a recessed space (E) in front of the seat (31) in longitudinal direction (X) of the straddled type vehicle (1) and above the center cover (51) in up-down direction (Z) of the straddled type vehicle (1),
the engine (27) including:
a cylinder unit (28);
the cylinder unit (28) forming a cylinder bore (K) and a first passage (Mi) inside the cylinder unit (28),
the cylinder bore (K) centering on a cylinder axis (B),
the cylinder axis (B) passing a position above the front wheel (25) in up-down direction (Z) of the straddled type vehicle (1) without overlapping the front wheel (25) in side view of the straddled type vehicle (1),
a first valve (65) that is located inside the cylinder unit (28); and
a variable valve operating mechanism (71) configured to drive the first valve (65),
the first passage (Mi) being in communication with the cylinder bore (K) and
configured to open and close with the first valve (65),
the variable valve operating mechanism (71) including:
a first actuator (85) configured to change opening and closing conditions of the first valve (65),
the first actuator (85) including:
a first actuator body (86) that is attached to the cylinder unit (28) and is configured to generate power for changing the opening and closing conditions of the first valve (65), the first actuator body (86) extending either rightward or leftward from the cylinder unit (28) in transverse direction (Y) of the straddled type vehicle (1),
the first actuator body (86) being entirely located leftward of the right cover (53R) and rightward of the left cover (53L) in transverse direction (Y) of the straddled type vehicle (1), entirely located higher than the foot bar (34) and entirely located lower than the seat (31), and
the first actuator body (86) entirely overlapping the right cover (53R) and the left cover (53L) in the side view of the straddled type vehicle (1), **characterized in that**
the cylinder unit (28) is located below the main frame (4) in up-down direction (Z) of the straddled type vehicle (1);
at least part of the first actuator body (86) being positioned either rightward or leftward of the main frame (4) in transverse direction (Y) of the straddled type vehicle (1) and in the plan view of the straddled type vehicle (1), wherein
the first actuator body (86) is entirely located more forward than the seat (31), and the actuator body (86) is entirely located more forward than the foot bar (34).

2. The straddled type vehicle (1) according to claim 1, **characterized in that** the seat (31) includes:
a first seating part (32) configured for a driver (F) of the straddled type vehicle (1) to sit on, and wherein
under assumption that a height position of a midpoint in up-down direction (Z) of the straddled type vehicle (1) between a height position (PzA) of the first seating part (32) and a height position (PzB) of the foot bar (34) is a first height position (Pz1),
that a height position of a midpoint in up-down direction (Z) of the straddled type vehicle (1) between the height position (PzA) of the first seating part (32) and the first height position (Pz1) is a second height position (Pz2), and
that a height position of a midpoint in up-down direction (Z) of the straddled type vehicle (1) between the first height position (Pz1) and the height position (PzB) of the foot bar (34) is a third height position (Pz3),
the first actuator body (86) extends in transverse direction (Y) of the straddled type vehicle (1) from the cylinder unit (28) is entirely located lower than the second height position (Pz2) and higher than the third height position (Pz3) in up-down direction (Z) of the straddled type vehicle (1).

3. The straddled type vehicle (1) according to claim 1 or 2, **characterized in that** a distance (D) between the right cover (53R) and the left cover (53L) in transverse direction (Y) of the straddled type vehicle (1) becomes smaller toward downward in up-down direction (Z) of the straddled type vehicle (1) from a position of the first actuator body (86) in a cross section that passes the first actuator body (86) and is perpendicular with respect to a longitudinal direction (X) of the straddled type vehicle (1).

4. The straddled type vehicle (1) according to any one of claims 1 to 3, **characterized in that** a distance (D) between the right cover (53R) and the left cover (53L) in transverse direction (Y) of the straddled type vehicle (1) becomes smaller toward rearward in longitudinal direction (X) of the straddled type vehicle (1) from a position of the first actuator body (86) in a cross section that passes the first actuator body (86) and is perpendicular with respect to an up-down direction (Z) of the straddled type vehicle (1).

5. The straddled type vehicle (1) according to any one of claims 1 to 4, **characterized in that** the right cover (53R) includes:
a first right cover (54R); and
a second right cover (55R) that is located in front of the first right cover (54R) in longitudinal direction (X) of the straddled type vehicle (1) and in the side view of the straddled type vehicle (1),
the left cover (53L) includes:
a first left cover (54L); and
a second left cover (55L) that is located in front of the first left cover (54L) in longitudinal direction (X) of the straddled type vehicle (1) and in the side view of the straddled type vehicle (1),
the first actuator body (86) overlaps the second right cover (55R) and the second left cover (55L) in the side view of the straddled type vehicle (1),
the second right cover (55R) is located more rightward than the first right cover (54R) in transverse direction (Y) of the straddled type vehicle (1), and
the second left cover (55L) is located more leftward than the first left cover (54L) in transverse direction (Y) of the straddled type vehicle (1).

6. The straddled type vehicle (1) according to claim 5, **characterized in that** the first right cover (54R) is separated from the second right cover (55R),
the first right cover (54R) is smaller than the second right cover (55R) in the side view of the straddled type vehicle (1),
the first left cover (54L) is separated from the second left cover (55L), and
the first left cover (54L) is smaller than the second left cover (55L) in the side view of the straddled type vehicle (1).

7. The straddled type vehicle (1) according to claim 5 or 6, **characterized in that** the first right cover (54R) passes a position above the first actuator body (86) in up-down direction (Z) of the straddled type vehicle (1) and in the side view of the straddled type vehicle (1) and extends from a position more forward in longitudinal direction (X) of the straddled type vehicle (1) than the first actuator body (86) to a position more rearward in longitudinal direction (X) of the straddled type vehicle (1) than the first actuator body (86),
the second right cover (55R) is located below the first right cover (54R) in up-down direction (Z) of the straddled type vehicle (1) and in the side view of the straddled type vehicle (1),
the first left cover (54L) passes a position above the first actuator body (86) in up-down direction (Z) of the straddled type vehicle (1) in the side view of the straddled type vehicle (1) and extends from a position more forward in longitudinal direction (X) of the straddled type vehicle (1) than the first actuator body (86) to a position more rearward in longitudinal direction (X) of the straddled type vehicle (1) than the first actuator body (86), and
the second left cover (55L) is located below the first left cover (54L) in up-down direction (Z) of the straddled type vehicle (1) and in the side view of the straddled type vehicle (1).

8. The straddled type vehicle (1) according to any one of claims 1 to 7, **characterized in that** the cylinder unit (28) includes:
a cylinder member (61);
a cylinder head (62) provided above the cylinder member (61) in up-down direction (Z) of the straddled type vehicle (1); and
a head cover (63) provided above the cylinder head (62) in up-down direction (Z) of the straddled type vehicle (1), and
the first actuator body (86) overlaps at least either the cylinder head (62) or the head cover (63) in the side view of the straddled type vehicle (1).

9. The straddled type vehicle (1) according to any one of claims 1 to 8, **characterized in that** the first actuator body (86) is entirely positioned at either rightward or leftward of the vehicle center plane (C) in transverse direction (Y) of the straddled type vehicle (1), and
the cylinder axis (B) is located at a position shifted from the vehicle center plane (C) toward the first actuator body (86).

10. The straddled type vehicle (1) according to any one of claims 1 to 9, **characterized by**:
a first hanger (13) that is supported by the main frame (4) and is configured to support the cylinder unit (28), wherein
the first hanger (13) includes:
an upper end (13a) that is located more forward in longitudinal direction (X) of the straddled type vehicle (1) and higher than the first actuator body (86) in up-down direction (Z) of the straddled type vehicle (1) and is connected to the main frame (4);
a lower end (13b) that is located more rearward in longitudinal direction (X) of the straddled type vehicle (1) and lower than the first actuator body (86) in up-down direction (Z) of the straddled type vehicle (1) and is connected to the cylinder unit (28); and
an arm (13c) that passes a position more rearward in longitudinal direction (X) of the straddled type vehicle (1) than the first actuator body (86) and extends from the upper end (13a) of the first hanger (13) to the lower end (13b) of the first hanger (13).

11. The straddled type vehicle (1) according to claim 10, **characterized in that** the first hanger (13) overlaps the first actuator body (86) in the plan view of the straddled type vehicle (1).

12. The straddled type vehicle (1) according to any one of claims 1 to 11, **characterized by**:
a radiator (111) that is located more forward in longitudinal direction (X) of the straddled type vehicle (1) than the cylinder unit (28); and
a first pipe (121) that is connected in communication with the radiator (111),
wherein
the first pipe (121) has a first part (121a) that overlaps the first actuator body (86) in the side view of the straddled type vehicle (1),
the first part (121a) is located more outward in transverse direction (Y) of the straddled type vehicle (1) than the first actuator body (86),
the first part (121a) is entirely located leftward of the right cover (53R) and rightward of the left cover (53L) in transverse direction (Y) of the straddled type vehicle (1), and the first part (121a) entirely overlaps the right cover (53R) and the left cover (53L) in the side view of the straddled type vehicle (1).

13. The straddled type vehicle (1) according to claim 12, **characterized by:**
a thermostat (117) that is connected in communication with the first pipe (121),
wherein
the thermostat (117) is positioned either rightward or leftward of the cylinder unit (28) in transverse direction (Y) of the straddled type vehicle (1),
the thermostat (117) is entirely located leftward of the right cover (53R) and rightward of the left cover (53L) in transverse direction (Y) of the straddled type vehicle (1), and
the thermostat (117) entirely overlaps the right cover (53R) and the left cover (53L) in the side view of the straddled type vehicle (1).

14. The straddled type vehicle (1) according to claim 13, **characterized by:**
a water pump (105) that is positioned either rightward or leftward of the cylinder unit (28) in transverse direction (Y) of the straddled type vehicle (1), wherein
the water pump (105) is entirely located leftward of the right cover (53R) and rightward of the left cover (53L) in transverse direction (Y) of the straddled type vehicle (1), and
the water pump (105) entirely overlaps the right cover (53R) and the left cover (53L) in the side view of the straddled type vehicle (1).

15. The straddled type vehicle (1) according to any one of claims 1 to 14, **characterized by:**
an air cleaner (37) that is located below the seat (31) in up-down direction (Z) of the straddled type vehicle (1) and behind the cylinder unit (28) in longitudinal direction (X) of the straddled type vehicle (1); and
a fuel tank (39) that is located below the seat (31) in up-down direction (Z) of the straddled type vehicle (1) and behind the air cleaner (37) in longitudinal direction (X) of the straddled type vehicle (1).

## Patentansprüche

1. Ein Spreiz-Sitz-Typ-Fahrzeug (1), das umfasst:
ein Kopfrohr (3), das eine Mittelachse (A) hat, die auf einer Fahrzeugmittelebene (C) senkrecht zu einer Querrichtung (Y) des Spreiz-Sitz-Typ-Fahrzeugs (1) angeordnet ist;
einen Hauptrahmen (4), der mit dem Kopfrohr (3) verbunden ist und sich nach hinten in Längsrichtung (X) des Spreiz-Sitz-Typ-Fahrzeugs (1) von dem Kopfrohr (3) in der Fahrzeugmittelebene (C) in der Draufsicht auf das Spreiz-Sitz-Typ-Fahrzeug (1) erstreckt;
eine Lenkvorrichtung (21), die durch das Kopfrohr (3) gelagert ist;
ein Vorderrad (25), das durch die Lenkvorrichtung (21) gelagert ist;
einen Motor (27), der durch den Hauptrahmen (4) gelagert ist;
einen Sitz (31), der weiter hinten in Längsrichtung (X) des Spreiz-Sitz-Typ-Fahrzeugs (1) als der Hauptrahmen (4) angeordnet ist;
eine Zentralabdeckung (51), die oberhalb des Hauptrahmens (4) in Auf-Ab-Richtung (Z) des Spreiz-Sitz-Typ-Fahrzeugs (1) angeordnet ist und sich bis zum Sitz (31) erstreckt;
einen Fußbügel (34), der niedriger als der Sitz (31) angeordnet ist und sich in eine Position weiter rechts als der Sitz (31) und in eine Position weiter links als der Sitz (31) erstreckt;
eine rechte Abdeckung (53R), die sich rechts vom Hauptrahmen (4) befindet; und
eine linke Abdeckung (53L), die sich links vom Hauptrahmen (4) befindet,
der Sitz (31) und die Zentralabdeckung (51) bilden einen vertieften Raum (E) vor dem Sitz (31) in Längsrichtung (X) des Spreiz-Sitz-Typ-Fahrzeugs (1) und über der Zentralabdeckung (51) in Auf-Ab-Richtung (Z) des Spreiz-Sitz-Typ-Fahrzeugs (1), der Motor (27) enthält:
eine Zylindereinheit (28);
die Zylindereinheit (28) bildet eine Zylinderbohrung (K) und einen ersten Durchgang (Mi) innerhalb der Zylindereinheit (28),
die Zylinderbohrung (K) zentriert auf einer Zylinderachse (B),
die Zylinderachse (B) tritt durch eine Position oberhalb des Vorderrads (25) in Auf-Ab-Richtung (Z) des Spreiz-Sitz-Typ-Fahrzeugs (1) hindurch, ohne das Vorderrad (25) in der Seitenansicht des Spreiz-Sitz-Typ-Fahrzeugs (1) zu überlappen,
ein erstes Ventil (65), das innerhalb der Zylindereinheit (28) angeordnet ist; und
einen variablen Ventilbetätigungsmechanismus (71), der so konfiguriert ist, dass er das erste Ventil (65) antreibt,
der erste Durchgang (Mi) steht mit der Zylinderbohrung (K) in Verbindung und ist konfiguriert, um mit dem ersten Ventil (65) zu öffnen und zu schließen,
der variable Ventilbetätigungsmechanismus (71) enthält:
einen ersten Aktuator (85), der konfiguriert ist, um Öffnungs- und Schließbedingungen des ersten Ventils (65) zu ändern,
der erste Aktuator (85) enthält:
einen ersten Aktuatorkörper (86), der an der Zylindereinheit (28) angebracht ist und konfiguriert ist, um Leistung zum Ändern der Öffnungs- und Schließbedingungen des ersten Ventils (65) zu erzeugen,
der erste Aktuatorkörper (86) erstreckt sich entweder nach rechts oder nach links von der Zylindereinheit (28) in Querrichtung (Y) des Spreiz-Sitz-Typ-Fahrzeugs (1),
der erste Aktuatorkörper (86) ist vollständig links von der rechten Abdeckung (53R) und rechts von der linken Abdeckung (53L) in Querrichtung (Y) des Spreiz-Sitz-Typ-Fahrzeugs (1) angeordnet, vollständig höher als der Fußbügel (34) und vollständig niedriger als der Sitz (31) angeordnet, und
der erste Aktuatorkörper (86) überlappt die rechte Abdeckung (53R) und die linke Abdeckung (53L) in der Seitenansicht des Spreiz-Sitz-Typ-Fahrzeugs (1) vollständig,
**dadurch gekennzeichnet, dass**
die Zylindereinheit (28) unterhalb des Hauptrahmens (4) in Auf-Ab-Richtung (Z) des Spreiz-Sitz-Typ-Fahrzeugs (1) angeordnet ist;
zumindest ein Teil des ersten Aktuatorkörpers (86) entweder rechts oder links von dem Hauptrahmen (4) in Querrichtung (Y) des Spreiz-Sitz-Typ-Fahrzeugs (1) und in der Draufsicht des Spreiz-Sitz-Typ-Fahrzeugs (1) angeordnet ist, wobei
der erste Aktuatorkörper (86) vollständig weiter vorne als der Sitz (31) angeordnet ist, und der Aktuatorkörper (86) vollständig weiter vorne als der Fußbügel (34) angeordnet ist.

2. Das Spreiz-Sitz-Typ-Fahrzeugs (1) gemäß Anspruch 1, **dadurch gekennzeichnet, dass** der Sitz (31) enthält:
ein erstes Sitzteil (32), das für einen in Fahrer (F) des Spreiz-Sitz-Typ-Fahrzeugs (1) konfiguriert ist, um darauf zu sitzen, und wobei
unter der Annahme, dass eine Höhenposition eines Mittelpunkts in Auf-Ab-Richtung (Z) des Spreiz-Sitz-Typ-Fahrzeugs (1) zwischen einer Höhenposition (PzA) des ersten Sitzteils (32) und einer Höhenposition (PzB) des Fußbügels (34) eine erste Höhenposition (Pz1) ist,
dass eine Höhenposition eines Mittelpunkts in Auf-Ab-Richtung (Z) des Spreiz-Sitz-Typ-Fahrzeugs (1) zwischen der Höhenposition (PzA) des ersten Sitzteils (32) und der ersten Höhenposition (Pz1) eine zweite Höhenposition (Pz2) ist, und
dass eine Höhenposition eines Mittelpunkts in Auf-Ab-Richtung (Z) des Spreiz-Sitz-Typ-Fahrzeugs (1) zwischen der ersten Höhenposition (Pz1) und der Höhenposition (PzB) des Fußbügels (34) eine dritte Höhenposition (Pz3) ist,
der erste Aktuatorkörper (86), der sich in Querrichtung (Y) des Spreiz-Sitz-Typ-Fahrzeugs (1) von der Zylindereinheit (28) aus erstreckt, in Auf-Ab-Richtung (Z) des Spreiz-Sitz-Typ-Fahrzeugs (1) vollständig niedriger als die zweite Höhenposition (Pz2) und höher als die dritte Höhenposition (Pz3) angeordnet ist.

3. Das Spreiz-Sitz-Typ-Fahrzeugs (1) gemäß Anspruch 1 oder 2, **dadurch gekennzeichnet, dass** ein Abstand (D) zwischen der rechten Abdeckung (53R) und der linken Abdeckung (53L) in Querrichtung (Y) des Spreiz-Sitz-Typ-Fahrzeugs (1) nach unten hin kleiner wird, in Auf-Ab-Richtung (Z) des Spreiz-Sitz-Typ-Fahrzeugs (1) von einer Position des ersten Aktuatorkörpers (86) in einem Querschnitt, der an dem ersten Aktuatorkörper (86) vorbeigeht und senkrecht in Bezug auf eine Längsrichtung (X) des Spreiz-Sitz-Typ-Fahrzeugs (1) ist.

4. Das Spreiz-Sitz-Typ-Fahrzeug (1) gemäß irgendeinem der Ansprüche 1 bis 3, **dadurch gekennzeichnet, dass** ein Abstand (D) zwischen der rechten Abdeckung (53R) und der linken Abdeckung (53L) in Querrichtung (Y) des Spreiz-Sitz-Typ-Fahrzeugs (1) in Längsrichtung (X) des Spreiz-Sitz-Typ-Fahrzeugs (1) nach hinten hin kleiner wird, von einer Position des ersten Aktuatorkörpers (86) in einem Querschnitt, der an dem ersten Aktuatorkörper (86) vorbeigeht und senkrecht in Bezug auf eine Auf-Ab-Richtung (Z) des Spreiz-Sitz-Typ-Fahrzeugs (1) ist.

5. Das Spreiz-Sitz-Typ-Fahrzeugs (1) gemäß irgendeinem der Ansprüche 1 bis 4, **dadurch gekennzeichnet, dass** die rechte Abdeckung (53R) enthält:
eine erste rechte Abdeckung (54R); und
eine zweite rechte Abdeckung (55R), die in Längsrichtung (X) des Spreiz-Sitz-Typ-Fahrzeugs (1) und in der Seitenansicht des Spreiz-Sitz-Typ-Fahrzeugs (1) vor der ersten rechten Abdeckung (54R) angeordnet ist,
die linke Abdeckung (53L) enthält:
eine erste linke Abdeckung (54L); und
eine zweite linke Abdeckung (55L), die in Längsrichtung (X) des Spreiz-Sitz-Typ-Fahrzeugs (1) und in der Seitenansicht des Spreiz-Sitz-Typ-Fahrzeugs (1) vor der ersten linken Abdeckung (54L) angeordnet ist,
der erste Aktuatorkörper (86) die zweite rechte Abdeckung (55R) und die zweite linke Abdeckung (55L) in der Seitenansicht des Spreiz-Sitz-Typ-Fahrzeugs (1) überlappt, die zweite rechte Abdeckung (55R) in Querrichtung (Y) des Spreiz-Sitz-Typ-Fahrzeugs (1) weiter rechts angeordnet ist als die erste rechte Abdeckung (54R), und die zweite linke Abdeckung (55L) in Querrichtung (Y) des Spreiz-Sitz-Typ-Fahrzeugs (1) weiter links angeordnet ist als die erste linke Abdeckung (54L).

6. Das Spreiz-Sitz-Typ-Fahrzeugs (1) gemäß Anspruch 5, **dadurch gekennzeichnet, dass** die erste rechte Abdeckung (54R) von der zweiten rechten Abdeckung (55R) getrennt ist,
die erste rechte Abdeckung (54R) kleiner ist als die zweite rechte Abdeckung (55R), in der Seitenansicht des Spreiz-Sitz-Typ-Fahrzeugs (1),
die erste linke Abdeckung (54L) von der zweiten linken Abdeckung (55L) getrennt ist, und
die erste linke Abdeckung (54L) kleiner ist als die zweite linke Abdeckung (55L), in der Seitenansicht des Spreiz-Sitz-Typ-Fahrzeugs (1).

7. Das Spreiz-Sitz-Typ-Fahrzeug (1) gemäß Anspruch 5 oder 6, **dadurch gekennzeichnet, dass** die erste rechte Abdeckung (54R) eine Position oberhalb des ersten Aktuatorkörpers (86) in Auf-Ab-Richtung (Z) des Spreiz-Sitz-Typ-Fahrzeugs (1) in der Seitenansicht des Spreiz-Sitz-Typ-Fahrzeugs (1) passiert und sich von einer Position, die in Längsrichtung (X) des Spreiz-Sitz-Typ-Fahrzeugs (1) weiter vorne liegt als der erste Aktuatorkörper (86), zu einer Position erstreckt, die in Längsrichtung (X) des Spreiz-Sitz-Typ-Fahrzeugs (1) weiter hinten liegt als der erste Aktuatorkörper (86),
die zweite rechte Abdeckung (55R) in Auf-Ab-Richtung (Z) des Spreiz-Sitz-Typ-Fahrzeugs (1) und in der Seitenansicht des Spreiz-Sitz-Typ-Fahrzeugs (1) unterhalb der ersten rechten Abdeckung (54R) angeordnet ist,
die erste linke Abdeckung (54L) eine Position oberhalb des ersten Aktuatorkörpers (86) in Auf-Ab-Richtung (Z) des Spreiz-Sitz-Typ-Fahrzeugs (1) in der Seitenansicht des Spreiz-Sitz-Typ-Fahrzeugs (1) passiert und sich von einer Position, die in Längsrichtung (X) des Spreiz-Sitz-Typ-Fahrzeugs (1) weiter vorne liegt als der erste Aktuatorkörper (86), zu einer Position erstreckt, die in Längsrichtung (X) des Spreiz-Sitz-Typ-Fahrzeugs (1) weiter hinten liegt als der erste Aktuatorkörper (86), und
die zweite linke Abdeckung (55L) in Auf-Ab-Richtung (Z) des Spreiz-Sitz-Typ-Fahrzeugs (1) und in der Seitenansicht des Spreiz-Sitz-Typ-Fahrzeugs (1) unterhalb der ersten linken Abdeckung (54L) angeordnet ist.

8. Das Spreiz-Sitz-Typ-Fahrzeug (1) gemäß irgendeinem der Ansprüche 1 bis 7, **dadurch gekennzeichnet, dass** die Zylindereinheit (28) enthält:
ein Zylinderelement (61);
einen Zylinderkopf (62), der oberhalb des Zylinderelements (61) in Auf-Ab-Richtung (Z) des Spreiz-Sitz-Typ-Fahrzeugs (1) vorgesehen ist; und
eine Kopfabdeckung (63), die oberhalb des Zylinderkopfes (62) in Auf-Ab-Richtung (Z) des Spreiz-Sitz-Typ-Fahrzeugs (1) vorgesehen ist, und
der erste Aktuatorkörper (86) in der Seitenansicht des Spreiz-Sitz-Typ-Fahrzeugs (1) zumindest entweder den Zylinderkopf (62) oder die Kopfabdeckung (63) überlappt.

9. Das Spreiz-Sitz-Typ-Fahrzeugs (1) gemäß irgendeinem der Ansprüche 1 bis 8, **dadurch gekennzeichnet, dass** der erste Aktuatorkörper (86) vollständig entweder rechts oder links von der Fahrzeugmittelebene (C) in Querrichtung (Y) des Spreiz-Sitz-Typ-Fahrzeugs (1) angeordnet ist, und
die Zylinderachse (B) sich in einer von der Fahrzeugmittelebene (C) in Richtung des ersten Aktuatorkörpers (86) versetzten Position befindet.

10. Das Spreiz-Sitz-Typ-Fahrzeugs (1) gemäß irgendeinem der Ansprüche 1 bis 9, **gekennzeichnet durch:**
eine erste Aufhängung (13), die von dem Hauptrahmen (4) gelagert wird und zum Lagern der Zylindereinheit (28) konfiguriert ist, wobei
die erste Aufhängung (13) enthält:
ein oberes Ende (13a), das in Längsrichtung (X) des Spreiz-Sitz-Typ-Fahrzeugs (1) weiter vorne und in Auf-Ab-Richtung (Z) des Spreiz-Sitz-Typ-Fahrzeugs (1) höher als der erste Aktuatorkörper (86) angeordnet ist, und mit dem Hauptrahmen (4) verbunden ist;
ein unteres Ende (13b), das in Längsrichtung (X) des Spreiz-Sitz-Typ-Fahrzeugs (1) weiter hinten und in Auf-Ab-Richtung (Z) des Spreiz-Sitz-Typ-Fahrzeugs (1) tiefer als der erste Aktuatorkörper (86) angeordnet ist, und mit der Zylindereinheit (28) verbunden ist; und
einen Arm (13c), der in Längsrichtung (X) des Spreiz-Sitz-Typ-Fahrzeugs (1) durch eine Position hindurchgeht, die weiter hinten liegt als der erste Aktuatorkörper (86) einnimmt und sich vom oberen Ende (13a) der ersten Aufhängung (13) zum unteren Ende (13b) der ersten Aufhängung (13) erstreckt.

11. Der Spreiz-Sitz-Typ-Fahrzeug (1) gemäß Anspruch 10, **dadurch gekennzeichnet, dass** die erste Aufhängung (13) den ersten Aktuatorkörper (86) in der Draufsicht des Spreiz-Sitz-Typ-Fahrzeugs (1) überlappt.

12. Das Spreiz-Sitz-Typ-Fahrzeugs (1) gemäß irgendeinem der Ansprüche 1 bis 11, **gekennzeichnet durch:**
einen Kühler (111), der in Längsrichtung (X) des Spreiz-Sitz-Typ-Fahrzeugs (1) weiter vorne angeordnet ist als die Zylindereinheit (28); und
ein erstes Rohr (121), in Kommunikation mit dem Kühler (111) verbunden ist,
wobei
das erste Rohr (121) einen ersten Teil (121a) hat, der den ersten Aktuatorkörper (86) in der Seitenansicht des Spreiz-Sitz-Typ-Fahrzeugs (1) überlappt,
der erste Teil (121a) in Querrichtung (Y) des Spreiz-Sitz-Typ-Fahrzeugs (1) weiter außen angeordnet ist als der erste Aktuatorkörper (86),
der erste Teil (121a) vollständig links von der rechten Abdeckung (53R) und rechts von der linken Abdeckung (53L) in Querrichtung (Y) des Spreiz-Sitz-Typ-Fahrzeugs (1) angeordnet ist, und
der erste Teil (121a) die rechte Abdeckung (53R) und die linke Abdeckung (53L) in der Seitenansicht des Spreiz-Sitz-Typ-Fahrzeugs (1) vollständig überlappt.

13. Das Spreiz-Sitz-Typ-Fahrzeugs (1) gemäß Anspruch 12, **gekennzeichnet durch:**
einen Thermostat (117), der mit dem ersten Rohr (121) in Verbindung steht, wobei der Thermostat (117) entweder rechts oder links von der Zylindereinheit (28) in Querrichtung (Y) des Spreiz-Sitz-Typ-Fahrzeugs (1) angeordnet ist,
der Thermostat (117) vollständig links von der rechten Abdeckung (53R) und rechts von der linken Abdeckung (53L) in Querrichtung (Y) des Spreiz-Sitz-Typ-Fahrzeugs (1) angeordnet ist, und
der Thermostat (117) die rechte Abdeckung (53R) und die linke Abdeckung (53L) in der Seitenansicht des Spreiz-Sitz-Typ-Fahrzeugs (1) vollständig überlappt.

14. Das Spreiz-Sitz-Typ-Fahrzeugs (1) gemäß Anspruch 13, **gekennzeichnet durch:**
eine Wasserpumpe (105), die entweder rechts oder links von der Zylindereinheit (28) in Querrichtung (Y) des Spreiz-Sitz-Typ-Fahrzeugs (1) angeordnet ist, wobei
die Wasserpumpe (105) vollständig links von der rechten Abdeckung (53R) und rechts von der linken Abdeckung (53L) in Querrichtung (Y) des Spreiz-Sitz-Typ-Fahrzeugs (1) angeordnet ist, und
die Wasserpumpe (105) die rechte Abdeckung (53R) und die linke Abdeckung (53L) in der Seitenansicht des Spreiz-Sitz-Typ-Fahrzeugs (1) vollständig überlappt.

15. Das Spreiz-Sitz-Typ-Fahrzeugs (1) gemäß irgendeinem der Ansprüche 1 bis 14, **gekennzeichnet durch:**
einen Luftfilter (37), der in Auf-Ab-Richtung (Z) des Spreiz-Sitz-Typ-Fahrzeugs (1) unterhalb des Sitzes (31) und in Längsrichtung (X) des Spreiz-Sitz-Typ-Fahrzeugs (1) hinter der Zylindereinheit (28) angeordnet ist; und
einen Kraftstofftank (39), der in Auf-Ab-Richtung (Z) des Spreiz-Sitz-Typ-Fahrzeugs (1) unterhalb des Sitzes (31) und in Längsrichtung (X) des Spreiz-Sitz-Typ-Fahrzeugs (1) hinter dem Luftfilter (37) angeordnet ist.

## Revendications

1. Véhicule de type à selle (1), comprenant :
un tube de direction (3) présentant un axe central (A) qui est positionné sur un plan central de véhicule (C) perpendiculaire par rapport à une direction transversale (Y) du véhicule de type à selle (1) ;
un cadre principal (4) qui est connecté au tube de direction (3) et s'étend vers l'arrière dans une direction longitudinale (X) du véhicule de type à selle (1) depuis le tube de direction (3) sur le plan central de véhicule (C) dans une vue en plan du véhicule de type à selle (1) ;
un dispositif de direction (21) qui est soutenu par le tube direction (3) ;
une roue avant (25) soutenu par le dispositif de direction (21) ;
un moteur (27) qui est soutenu par le cadre principal (4) ;
un siège (31) qui est situé plus en arrière dans une direction longitudinale (X) du véhicule de type à selle (1° que le cadre principal (4) ;
un capot central (51) qui est situé au-dessus du cadre principal (4) dans une direction haut-bas (Z) du véhicule de type à selle (1) et s'étend vers le siège (31) ;
un repose-pied (34) qui est situé plus bas que le siège (31) et s'étend vers une position davantage vers la droite que le siège (31) et vers une position davantage vers la gauche que le siège (31) ;
un capot droit (53R) qui est situé à la droite du cadre principal (4) ; et
un capot gauche (53L) qui est situé à la gauche du cadre principal (4),
le siège (31) et le capot central (51) formant un espace en cavité (E) devant le siège (31) dans une direction longitudinale (X) du véhicule de type à selle (1) et au-dessus du capot central (51) dans une direction haut-bas (Z) du véhicule de type à selle (1),
le moteur (27) incluant :
une unité de cylindre (28) ;
l'unité de cylindre (28) formant un alésage de cylindre (K) et un premier passage (Mi) à l'intérieur de l'unité de cylindre (28),
l'alésage de cylindre (K) se centrant sur un axe de cylindre (B),
l'axe de cylindre (B) passant par une position au-dessus de la roue avant (25) dans une direction haut-bas (Z) du véhicule de type à selle (1) sans chevaucher la roue avant (25) dans une vue latérale du véhicule de type à selle (1),
une première soupape (65) qui est située à l'intérieur de l'unité de cylindre (28) ; et
un mécanisme de fonctionnement de soupape variable (71) configuré pour entraîner la première soupape (65),
le premier passage (Mi) étant en communication avec l'alésage de cylindre (K) et configuré pour ouvrir ou fermer la première soupape (65),
le mécanisme de fonctionnement de soupape variable (71) incluant :
un premier actionneur (85) configuré pour changer des conditions d'ouverture et de fermeture de la première soupape (65),
le premier actionneur (85) incluant :
un corps de premier actionneur (86) qui est rattaché à l'unité de cylindre (28) et est configuré pour générer une puissance pour changer les conditions d'ouverture et de fermeture de la première soupape (65),
le corps de premier actionneur (86) s'étendant soit vers la droite, soit vers la gauche depuis l'unité de cylindre (28) dans une direction transversale (Y) du véhicule de type à selle (1),
le corps de premier actionneur (86) étant entièrement situé à gauche du capot droit (53R) et à droite du capot gauche (53L) dans une direction transversale (Y) du véhicule de type à selle (1), entièrement situé plus haut que le repose-pied (34) et entièrement situé plus bas que le siège (31), et
le corps de premier actionneur (86) chevauchant entièrement le capot droit (53R) et le capot gauche (53L) dans la vue latérale du véhicule de type à selle (1), **caractérisé en ce que**
l'unité de cylindre (28) est située au-dessus du cadre principal (4) dans une direction haut-bas (Z) du véhicule de type à selle (1) ;
au moins une partie du corps de premier actionneur (86) étant positionnée soit à droite, soit à gauche du cadre principal (4) dans une direction transversale (Y) du véhicule de type à selle (1) et dans la vue en plan du véhicule de type à selle (1), dans lequel
le corps de premier actionneur (86) est entièrement situé plus en avant que le siège (31), et le corps d'actionneur (86) est entièrement situé plus en avant que le repose-pied (34).

2. Le véhicule de type à selle (1) selon la revendication 1, **caractérisé en ce que** le siège (31) inclut :
une première partie d'assise (32) configurée pour qu'un conducteur (F) du véhicule de type à selle (1) s'assoit dessus, et dans lequel
selon une hypothèse qu'une position de hauteur d'un point médian dans une direction haut-bas (Z) du véhicule de type à selle (1) entre une position de hauteur (PzA) de la première partie d'assise (32) et une position de hauteur (PzB) du repose-pied (34) est une première position de hauteur (Pz1),
qu'une position de hauteur d'un point médian dans une direction haut-bas (Z) du véhicule de type à selle (1) entre une position de hauteur (PzA) de la première partie d'assise (32) et la première position de hauteur (Pz1) est une deuxième position de hauteur (Pz2), et
qu'une position de hauteur d'un point médian dans une direction haut-bas (Z) du véhicule de type à selle (1) entre une première position de hauteur (Pz1) et la position de hauteur (PzB) du repose-pied (34) est une troisième position de hauteur (Pz3),
le corps de premier actionneur (86) qui s'étend dans une direction transversale (Y) du véhicule de type à selle (1) depuis l'unité de cylindre (28) est entièrement situé plus bas que la deuxième position de hauteur (Pz2) et plus haut que la troisième position de hauteur (Pz3) dans une direction haut-bas (Z) du véhicule de type à selle (1).

3. Le véhicule de type à selle (1) selon la revendication 1 ou 2, **caractérisé en ce qu'**une distance (D) entre le capot droit (53R) et le capot gauche (53L) dans une direction transversale (Y) du véhicule de type à selle (1) devient plus petite vers le bas dans une direction haut-bas (Z) du véhicule de type à selle (1) depuis une position du corps de premier actionneur (86) dans une section transversale qui passe par le corps de premier actionneur (86) et est perpendiculaire par rapport à une direction longitudinale (X) du véhicule de type à selle (1).

4. Le véhicule de type à selle (1) selon l'une quelconque des revendications 1 à 3, **caractérisé en ce qu'**une distance (D) entre le capot droit (53R) et le capot gauche (53L) dans une direction transversale (Y) du véhicule de type à selle (1) devient plus petite vers l'arrière dans une direction longitudinale (X) du véhicule de type à selle (1) depuis une position du corps de premier actionneur (86) dans une section transversale qui passe par le corps de premier actionneur (86) et est perpendiculaire par rapport à une direction haut-bas (Z) du véhicule de type à selle (1).

5. Le véhicule de type à selle (1) selon l'une quelconque des revendications 1 à 4, **caractérisé en ce que** le capot droit (53R) inclut :
un premier capot droit (54R) ; et
un deuxième capot droit (55R) qui est situé devant le premier capot droit (54R) dans une direction longitudinale (X) du véhicule de type à selle (1) et dans la vue latérale du véhicule de type à selle (1),
le capot gauche (53L) inclut :
un premier capot gauche (54L) ; et
un deuxième capot droit (55L) qui est situé devant le premier capot droit (54L) dans une direction longitudinale (X) du véhicule de type à selle (1) et dans la vue latérale du véhicule de type à selle (1),
le corps de premier actionneur (86) chevauche le deuxième capot droit (55R) et le deuxième capot gauche (55L) dans la vue latérale du véhicule de type à selle (1),
le deuxième capot droit (55R) est situé plus à droite que le premier capot droit (54R) dans une direction transversale (Y) du véhicule de type à selle (1), et
le deuxième capot gauche (55L) est situé plus à gauche que le premier capot gauche (54L) dans une direction transversale (Y) du véhicule de type à selle (1).

6. Le véhicule de type à selle (1) selon la revendication 5, **caractérisé en ce que** le premier capot droit (54R) est séparé du deuxième capot droit (55R),
le premier capot droit (54R) est plus petit que le deuxième capot droit (55R) dans la vue latérale du véhicule de type à selle (1),
le premier capot gauche (54L) est séparé du deuxième capot gauche (55L), et
le premier capot gauche (54L) est plus petit que le deuxième capot gauche (55L) dans la vue latérale du véhicule de type à selle (1).

7. Le véhicule de type à selle (1) selon la revendication 5 ou 6, **caractérisé en ce que** le premier capot droit (54R) passe par une position au-dessus du corps de premier actionneur (86) dans une direction haut-bas (Z) du véhicule de type à selle (1) et dans la vue latérale du véhicule de type à selle (1) et s'étend depuis une position plus en avant dans une direction longitudinale (X) du véhicule de type à selle (1) que le corps de premier actionneur (86) vers une position plus en arrière dans une direction longitudinale (X) du véhicule de type à selle (1) que le corps de premier actionneur (86),
le deuxième capot droit (55R) est situé au-dessous du premier capot droit (54R) dans une direction haut-bas (Z) du véhicule de type à selle (1) et dans la vue latérale du véhicule de type à selle (1),
le premier capot gauche (54L) passe par une position au-dessus du corps de premier actionneur (86) dans une direction haut-bas (Z) du véhicule de type à selle (1) et dans la vue latérale du véhicule de type à selle (1) et s'étend depuis une position plus en avant dans une direction longitudinale (X) du véhicule de type à selle (1) que le corps de premier actionneur (86) vers une position plus en arrière dans une direction longitudinale (X) du véhicule de type à selle (1) que le corps de premier actionneur (86), et
le deuxième capot gauche (55L) est situé au-dessous du premier capot gauche (54L) dans une direction haut-bas (Z) du véhicule de type à selle (1) et dans la vue latérale du véhicule de type à selle (1).

8. Le véhicule de type à selle (1) selon l'une quelconque des revendications 1 à 7, **caractérisé en ce que** l'unité de cylindre (28) inclut :
un élément de cylindre (61) ;
une culasse (62) disposée au-dessus de l'élément de cylindre (61) dans une direction haut-bas (Z) du véhicule de type à selle (1) ; et
un capot de culasse (63) disposé au-dessus de la culasse (62) dans une direction haut-bas (Z) du véhicule de type à selle (1), et
le corps de premier actionneur (86) chevauche au moins soit la culasse (62), soit le capot de culasse (63) dans la vue latérale du véhicule de type à selle (1).

9. Le véhicule de type à selle (1) selon l'une quelconque des revendications 1 à 8, **caractérisé en ce que** le corps de premier actionneur (86) est entièrement positionné soit à droite, soit à gauche du plan central de véhicule (C) dans une direction transversale (Y) du véhicule de type à selle (1), et
l'axe de cylindre (B) est situé sur une position décalée par rapport au plan central de véhicule (C) vers le corps de premier actionneur (86).

10. Le véhicule de type à selle (1) selon l'une quelconque des revendications 1 à 9, **caractérisé par** :
un premier cintre de fixation (13) qui est soutenu par le cadre principal (4) et est configuré pour soutenir l'unité de cylindre (28), dans lequel
le premier cintre de fixation (13) inclut :
une extrémité supérieure (13a) qui est située plus en avant dans une direction longitudinale (X) du véhicule de type à selle (1) et supérieure au corps de premier actionneur (86) dans une direction haut-bas (Z) du véhicule de type à selle (1) et est connectée au cadre principal (4) ;
une extrémité inférieure (13b) qui est située plus en avant dans une direction longitudinale (X) du véhicule de type à selle (1) et inférieure au corps de premier actionneur (86) dans une direction haut-bas (Z) du véhicule de type à selle (1) et est connectée à l'unité de cylindre (28) ; et
un bras (13c) qui passe par une position plus en avant dans une direction longitudinale (X) du véhicule de type à selle (1) que le corps de premier actionneur (86) et s'étend de l'extrémité supérieure (13a) du premier cintre de fixation (13) à l'extrémité inférieure (13b) du premier cintre de fixation (13).

11. Le véhicule de type à selle (1) selon la revendication 10, **caractérisé en ce que** le premier cintre de fixation (13) chevauche le corps de premier actionneur (86) dans la vue en plan du véhicule de type à selle (1).

12. Le véhicule de type à selle (1) selon l'une quelconque des revendications 1 à 11, **caractérisé par :**
un radiateur (111) qui est situé plus en avant dans une direction longitudinale (X) du véhicule de type à selle (1) que l'unité de cylindre (28) ; et
un premier tuyau (121) qui est connecté en communication avec le radiateur (111),
dans lequel
le premier tuyau (121) présente une première partie (121a) qui chevauche le corps de premier actionneur (86) dans la vue latérale du véhicule de type à selle (1),
la première partie (121a) est située plus à l'extérieur dans une direction transversale (Y) du véhicule de type à selle (1) que le corps de premier actionneur (86),
la première partie (121a) est entièrement située à gauche du capot droit (53R) et à droite du capot gauche (53L) dans une direction transversale (Y) du véhicule de type à selle (1), et
la première partie (121a) chevauche entièrement le capot droit (53R) et le capot gauche (53L) dans la vue latérale du véhicule de type à selle (1).

13. Le véhicule de type à selle (1) selon la revendication 12, **caractérisé par :**
un thermostat (117) qui est connecté en communication avec le premier tuyau (121),
dans lequel
le thermostat (117) est positionné soit vers la droite, soit vers la gauche depuis l'unité de cylindre (28) dans une direction transversale (Y) du véhicule de type à selle (1),
le thermostat (117) est entièrement situé à gauche du capot droit (53R) et à droite du capot gauche (53L) dans une direction transversale (Y) du véhicule de type à selle (1), et
le thermostat (117) chevauche entièrement le capot droit (53R) et le capot gauche (53L) dans la vue latérale du véhicule de type à selle (1).

14. Le véhicule de type à selle (1) selon la revendication 13, **caractérisé par :**
une pompe à eau (105) qui est positionnée soit vers la droite, soit vers la gauche de l'unité de cylindre (28) dans une direction transversale (Y) du véhicule de type à selle (1), dans lequel
la pompe à eau (105) est entièrement située à gauche du capot droit (53R) et à droite du capot gauche (53L) dans une direction transversale (Y) du véhicule de type à selle (1), et
la pompe à eau (105) chevauche entièrement le capot droit (53R) et le capot gauche (53L) dans la vue latérale du véhicule de type à selle (1).

15. Le véhicule de type à selle (1) selon l'une quelconque des revendications 1 à 14, **caractérisé par :**
un filtre à air (37) qui est situé au-dessous du siège (31) dans une direction haut-bas (Z) du véhicule de type à selle (1) et derrière l'unité de cylindre (28) dans une direction longitudinale (X) du véhicule de type à selle (1) ; et
un réservoir de carburant (39) qui est situé au-dessous du siège (31) dans une direction haut-bas (Z) du véhicule de type à selle (1) et derrière le filtre à air (37) dans une direction longitudinale (X) du véhicule de type à selle (1).
